# EUROPEAN PATENT APPLICATION

(11) **EP 2 242 262 A2**
(43) Date of publication of application: **20.10.2010**
(21) Application number: 10250547.6
(22) Date of filing: 23.03.2010
(51) Int. Cl.: H04N 5/76

(54) **Data structure, recording medium, playback apparatus and method, and program**

(30) Priority: 15.04.2009 JP 2009099415
(71) Applicant: Sony Corporation, Tokyo (JP)
(72) Inventor: Uchimura, Kouichi, Tokyo (JP)
(74) Representative: Jackson, Jonathan Andrew

(57) **Abstract**

A data structure includes image data of menu buttons, which is used for two-dimensional (2D) display of the menu buttons; offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and a command for changing the 3D display mode of the menu buttons to the 2D display mode.

## Description

The present invention relates to a data structure, a recording medium, a playback apparatus and method, and a program.

Various kinds of displays having a three-dimensional (3D) image display function (hereinafter referred to as "3D display") exist. Also, various 3D display video formats (hereinafter referred to as "3D video format") exist.

As a 3D video format, there is a 3D video format using a two-dimensional (2D) image and a depth image, which is suitable to a multi-view (e.g. not less than three-view) 3D image, specifically, for example, a so called lenticular type 3D display (for example, see non-patent document obtained by visiting Philips website through HP>Home>3D Solutions>About on March 26, 2009 "http://www. business-sites.philips.com/3dsolutions/about/Index.html".

However, at present, there is no 3D display video format suitable to a 3D display of caption or menu buttons.

In view of the above situation, it is desirable to make it possible to provide a 3D video format that is suitable to the 3D display of menu buttons.

According to a first embodiment of the present invention, there is provided a data structure or a recording medium recorded with data having the data structure, the data structure including: image data of menu buttons, which is used for two-dimensional (2D) display of the image data; offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and a command for changing the 3D display mode of the menu buttons to the 2D display mode.

In the data structure or the recording medium recorded with data having the data structure according to the first embodiment of the present invention, image data of menu buttons which is used for two-dimensional (2D) display of the image data, offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data and an offset value that indicates the amount of the disparity, and a command for changing the 3D display mode of the menu buttons to the 2D display mode are included.

According to a first embodiment of the present invention, there is provided a playback apparatus that plays data having a data structure including image data of menu buttons, which is used for two-dimensional (2D) display of the image data; offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and a command for changing the 3D display mode of the menu buttons to the 2D display mode; the playback apparatus performing: reading of the image data included in the data; generating of image data in the unit of the picture of the L image and the R image from the image data in the unit of the picture based on the offset information; outputting of the image data in the unit of the picture of the L image and the R image; and outputting of the image data included in the data in accordance with the command as image data of the L image and the R image.

A playback method and a program according to the first embodiment of the present invention correspond to the playback apparatus according to the first embodiment of the present invention as described above.

In the playback apparatus and method, and the program according to the first embodiment of the present invention, data having a data structure including image data of menu buttons, which is used for two-dimensional (2D) display of the image data; offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and a command for changing the 3D display mode of the menu buttons to the 2D display mode is played as follows. That is, the image data included in the data is read. Based on the offset information, image data in the unit of the picture of the L image and the R image is generated from the image data in the unit of the picture, and the image data in the unit of the picture of the L image and the R image is output. Also, in accordance with the command, the image data included in the data is output as image data of the L image and the R image.

According to a second embodiment of the present invention, there is provided a data structure or a recording medium recorded with data having the data structure, the data structure including: image data of the image for the left-eye and the image for the right-eye of menu buttons, which is used for three-dimensional (3D) display of the menu buttons; and a command for changing the 3D display mode of the menu buttons to the 2D display mode.

In the data structure according to the second embodiment of the present invention or the data structure of data recorded in the recording medium, image data of the image for the left-eye and the image for the right-eye of menu buttons, which is used for three-dimensional (3D) display of the menu buttons; and a command for changing the 3D display mode of the menu buttons to the 2D display mode are included.

According to a second embodiment of the present invention, there is provided a playback apparatus that plays data having a data structure including image data of the image for the left-eye and the image for the right-eye of menu buttons, which is used for three-dimensional (3D) display of the menu buttons; and a command for changing the 3D display mode of the menu buttons to the 2D display mode; the playback apparatus performing: reading and outputting of the image data of the L image and the R image included in the data; and generating and outputting of the same image data of the L image and image data of the R image using at least either of the image data of the L image and the image data of the R image included in the data in accordance with the command.

A playback method and a program according to the second embodiment of the present invention correspond to the playback apparatus according to the second embodiment of the present invention as described above.

In the playback apparatus and method, and the program according to the second embodiment of the present invention, data having a data structure including image data of the image for the left-eye and the image for the right-eye of menu buttons, which is used for three-dimensional (3D) display of the menu buttons; and a command for changing the 3D display mode of the menu buttons to the 2D display mode is played as follows. That is, the image data of the L image and the R image included in the data is read and output. Also, using at least either of the image data of the L image and the image data of the R image included in the data, the same image data of the L image and image data of the R image are generated and output in accordance with the command.

According to the embodiments of the present invention, the 3D display of the menu buttons can be performed. Also, the 3D display video format suitable to the 3D display of the menu buttons can be provided.

Preferably, the present invention relates to data structure, a recording medium, a playback apparatus and method, and a program, which can provide a three-dimensional (3D) display video format suitable to 3D display of menu buttons.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a diagram illustrating a configuration example of a disk according to a first embodiment of the disk to which the present invention is applied;
Fig. 2 is a diagram illustrating a detailed configuration example of an index file;
Fig. 3 is a diagram illustrating a detailed configuration example of a movie object file;
Fig. 4 is a diagram illustrating a detailed configuration example of movie objects;
Fig. 5 is a diagram illustrating a detailed configuration example of a play list file;
Fig. 6 is a diagram illustrating a detailed configuration example of a clip information file;
Fig. 7 is a diagram illustrating a detailed configuration example of a stream file;
Figs. 8A and 8B are diagrams illustrating the extraction of PES packets;
Fig. 9 is a diagram illustrating a detailed configuration example of a PES packet;
Fig. 10 is a diagram illustrating a configuration example of a display set of caption data;
Fig. 11 is a diagram illustrating a configuration example of a display set of menu data;
Figs. 12A and 12B are diagrams illustrating configuration examples of an epoch;
Fig. 13 is a block diagram illustrating a configuration example of a playback apparatus;
Fig. 14 is a block diagram illustrating a detailed configuration example of a caption generation unit of Fig. 13;
Fig. 15 is a flowchart illustrating the playback processing performed by the playback apparatus of Fig. 13;
Fig. 16 is a flowchart illustrating the 3D graphics generation processing of Fig. 13;
Fig. 17 is a flowchart illustrating the details of the caption generation processing of Fig. 16;
Fig. 18 is a diagram illustrating an example of caption 3D-displayed on a display unit of Fig. 13;
Fig. 19 is a diagram illustrating a configuration example of a display set of caption data according to a second embodiment of the disk to which the present invention is applied;
Fig. 20 is a diagram illustrating a configuration example of a display set of menu data according to a second embodiment of the disk to which the present invention is applied;
Fig. 21 is a block diagram illustrating a configuration example of a playback apparatus;
Fig. 22 is a block diagram illustrating a detailed configuration example of a caption generation unit of Fig. 21;
Fig. 23 is a flowchart illustrating the caption generation processing performed by the playback apparatus of Fig. 21;
Fig. 24 is a diagram illustrating an example of caption 3D-displayed on a display unit 51 of Fig. 21;
Fig. 25 is a diagram illustrating a configuration example of a display set of caption data according to a third embodiment of the disk to which the present invention is applied;
Fig. 26 is a diagram illustrating a configuration example of a display set of menu data according to a third embodiment of the disk to which the present invention is applied;
Fig. 27 is a block diagram illustrating a configuration example of a playback apparatus;
Fig. 28 is a block diagram illustrating a detailed configuration example of a caption generation unit of Fig. 27;
Fig. 29 is a flowchart illustrating the caption offset change processing performed by the playback apparatus of Fig. 27;
Fig. 30 is a flowchart illustrating the details of the offset control processing performed by the playback apparatus of Fig. 27;
Figs. 31A and 31B are diagrams illustrating an example of caption 3D-displayed on a display unit of Fig. 27;
Fig. 32 is a diagram illustrating a configuration example of a display set of caption data according to a fourth embodiment of the disk to which the present invention is applied;
Fig. 33 is a diagram illustrating a configuration example of a display set of menu data according to a fourth embodiment of the disk to which the present invention is applied;
Fig. 34 is a block diagram illustrating a configuration example of a playback apparatus;
Fig. 35 is a block diagram illustrating a detailed configuration example of a caption generation unit of Fig. 34;
Fig. 36 is a flowchart illustrating the caption generation processing performed by the playback apparatus of Fig. 34;
Figs. 37A and 37B are diagrams illustrating an example of caption 3D-displayed on a display unit 51 of Fig. 34;
Fig. 38 is a diagram illustrating a configuration example of a display set of menu data according to a fifth embodiment of the disk to which the present invention is applied;
Fig. 39 is a block diagram illustrating a configuration example of a playback apparatus;
Fig. 40 is a block diagram illustrating a detailed configuration example of a menu generation unit 331 of Fig. 39;
Fig. 41 is a flowchart illustrating the menu button offset change processing performed by a menu generation unit of Fig. 40;
Fig. 42 is a flowchart illustrating the offset control processing performed by the playback apparatus of Fig. 39;
Figs. 43A and 43B are diagrams illustrating an example of menu buttons 3D-displayed on a display unit 51 of Fig. 39;
Fig. 44 is a diagram illustrating a configuration example of a display set of caption data according to a sixth embodiment of the disk to which the present invention is applied;
Fig. 45 is a diagram illustrating a configuration example of a display set of menu data according to a sixth embodiment of the disk to which the present invention is applied;
Fig. 46 is a block diagram illustrating a configuration example of a playback apparatus;
Fig. 47 is a block diagram illustrating a detailed configuration example of a caption generation unit of Fig. 46;
Fig. 48 is a flowchart illustrating the caption display change processing performed by the caption generation unit of Fig. 47;
Fig. 49 is a diagram illustrating the details of the display control processing performed by the playback apparatus of Fig. 46;
Fig. 50 is a block diagram illustrating a configuration example of a playback apparatus playing a disk according to a seventh embodiment to which the present invention is applied;
Fig. 51 is a flowchart illustrating an OSD display processing performed by a playback apparatus of Fig. 50;
Fig. 52 is a diagram illustrating a method of determining offset information;
Fig. 53 is a diagram illustrating a configuration example of an epoch of caption data according to an eighth embodiment of a disk to which the present invention is applied;
Fig. 54 is a diagram illustrating a window of caption data;
Fig. 55 is a block diagram illustrating a configuration example of a playback apparatus;
Fig. 56 is a block diagram illustrating a detailed configuration example of a caption generation unit of Fig. 55;
Fig. 57 is a diagram illustrating the transmission instruction based on a completion report by a control unit of Fig. 55;
Fig. 58 is a flowchart illustrating the playback processing performed by a playback apparatus of Fig. 55;
Fig. 59 is a flowchart illustrating the details of the 3D graphics generation processing of Fig. 58;
Fig. 60 is a flowchart illustrating the details of the caption generation processing of Fig. 59;
Fig. 61 is a flowchart illustrating the details of the right-eye caption object generation processing of Fig. 60;
Fig. 62 is a diagram illustrating a configuration example of an epoch of caption data according to a ninth embodiment of a disk to which the present invention is applied;
Fig. 63 is a block diagram illustrating a configuration example of a playback apparatus;
Fig. 64 is a block diagram illustrating a detailed configuration example of a caption generation unit of Fig. 63;
Fig. 65 is a flowchart illustrating the caption offset change processing performed by a caption generation unit of Fig. 64;
Figs. 66A and 66B are diagrams illustrating an example of caption 3D-displayed on a display unit 51 of Fig. 63;
Fig. 67 is a diagram illustrating a configuration example of an epoch of menu data according to a tenth embodiment of a disk to which the present invention is applied;
Fig. 68 is a block diagram illustrating a configuration example of a playback apparatus;
Fig. 69 is a block diagram illustrating a detailed configuration example of a menu generation unit of Fig. 68;
Fig. 70 is a flowchart illustrating the menu button caption offset change processing performed by a menu generation unit of Fig. 69;
Figs. 71A and 71B are diagrams illustrating an example of menu buttons 3D-displayed on a display unit of Fig. 68;
Fig. 72 is a diagram illustrating a configuration example of an epoch of caption data according to an eleventh embodiment of a disk to which the present invention is applied;
Fig. 73 is a block diagram illustrating a configuration example of a playback apparatus;
Fig. 74 is a block diagram illustrating a detailed configuration example of a caption generation unit of Fig. 73;
Fig. 75 is a flowchart illustrating the caption display change processing performed by a caption generation unit of Fig. 74;
Fig. 76 is a diagram illustrating another detailed configuration example of a caption generation unit of Fig. 73;
Figs. 77A and 77B are diagrams illustrating a method of generating caption data common to both eyes performed by a 2D conversion unit of Fig. 76; and
Fig. 78 is a block diagram illustrating a configuration example of a personal computer.

### <First embodiment>

### [Configuration example of a first embodiment of a disk]

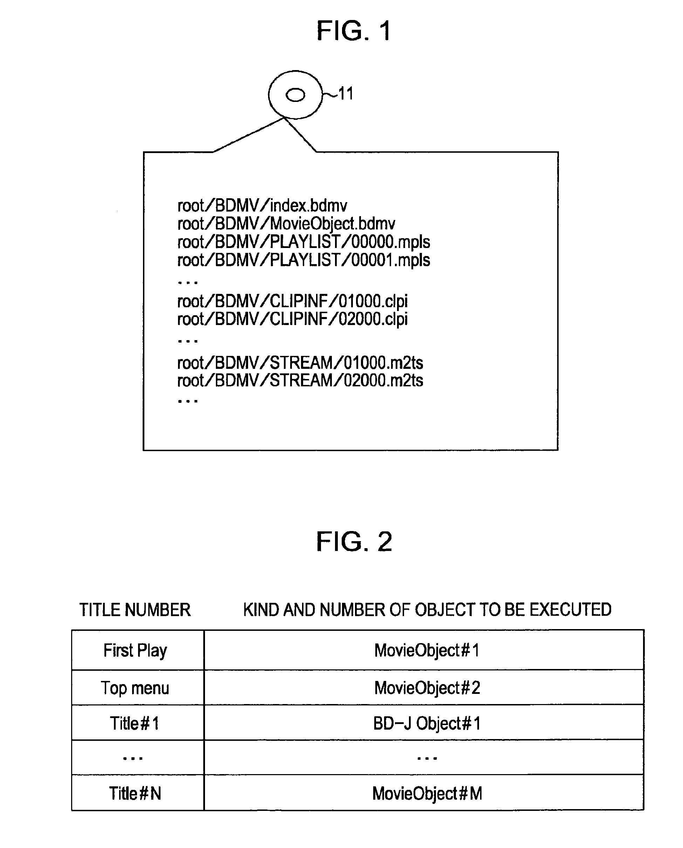

Fig. 1 is a diagram illustrating a configuration example of a disk according to a first embodiment of the disk to which the present invention is applied.

A disk 11 of Fig. 1 is composed of a BD-ROM (Blu-ray Disc-Read Only Memory) and the like, and in the disk 11, an index file index.bdmv and a movie object file movieObject.bdmv are recorded. Also, in the disk 11, a play list file PLAYLIST/XXXXX.mpls, a clip information file CLIPINF/XXXXX.clpi, a stream file STREAM/XXXXX.m2ts, and the like, are recorded. In this case, X indicates an arbitrary number from 0 to 9.

The stream file is a TS (Transport Stream) file in which video data or audio data is multiplexed based on ISO13818-2. Hereinafter, the TS is called an AV stream.

Now, detailed configurations of the respective files will be described.

### [Detailed configuration example of an index file]

Fig. 2 is a diagram illustrating a detailed configuration example of an index file.

As illustrated in Fig. 2, in the index file, for example, a list of title numbers recorded in a disk 11, and kinds and numbers of objects, which are executed corresponding to the title numbers, are described.

In this case, as the title number, not only an integer value sequentially given from 1 but also "First Play" corresponding to an object that is executed when the disk 11 is inserted into the playback apparatus is described. Also, "Top Menu" corresponding to an object that is executed when a top menu picture is displayed is described. There are two kinds of objects: a movie object and BD-J object.

As an example shown in Fig. 2, in the index file, "MovieObject#1", "MovieObject#2", and "MovieObject#M" are described corresponding to "First Play", "Top Menu", and "Title#N". Also, "BD-J Object#1" is described corresponding to "Title#1".

In this case, "MovieObject#i", and "BD-J Object#i" indicate that the kinds of objects are a movie object and a BD-J object, and the number of object is i. Also, "Title#i" indicates that the title number is i.

Since the BD-J object has no special relevance to the present invention, the description of the BD-J object will be omitted.

As described above, the index file may be called an index table.

### [Detailed configuration example of a movie object file]

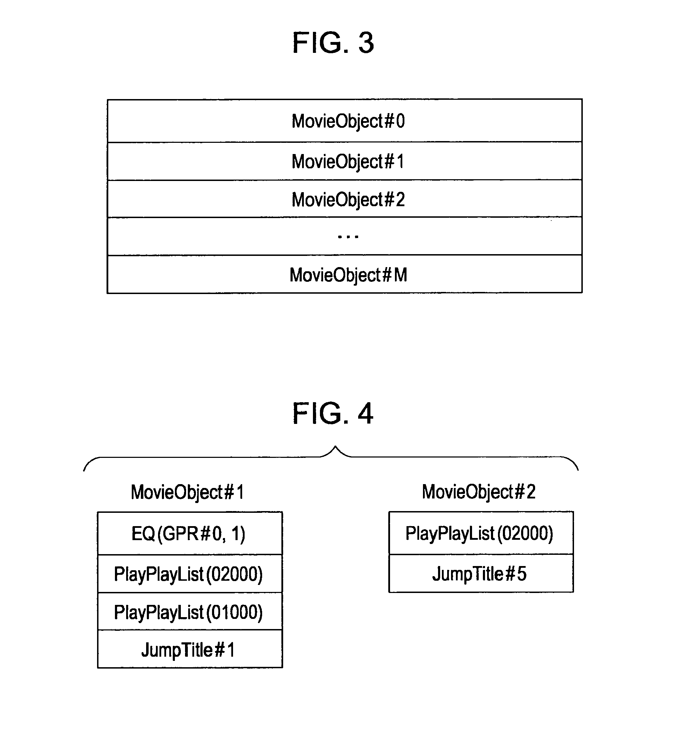

Fig. 3 is a diagram illustrating a detailed configuration example of a movie object file.

As illustrated in Fig. 3, in the movie object file, a plurality of movie objects are described. In an example of Fig. 3, in the movie object file, M movie objects to which numbers from 0 to M are given are described. In the movie objects, commands are described, respectively, and the playback apparatus for playing the disk 11 sequentially executes the commands.

Fig. 4 is a diagram illustrating a detailed configuration example of the movie objects.

In an example illustrated in Fig. 4, commands "EQ(GPR#0,1)", "PlayPlayList(02000)", "PlayPlayList(01000)" and "JumpTitle#1" are described in a movie object #1. By these commands, the playback device, if the value of GPR#0 is 1, plays the play list file PLAYLIST/02000.mpls, and in other cases, it plays the play list file PLAYLIST/O1000.mpls. Then, the playback device is shifted to "Title#1". Since in the index file, "BD-J Object#1" corresponds to "Title#1", the playback apparatus executes the "BD-J Object#1".

Also, in the example of Fig. 4, commands ""PlayPlayList(02000)" and "JumpTitle#5" are described in the movie object #2. By these commands, the playback device plays the play list file PLAYLIST/02000.mpls. Thereafter, the playback device executes an object that corresponds to the kind and the number of the object described in the index file corresponding to the title number #5.

### [Detailed configuration example of a play list file]

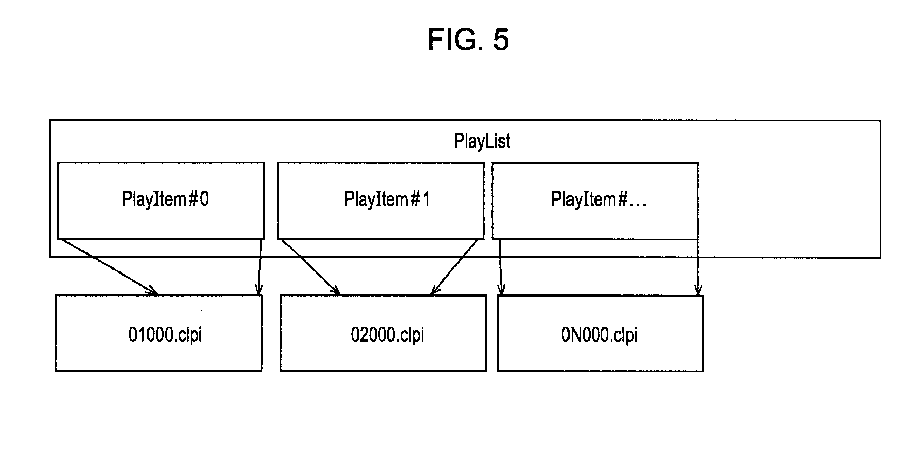

Fig. 5 is a diagram illustrating a detailed configuration example of a play list file.

The play list file is a file that is played only by the movie object or the BD-J object, and describes information on an AV stream that is played by one command described in the object.

Specifically, as illustrated in Fig. 5, the play list file is composed of a plurality of play items. In each play item, information designating the clip information file corresponding to the AV stream to be played and time information indicating a playback period of the AV stream.

### [Detailed configuration example of a clip information file]

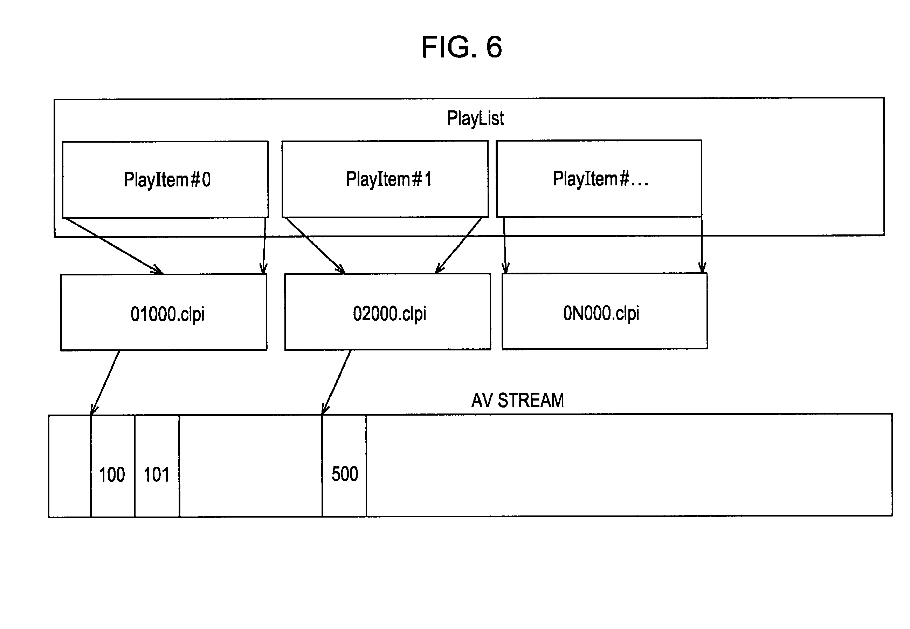

Fig. 6 is a diagram illustrating a detailed configuration example of a clip information file.

In the clip information file, time information described in the play list and a map making the packet number of an AV stream correspond to a play item in the play list. Accordingly, the playback apparatus can recognize the packet number of the AV stream to be played that corresponds to the play item by referring to the clip information file.

For example, as illustrated in Fig. 6, the playback apparatus, if it reads the 0-numbered play item PlayItem#0 in the play list, reads the clip information file 01000.clpi that is designated by the corresponding play item. Also, the playback apparatus recognizes the packet number of the playback period that corresponds to the time information described by the 0-numbered play item with reference to the clip information file 01000.clpi, and plays the AV stream corresponding to the packet number. Accordingly, the playback starts from the packet of which the packet number is 100.

Also, the playback apparatus, if it reads 1-numbered play item PlayItem#1, reads the clip information file 02000.clpi that is designated by the corresponding play item. Also, the playback apparatus recognizes the packet number of the playback period that corresponds to the time information described by the 1-numbered play item with reference to the clip information file 02000.clpi, and plays the AV stream corresponding to the packet number. Accordingly, the playback starts from the packet of which the packet number is 500.

### [Detailed configuration example of a stream file]

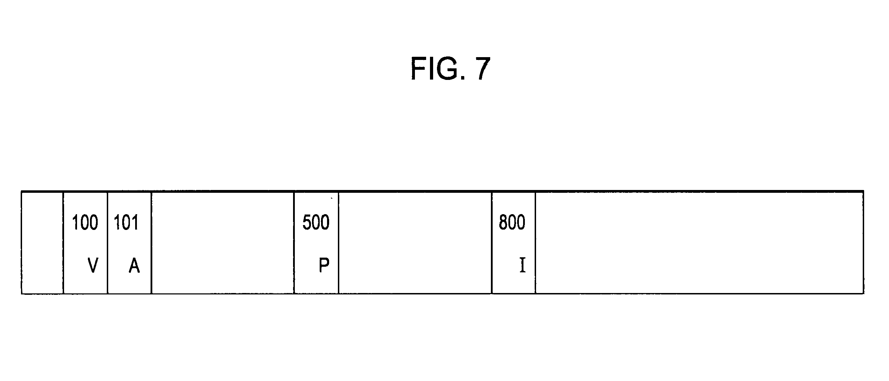

Fig. 7 is a diagram illustrating a detailed configuration example of a stream file.

As illustrated in Fig. 7, the stream file is encoded on the basis of MPEG2, MPEGE-4 AVC (Advanced Video Coding), VC1, or the like, as the AV stream, and is configured by TS packets of multiplexed video data V, audio data A, caption data P, and menu data I. In this case, the video data, caption data, and menu data are data for indicating the main image, caption, and menu buttons, respectively.

In an example of Fig. 7, the 100^{th} packet of the AV stream of the stream file is video data, the 101^{st} packet is audio data, the 500^{th} packet is caption data, and the 800^{th} packet is menu data. In this case, one packet is composed of 192-byte data.

In the case of playing the AV stream of the stream file as described above, PES (Packetized Elementary Stream) packets are extracted from the AV stream.

### [Explanation of PES packets]

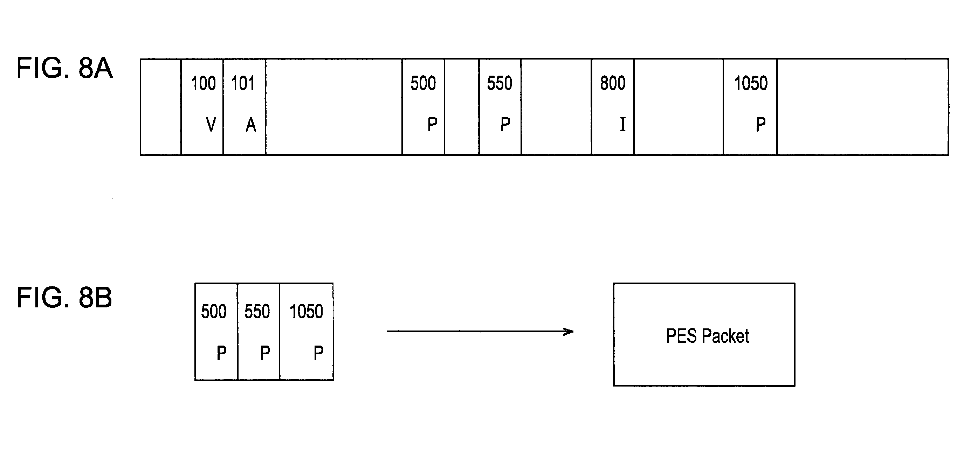

Figs. 8A and 8B are diagrams illustrating the extraction of PES packets.

The playback apparatus, in the case of playing the stream file of the AV stream as illustrated in Fig. 8A, extracts PES packets from the AV stream as illustrated in Fig. 8B.

Specifically, the 100^{th} packet of the AV stream as illustrated in Fig. 8A is video data, the 101^{st} packet is audio data, the 500^{th}, 550^{th}, and 1050^{th} packets are caption data, and the 800^{th} Packet is menu data. In this case, the playback apparatus, as illustrated in Fig. 8B, extracts PES packets including the 500^{th}, 550^{th}, and 1050^{th} packets.

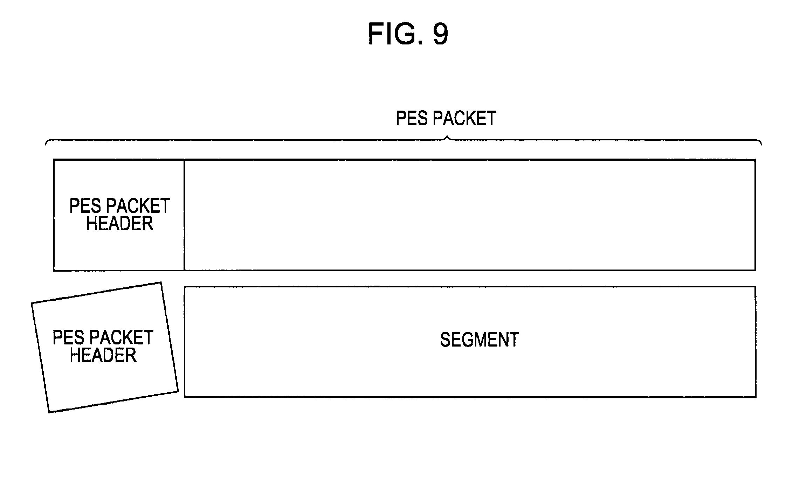

Fig. 9 is a diagram illustrating a detailed configuration example of a PES packet.

As illustrated in Fig. 9, the PES packet is composed of a PES packet header and segments. In the PES packet header, PTS (Presentation Time Stamp) indicating a display time, DTS (Decoding Time Stamp), or the like, is described.

Segments included in the PES packet of the caption data may be PCS (Presentation Composition Segment), WDS (Window Definition Segment), PDS (Palette Definition Segment), ODS (Object Definition Segment), and END (End of Display Set Segment). Also, segments included in the PES packet of the menu data may be ICS (Interactive Composition Segment), PDS, ODS, and END.

In the PCS of the caption data, an ID given to the caption corresponding to each ODS (hereinafter referred to as "sub-image ID"), offset information (the details of which will be described later) in the unit of a picture for 3D display of the caption, and the like, are described. In the WDS of the caption data, information that indicates a structure such as the position or size of a window representing the display range of caption, an ID inherent to the window (hereinafter referred to as a "window ID"), and the like, are disclosed. In the PDS of the caption data, color information that can be used as the color of the caption is described. In the ODS of the caption data, information indicating the shape of the caption is described. The END of the caption data is a segment that indicates the end of a display set (of which the details will be described later).

Hereinafter, offset information will be described.

In order to enable a user to view a 3D image, it is necessary to make one of two sheets of images, which are apart for a predetermined distance from each other in a predetermined direction, be seen to a user's left eye, and simultaneously to make the other of two sheets of images be seen to a user's right eye.

However, the video data, the caption data, and the menu data recorded in the disk 11 are data for the 2D display, and thus the playback apparatus is unable to display both of the left-eye and right-eye images. Accordingly, in order to make the 3D display of the image possible, an offset direction offset_flag that indicates the direction of disparity between the left-eye and right-eye images and an offset value offset_value that indicates the amount of disparity, for the 2D display of the image, are described as the offset information. In this case, the offset direction of the left eye is opposite to the offset direction of the right eye, and the offset value is expressed, for example, as the number of pixels.

Also, In the ICS of the menu data, menu control information such as a command that is executed by manipulating a menu button is described. Further, in the ICS, offset information in the unit of a picture for the 3D display of a menu button and button information such as an ID inherent to a menu button corresponding to each ODS (hereinafter referred to as a "button ID") are described.

In the PDS of the menu data, color information that is useable as the color of the menu button is described. In the ODS of the menu data, information that indicates the shape of the menu button is described. The END of the menu button is a segment that indicates the end of the display set.

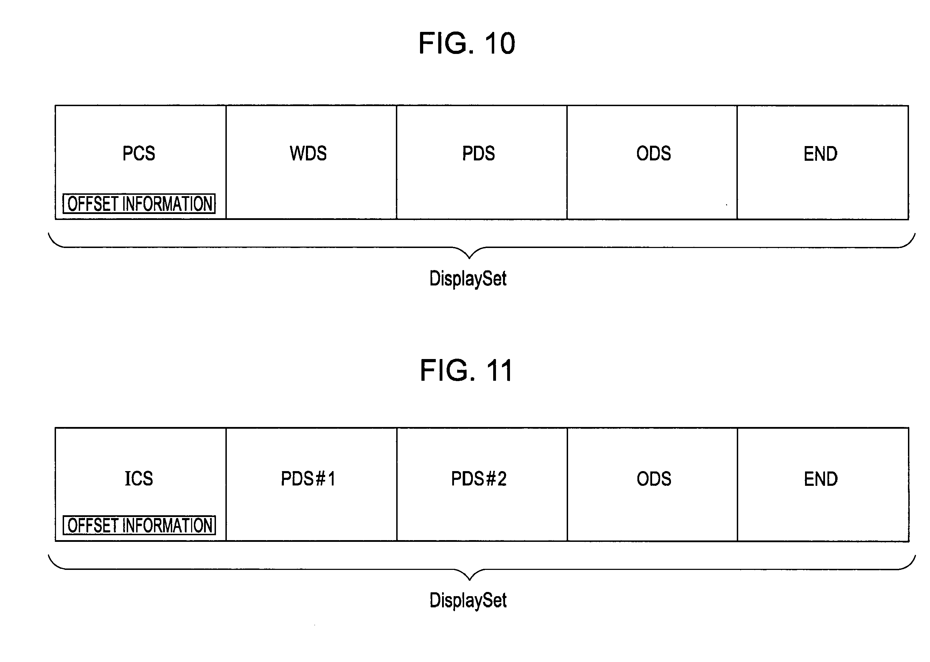

Fig. 10 a diagram illustrating a configuration example of a display set composed of segments of caption data, and Fig. 11 is a diagram illustrating a configuration example of a display set composed of segments of menu data.

As illustrated in Fig. 10, the display set of the caption data is composed of PCS, WDS, PDS, ODS, and END which correspond to the segments of the caption for one picture. In an example of Fig. 10, the display set of the caption data is composed of PCS, WDS, PDS, ODS, and END.

As illustrated in Fig. 11, the display set of the menu data is composed of ICS, PDS, ODS, and END which correspond to the segments of a menu button for one picture. In an example of Fig. 11, the display set of the menu data is composed of PCS, PDS#1, PDS#2, ODS, and END. In an example of Fig. 11, since there are two kinds of color information that can be used as colors of the menu button for one picture, two kinds of PDS are arranged in the display set.

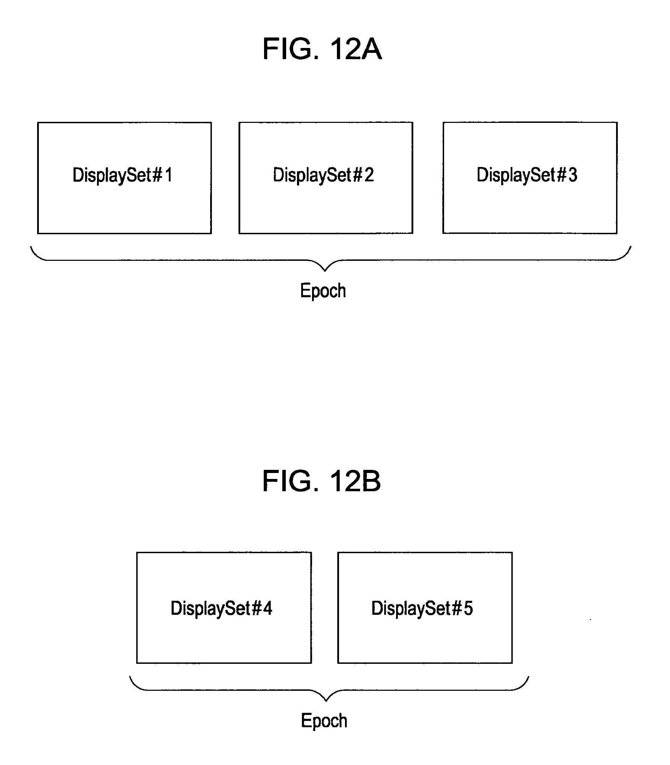

Figs. 12A and 12B are diagrams illustrating the configuration examples of an epoch composed of display sets as described above.

As illustrated in Figs. 12A and 12B, the epoch is composed of an arbitrary number of display sets. In Fig. 12A, an epoch is composed of three display sets, and in Fig. 12B, an epoch is composed of two display sets.

The playback apparatus sequentially displays captions or menu buttons that correspond to one epoch, temporarily stops the display, and then displays captions or menu buttons that correspond to the next epoch. That is, the epoch is a unit of display sets of captions or menu buttons that can be sequentially displayed.

### [Configuration example of a playback apparatus]

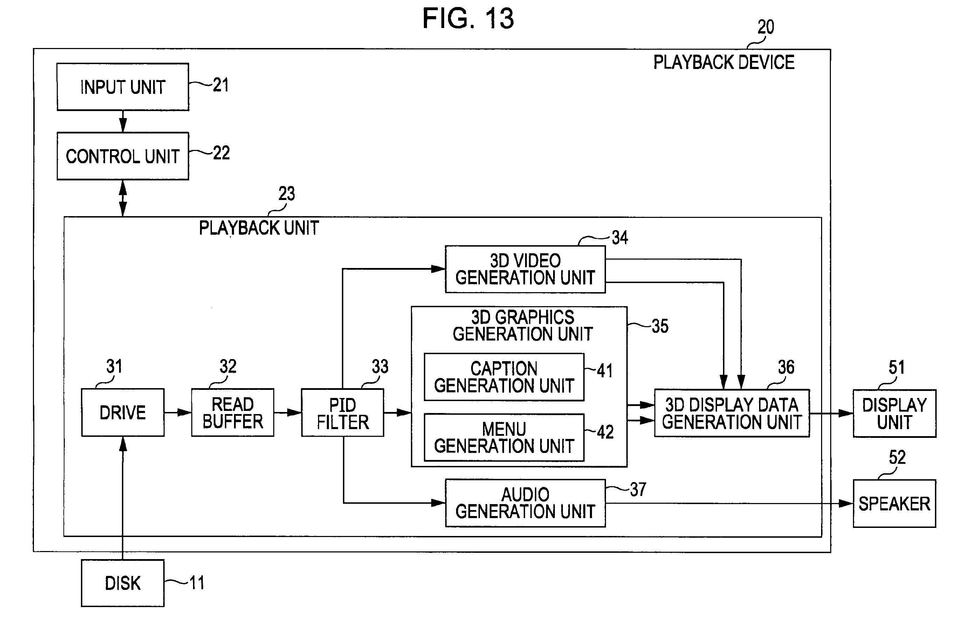

Fig. 13 is a block diagram illustrating a configuration example of a playback apparatus 20 that displays the disk 11.

The playback apparatus 20 of Fig. 13 is composed of an input unit 21, a control unit 22, and a playback unit 23.

The input unit 21 is composed of a keyboard, a mouse, and a microphone. The input unit 21 receives an instruction from a user, and supplies the instruction to the control unit 22. The control unit 22 controls the playback unit 23 in accordance with the instruction from the input unit 21.

The playback unit 23 is composed of a drive 31, a read buffer 32, a PID filter 33, a 3D video generation unit 34, a 3D graphics generation unit 35, a 3D display data generation unit 36, and an audio generation unit 37.

The drive 31, under the control of the control unit 22, drives the disk 11 mounted thereon. Accordingly, the drive 31 reads an index file, an AV stream, and the like, recorded on the disk 11. The drive 31 supplies the read index file or the like to the control unit 22. The drive 31 reads the AV stream and supplies the read AV stream to the buffer 32.

The read buffer 32, under the control of the control unit 22, maintains the AV stream supplied from the drive 31, reads and supplies the maintained AV stream to the PID filter 33.

The PID filter 33 extracts packets of video data, caption data, menu data, and audio data included in the AV stream on the basis of the packet IDs (i.e. PIDs) of the respective packets of the AV stream supplied from the read buffer 32. In this case, the PID is an inherent ID for each kind of data constituting the packet, and is added to the packet.

The PID filter 33 extracts PES packets from the extracted packets of video data, caption data, menu data, and audio data. The PID filter 33 supplies the PES packet of the video data to the 3D video generation unit 34, and supplies the PES packet of the caption data and menu data to the 3D graphics generation unit 35. Also, the PID filter 33 supplies the PES packet of the audio data to the audio generation unit 37.

The 3D video generation unit 34 generates right-eye video data and left-eye video data by using the PES packet of the video data supplied from the PID filter 33.

Specifically, the 3D video generation unit 34 decodes the PES packet of the video data, and takes the video data obtained as the result of decoding as the left-eye video data. Also, the 3D video generation unit 34 generates video data of an image obtained by making a main image that corresponds to the video data disparity for a predetermined offset value in a predetermined offset direction as the right-eye video data. Then, the 3D video generation unit 34 supplies the left-eye video data and the right-eye video data to the 3D display data generation unit 36 as the 3D video data.

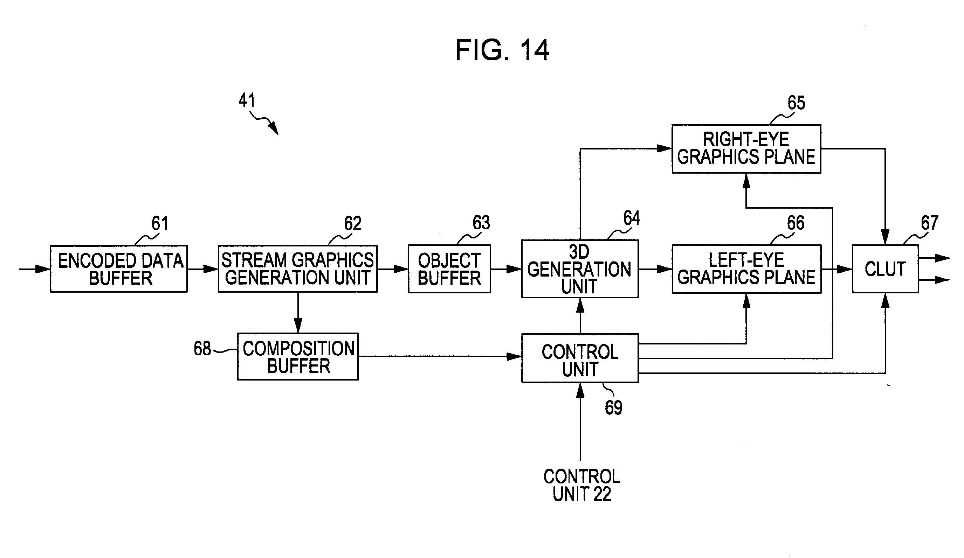

The 3D graphics generation unit 35 is composed of a caption generation unit 41 and a menu generation unit 42. The caption generation unit 41 generates right-eye caption data and left-eye caption data by using the PES packet of the caption data supplied from the PID filter 33. The caption generation unit 41 supplies the right-eye caption data and the left-eye caption data to the 3D display data generation unit 36 as the 3D caption data. The details of the caption generation unit 41 will be described later with reference to Fig. 14.

The menu generation unit 42 generates right-eye menu data and left-eye menu data by using the PES packet of the menu data supplied from the PID filter 33. Also, the menu generation unit 42 supplies the right-eye menu data and the left-eye menu data to the 3D display data generation unit 36 as the 3D menu data.

The 3D display data generation unit 36 synthesizes the 3D video data supplied from the 3D video generation unit 34, the 3D caption data and the 3D menu data supplied from the 3D graphics generation unit 35 for left-eye and right-eye data. Specifically, the 3D display data generation unit 36 generates left-eye display data by synthesizing the left-eye video data, the left-eye caption data, and the left-eye menu data. Also, the 3D display data generation unit 36 generates right-eye display data by synthesizing the right-eye video data, the right-eye caption data, and the right-eye menu data. The 3D display data generation unit 36 supplies the left-eye display data and the right-eye display data to the display unit 51 as 3D display data.

An audio generation unit 37 decodes the PES packet of the audio data supplied from the PID filter 33, and supplies the audio data obtained as the result of decoding to a speaker 52.

The display unit 51 is composed of a 3D display and the like. The display unit 51 performs an output on the basis of the 3D display data supplied from the 3D display data generation unit 36. As a result, the user can view a 3D image.

The speaker 52 outputs sound that corresponds to the audio data supplied from the audio generation unit 37.

### [Detailed configuration example of a caption generation unit]

Fig. 14 is a block diagram illustrating a detailed configuration example of the caption generation unit 41 of Fig. 13.

In Fig. 13, the caption generation unit 41 is provided with an encoded data buffer 61, a stream graphics generation unit 62, an object buffer 63, and a 3D generation unit 64. Also, the caption generation unit 41 is provided with a right-eye graphics plane 65, a left-eye graphics plane 66, a CLUT (Color Look Up Table) 67, a composition buffer 68, and a control unit 69.

The encoded data buffer 61 maintains the segments of the PES packet of the caption data supplied from the PID filter 33. The encoded data buffer 61 supplies the PDS, ICS, WDS, PCS to the stream graphics generation unit 62 on the basis of the DTS included in the PES packet header of the PES packet of the caption data. The encoded data buffer 61 supplies the PDS of the caption data supplied from the PID filter 33 directly to the stream graphics generation unit 62.

The stream graphics generation unit 62 decodes the ODS supplied from the encoded data buffer 61, and supplies the uncompressed caption data (i.e. run length data) composed of index colors obtained as the result of decoding to the object buffer 63 as the caption object. Also, the stream graphics generation unit 62 supplies the PDS, PCS, and WDS supplied from the encoded data buffer 61 to the composition buffer 68.

The object buffer 63 maintains the caption object supplied from the stream graphics generation unit 62.

The 3D generation unit 64 reads the caption object from the object butter 63 under the control of the control unit 69. The 3D generation unit 64 generates a right-eye caption object and a left-eye caption object from the caption objects that correspond to all ODS included in the same display set as that of the PCS on the basis of the offset information in the unit of a picture that is included in the PCS supplied from the control unit 69.

Specifically, the 3D generation unit 64 generates the caption objects of the caption in the unit of a picture which are obtained as the result of making the caption in the unit of a picture that corresponds to the caption object disparity for the offset value in the offset direction of the offset information as the right-eye caption object and the left-eye caption object.

Then, the 3D generation unit 64 supplies the right-eye caption object to the right-eye graphics plane 65. Also, the 3D generation unit 64 supplies the left-eye caption object to the left-eye graphics plane 66.

The right-eye graphics plane 65 maintains the right-eye caption object for one picture that is supplied from the 3D generation unit 64. The right-eye graphics plane 65, in accordance with an instruction from the control unit 69, reads and supplies the maintained right-eye caption object to the CLUT 67.

The left-eye graphics plane 66 maintains the left-eye caption object for one picture that is supplied from the 3D generation unit 64. The left-eye graphics plane 66, in accordance with an instruction from the control unit 69, reads and supplies the maintained left-eye caption object to the CLUT 67.

The CLUT 67 stores a table in which index colors correspond to Y, Cr, and Cb values on the basis of the PDS supplied from the control unit 69. The CLUT 67 converts the index colors of the right-eye caption object supplied from the right-eye graphics plane 65 into image data composed of Y, Cr, and Cb values on the basis of the stored table. The CLUT 67 also converts the left-eye caption object supplied from the left-eye graphics plane 66 into image data in the same manner. Also, the CLUT 67 outputs the image data of the right-eye caption object to the 3D display data generation unit 36 as the right-eye caption data, and outputs the image data of the left-eye caption object to the 3D display data generation unit 36 as the left-eye caption data.

The composition buffer 68 maintains the PDS, PCS, and WDS supplied from the stream graphics generation unit 62.

The control unit 69 reads the offset information in the unit of a picture that is included in the PCS supplied from the composition buffer 68, and supplies the read offset information to the 3D generation unit 64. Also, the control unit 69 instructs the right-eye graphics plane 65 to transmit the right-eye caption object to the CLUT 67 on timing based on the PTS included in the PES packet header, and simultaneously instructs the left-eye graphics plane 66 to transmit the left-eye caption object to the CLUT 67. Further, the control unit 69 reads the PDS from the composition buffer 68, and supplies the read PDS to the CLUT 67.

Also, the control unit 69 controls the respective units in accordance with the instruction from the control unit 22 (see Fig. 13).

### [Detailed configuration example of a menu generation unit]

The menu generation unit 42 is configured in the same manner as the caption generation unit 41 of Fig. 14, except that it does not process the caption data, but processes the menu data, and thus the illustration thereof will be omitted.

The encoded data buffer of the menu generation unit 42 maintains the segments of the PES packet of the menu data, and the composition buffer maintains the ICS and PDS. The stream graphics generation unit decodes the ODS of the menu data, and supplies the uncompressed menu data composed of index colors to the object buffer as the menu object to maintain the menu data.

The 3D graphics generation unit generates a right-eye menu object from the menu object supplied from the object buffer on the basis of the offset information in the unit of a picture included in the ICS of the menu data, and maintains the right-eye menu object in the right-eye graphics plane. Also, the 3D graphics generation unit generates a left-eye menu object from the menu object supplied from the object buffer, and maintains the left-eye menu object in the left-eye graphics plane. The CLUT converts the right-eye menu object into image data, and outputs the image data to the 3D display data generation unit 36 as the right-eye menu data. Also, the CLUT converts the left-eye menu object into image data, and outputs the image data to the 3D display data generation unit 36 as the left-eye menu data.

### [Explanation of processing of a playback apparatus]

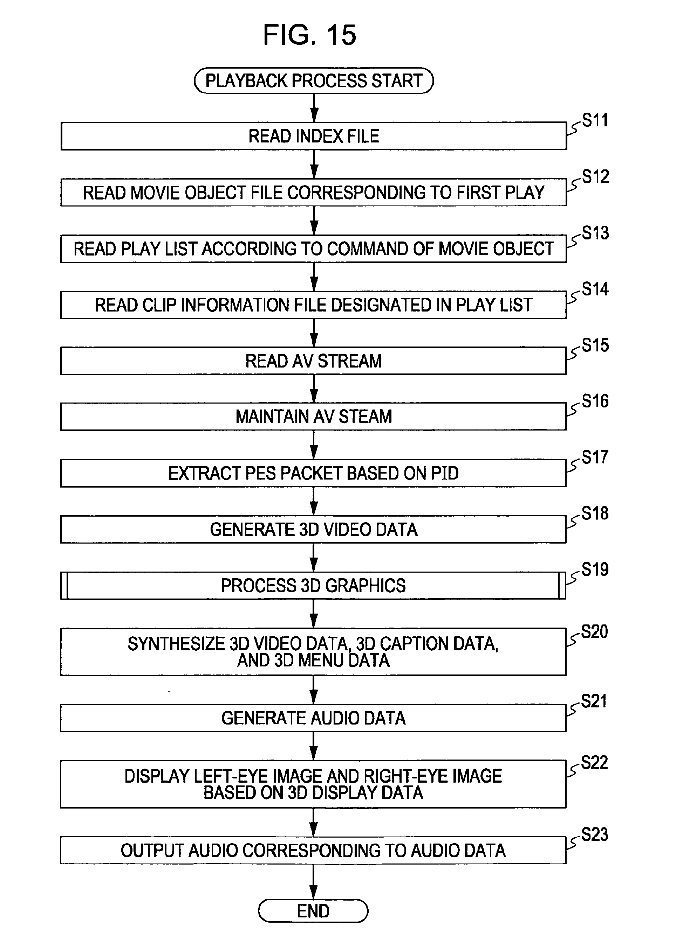

Fig. 15 is a flowchart illustrating the playback processing performed by the playback apparatus 20. The playback apparatus starts its operation, for example, when the disk 11 is mounted on the drive 31.

In step S11 of Fig. 15, the drive 31, in accordance with the instruction from the control unit 22, reads the index file from the disk 11, and supplies the read index file to the control unit 22.

In step S12, the drive 31, in accordance with the instruction from the control unit 22 on the basis of the index file, reads the movie object file that corresponds to the first play of the index file from the disk 11, and supplies the read movie object file to the control unit 22. The control unit 22 recognizes the command that is described in the movie object included in the movie object file, and instructs the drive 31 to read the play list in accordance with the command.

In step S13, the drive 31, in accordance with the instruction from the control unit 22, reads the play list according to the command of the movie object from the disk 11, and supplies the read play list to the control unit 22.

In step S14, the drive 31, in accordance with the instruction from the control unit 22, reads the clip information file designated in the play list from the disk 11, and supplies the read clip information file to the control unit 22. The control unit 22 recognizes the packet number of the AV stream to be played on the basis of the play list and the clip information file. Then, the control unit 22 instructs the drive 31 to read the AV stream that is composed of a packet having the packet number to be played.

In step S15, the drive 31, in accordance with the instruction from the control unit 22, reads the AV stream to be played from the disk 11, and supplies the read AV stream to the read buffer 32. In step S16, the read buffer 32 maintains the AV stream supplied from the drive 31. The read buffer 32 reads and supplies the maintained AV stream to the PID filter 33.

In step S17, the PID filter 33 extracts PES packets of the video data, caption data, menu data and audio data of the AV stream on the basis of the PID of the respective packets of the AV stream from the read buffer 32. Also, the PID filter 33 supplies the PES packet of the video data to the 3D video generation unit 34, and supplies the PES packets of the caption data and the menu data to the 3D graphics generation unit 35. Also, the PID filter 33 supplies the PES packets of the audio data to the audio generation unit 37.

In step S18, the 3D video generation unit 34 generates the 3D video data by using the PES packet of the video data supplied from the PID filter 33, and supplies the generated 3D video data to the 3D display data generation unit 36.

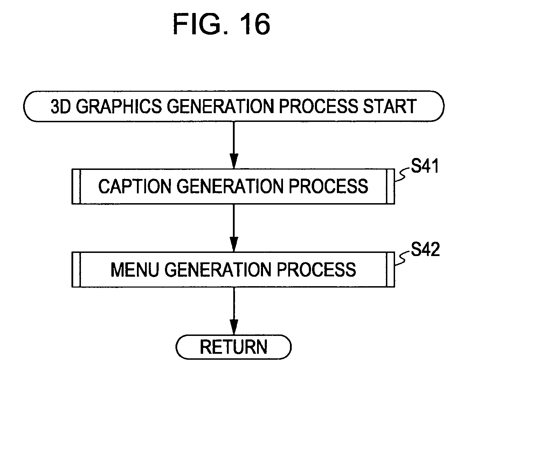

In step S19, the 3D graphics generation unit 35 performs the 3D graphics generation processing for generating the 3D caption data and the 3D menu data. The details of such 3D graphics generation processing will be described in detail with reference to Fig. 16 later.

In step S20, the 3D display data generation unit 36 synthesizes the 3D video data from the 3D video generation unit 34, the 3D caption data and the 3D menu data from the 3D graphics generation unit 35 for each left-eye and right-eye data. Then, the 3D display data generation unit 36 supplies the left-eye display data and the right-eye display data to the display unit 51 as the 3D display data.

In step S21, the audio generation unit 37 decodes the PES packet of the audio data supplied from the PID filter 33, and generates audio data. Then, the audio generation unit 37 supplies the generated audio data to the speaker 52.

In step S22, the display unit 51 alternately or simultaneously displays the left-eye image that corresponds to the left-eye display data and the right-eye image that corresponds to the right-eye display data on the basis of the 3D display data supplied from the 3D display data generation unit 36.

In step S23, the speaker 52 outputs sounds that correspond to the audio data supplied from the audio generation unit 37, and the processing is ended.

In this case, for convenience in explanation, although the outputs of the image and the audio have been described as separate steps, the image and the audio are actually output in synchronization with each other. This is performed in the same manner in the playback processing to be described later.

Also, in Fig. 15, although the playback processing just after the mounting of the disk 11 has been described, the same playback processing is performed even in the case where the title that corresponds to the movie object file in addition to the first play is played after the mounting of the disk 11. However, in this case, the movie object file read in step S12 is a movie object file that corresponds to the title number of the title to be played in the index file.

For example, if a user inputs an instruction for the display of a top menu picture by manipulating the input unit 21, the playback apparatus 20 performs the playback processing of Fig. 15 which reads the 2-numbered movie object file that corresponds to the title number "Top Menu" in step S12.

Fig. 16 is a flowchart illustrating the details of the 3D graphics generation processing in step S19 of Fig. 15.

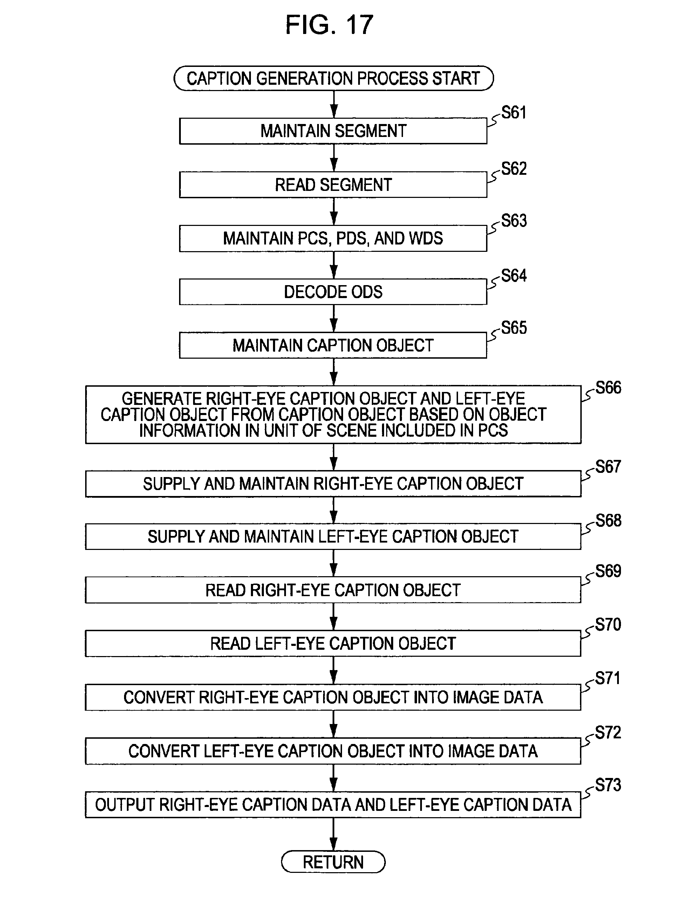

In step S41 of Fig. 16, the caption generation unit 41 performs the caption generation processing that generates the 3D caption data. The details of the caption generation processing will be described with reference to Fig. 17 to be described later.

In step S42, the menu generation unit 42 performs the menu generation processing that generates the 3D menu data, and returns the processing to step S19 of Fig. 15. Then, the processing after the step S20 is performed.

Fig. 17 is a flowchart illustrating the details of the caption generation processing in step S41 of Fig. 16.

In step S61 of Fig. 17, the encoded data buffer 61 maintains the segments of the PES packet of the caption data supplied from the PID filter 33. In step S62, the encoded data buffer 61 reads the maintained segments, and supplies the read segments to the stream graphics generation unit 62.

In step S63, the stream graphics generation unit 62 supplies the PCS, PDS, and WDS supplied from the encoded data buffer 61 to the composition buffer 68 to maintain the PCS, PDS, and WDS.

In step S64, the stream graphics generation unit 62 decodes the ODS supplied from the encoded data buffer 61, and supplies the caption object that is obtained as the result of decoding to the object buffer 63. In step S65, the object buffer 63 maintains the caption object supplied from the stream graphics generation unit 62.

In step S66, the 3D generation unit 64 generates the right-eye caption object and the left-eye caption object from the caption object that corresponds to all ODS included in the same display set as that of the PCS on the basis of the offset information in the unit of a picture included in the PCS supplied from the control unit 69. In step S67, the 3D generation unit 64 supplies the right-eye caption object to the right-eye graphics plane 65 to maintain the right-eye caption object.

In step S68, the 3D generation unit 64 supplies the left-eye caption object to the left-eye graphics plane 66 to maintain the left-eye caption object.

In step S69, the right-eye graphics plane 65 reads the maintained right-eye caption object in accordance with the instruction from the control unit 69, and supplies the read right-eye caption object to the CLUT 67. In step S70, the left-eye graphics plane 66 reads the maintained left-eye caption object in accordance with the instruction from the control unit 69, and supplies the read left-eye caption object to the CLUT 67.

In step S71, the CLUT 67 converts the index colors of the right-eye caption object supplied from the right-eye graphics plane 65 into image data composed of Y, Cr, and Cb values on the basis of the stored table.

In step S72, the CLUT 67 converts the index colors of the left-eye caption object supplied from the left-eye graphics plane 66 into image data composed of Y, Cr, and Cb values on the basis of the stored table.

In step S73, the CLUT 67 outputs the image data of the right-eye caption object to the 3D display data generation unit 36 as the right-eye caption data, and outputs the image data of the left-eye caption object to the 3D display data generation unit 36 as the left-eye caption data. Then, the processing returns to step S41 of Fig. 16, and then proceeds to step S42.

In this case, the menu generation processing in step S42 of Fig. 16 is the same as the caption generation processing in Fig. 17 except that the object to be processed is not the caption data, but is the menu data, and the description thereof will be omitted.

### [3D display example of a caption]

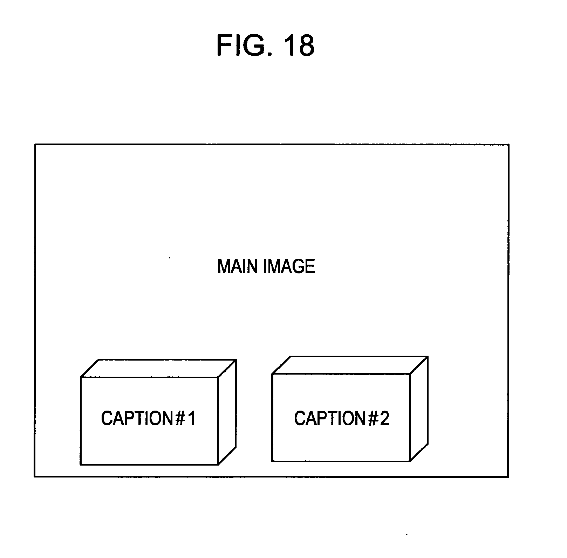

Fig. 18 is a diagram illustrating an example of a caption 3D-displayed on the display unit 51 of the playback apparatus 20.

The playback apparatus 20 generates the caption object obtained as the result of making the caption in the unit of a picture that corresponds to all ODS included in the same display set as that of the PCS disparity on the basis of the offset information in the unit of a picture included in the PCS as the right-eye caption object.

Accordingly, as shown in Fig. 18, caption #1 and caption #2 as the 3D images displayed on a screen 1 have the same length in the same depth direction. In this case, the depth direction is a direction that is perpendicular to the display surface of the display unit 51. On the assumption that the direction pointing to the front side of the display surface is defined as the forward direction and the direction pointing to the rear side of the display surface is defined as the negative direction, if the position of the depth direction of the caption is positive, the caption appears to project, while if the position of the depth direction of the caption is negative, the caption appears to be recessed. The caption #i denotes the i-th caption displayed on the screen 1.

As described above, in the disk 11, the caption data and the menu data are recorded simultaneously with the offset information in the unit of a picture. Accordingly, the playback apparatus 20 generates the 3D caption data from the caption data on the basis of the offset information in the unit of a picture, and generates the 3D menu data from the menu data, so that the caption or the menu button can be three-dimensionally displayed.

### <Second embodiment>

### [Configuration example of a display set according to a second embodiment of the disk]

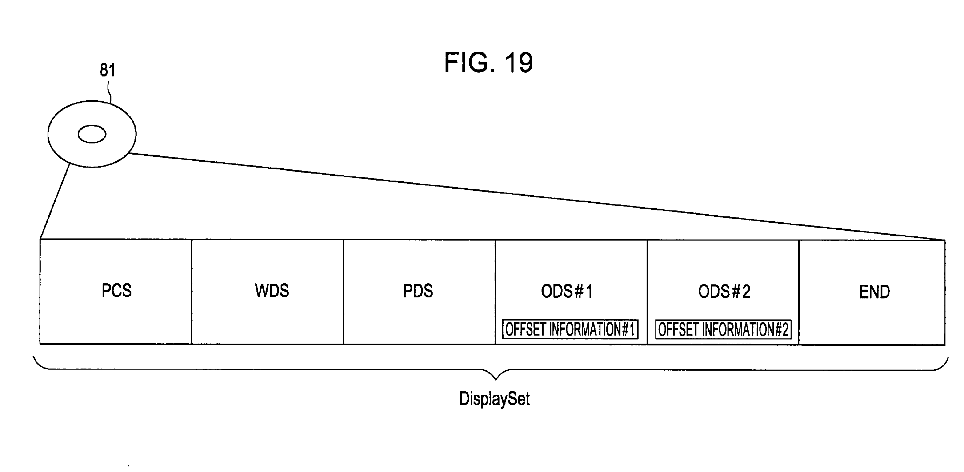

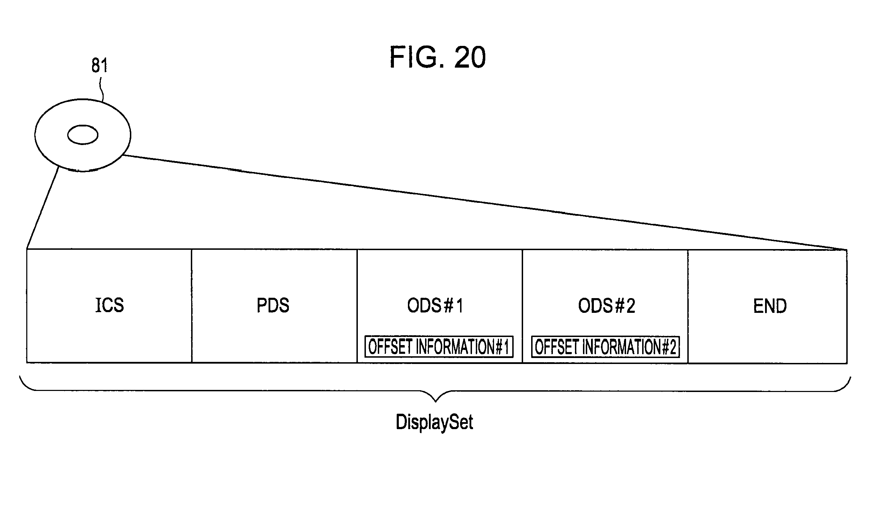

Fig. 19 is a diagram illustrating a configuration example of a display set of caption data according to a second embodiment of the disk to which the present invention is applied, and Fig. 20 is a diagram illustrating a configuration example of a display set of menu data.

As illustrated in Fig. 19, according to the disk 81, unlike the disk 11, offset information in the unit of an ODS rather than the PCS is described in the ODS. Accordingly, the offset information can be set for each caption.

The display set of Fig. 19 is an example of a display set for displaying two captions in one screen, and two ODSs of ODS#1 and ODS#2 are arranged on the display set. In ODS#1 and ODS#2, offset information #1 and offset information #2 in the unit of an ODS are described.

Also, as illustrated in Fig. 20, according to the disk 81, unlike the disk 11, offset information in the unit of an ODS rather than the ICS is described in the ODS. Accordingly, the offset information can be set for each menu button.

The display set of Fig. 20 is a display set for displaying menu buttons 2 in one screen, and two ODSs of ODS#1 and ODS#2 are arranged on the display set. In ODS#1 and ODS#2, offset information #1 and offset information #2 in the unit of an ODS are described.

### [Detailed configuration example of a playback apparatus]

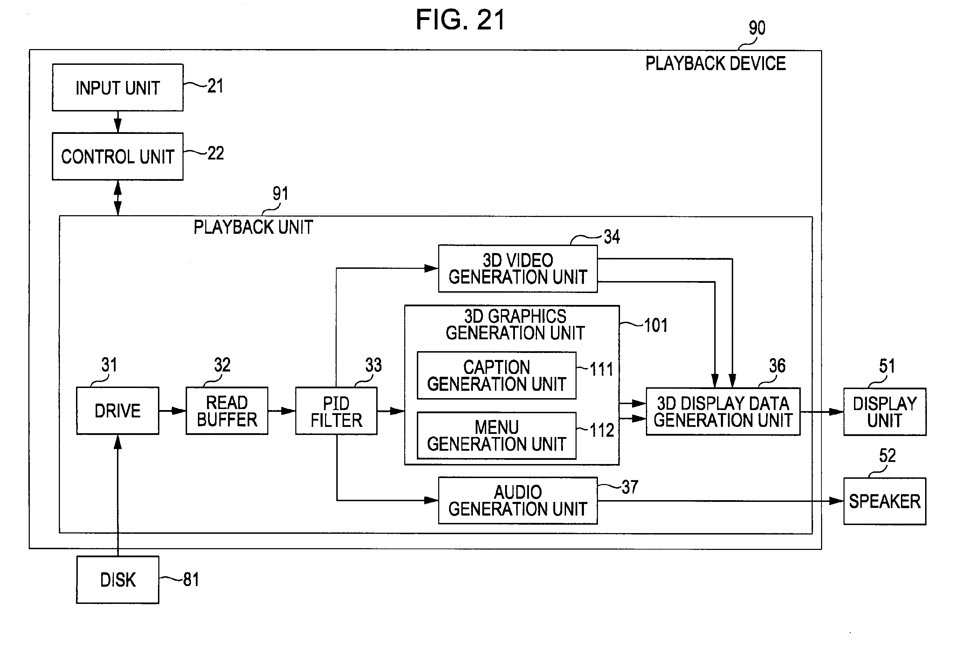

Fig. 21 is a block diagram illustrating a configuration example of a playback apparatus 90 that plays the disk 81.

The configurations as illustrated in Fig. 21, which are the same as the configurations of Fig. 13 are allocated with the same reference numerals, and the duplicate description thereof will be appropriately omitted.

The configurations of the playback apparatus 90 in Fig. 21 are different from the configurations of Fig. 13 on the point that a playback unit 91 is installed instead of the playback unit 23. The configuration of the playback unit 91 is different from the configuration of Fig. 13 on the point that a 3D graphics generation unit 101 is installed instead of the 3D graphics generation unit 35.

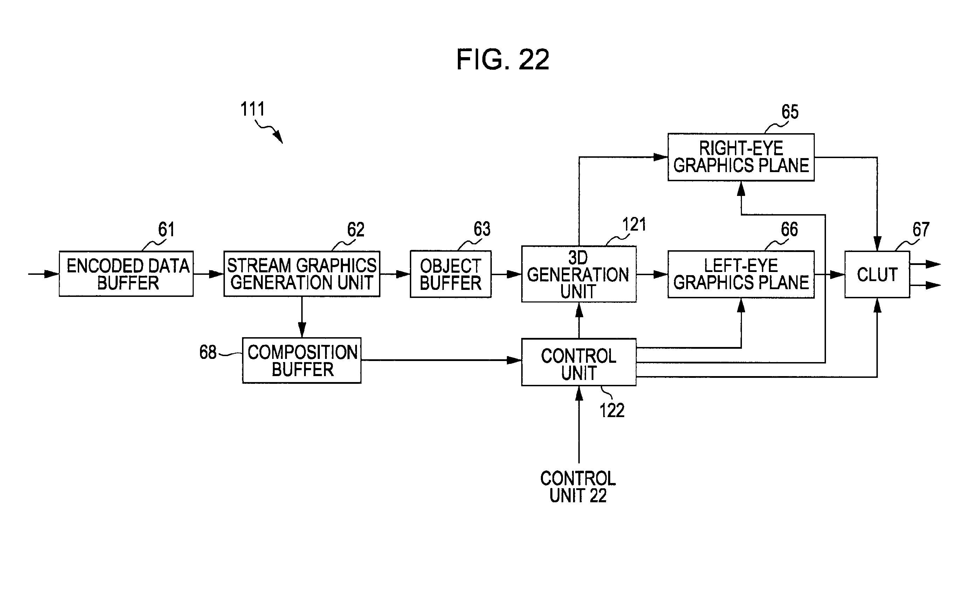

The 3D graphics generation unit 101 is composed of a caption generation unit 111 and a menu generation unit 112. The caption generation unit 111 generates the right-eye caption data and the left-eye caption data on the basis of the offset information in the unit of an ODS by using the PES packet of the caption data that is supplied from the PID filter 33. Also, the caption generation unit 111 supplies the right-eye caption data and the left-eye caption data to the 3D display data generation unit 36 as the 3D caption data. The details of the caption generation unit 111 will be described later with reference to Fig. 22.

The menu generation unit 112 generates the right-eye menu data and the left-eye menu data on the basis of the offset information in the unit of an ODS by using the PES packet of the menu data that is supplied from the PID filter 33. Also, the menu generation unit 112 supplies the right-eye menu data and the left-eye menu data to the 3D display data generation unit 36 as the 3D menu data.

### [Detailed configuration example of a caption generation unit]

Fig. 22 is a block diagram illustrating a detailed configuration example of a caption generation unit 111 of the playback apparatus 90.

The configurations as illustrated in Fig. 22, which are the same as the configurations of Fig. 14, are allocated with the same reference numerals, and the duplicate description thereof will be appropriately omitted.

The configurations of the caption generation unit 111 in Fig. 22 are different from the configurations of Fig. 14 on the point that a 3D generation unit 121 is installed instead of the 3D generation unit 64, and a control unit 122 is installed instead of the control unit 69.

The 3D generation unit 121, in the same manner as the 3D generation unit 64, reads the caption object from the object buffer 63 under the control of the control unit 122. The 3D generation unit 121 generates the right-eye caption object from the caption object that corresponds to the ODS on the basis of the offset information in the unit of an ODS included in the respective ODS supplied from the control unit 122.

Specifically, the 3D generation unit 121 generates the caption objects in the unit of a picture obtained as the result of making the captions in the picture that correspond to the caption objects disparity for the offset value in the offset direction of the offset information in the unit of an ODS that corresponds to the caption as the right-eye caption object and the left-eye caption object.

The 3D generation unit 121 supplies the right-eye caption object to the right-eye graphics plane 65, and supplies the left-eye caption object to the left-eye graphics planes 66.

The control unit 122 reads the offset information in the unit of an ODS included in the respective ODS supplied from the composition buffer 68, and supplies the read offset information to the 3D generation unit 121. Also, the control unit 122, in the same manner as the control unit 69, instructs the right-eye graphics plane 65 to transmit the right-eye caption object on timing based on the PTS included in the PES packet header, and simultaneously instructs the left-eye graphics plane 66 to transmit the left-eye caption object. Further, the control unit 122, in the same manner as the control unit 69, reads the PDS from the composition buffer 68, and supplies the read PDS to the CLUT 67.

Also, the control unit 122, in the same manner as the control unit 69, controls the respective units in accordance with the instruction from the control unit 22 (see Fig. 21).

### [Detailed configuration example of a menu generation unit]

The menu generation unit 112 is configured in the same manner as the caption generation unit 111 of Fig. 22, except that the object to be processed is not the caption data, but is the menu data, and thus the illustration thereof will be omitted.

### [Explanation of processing of a playback apparatus]

The playback processing performed by the playback apparatus 90 and the 3D graphics generation processing are the same as the playback processing illustrated in Fig. 15 and the 3D graphics generation processing illustrated in Fig. 16, respectively, and thus the explanation thereof will be omitted.

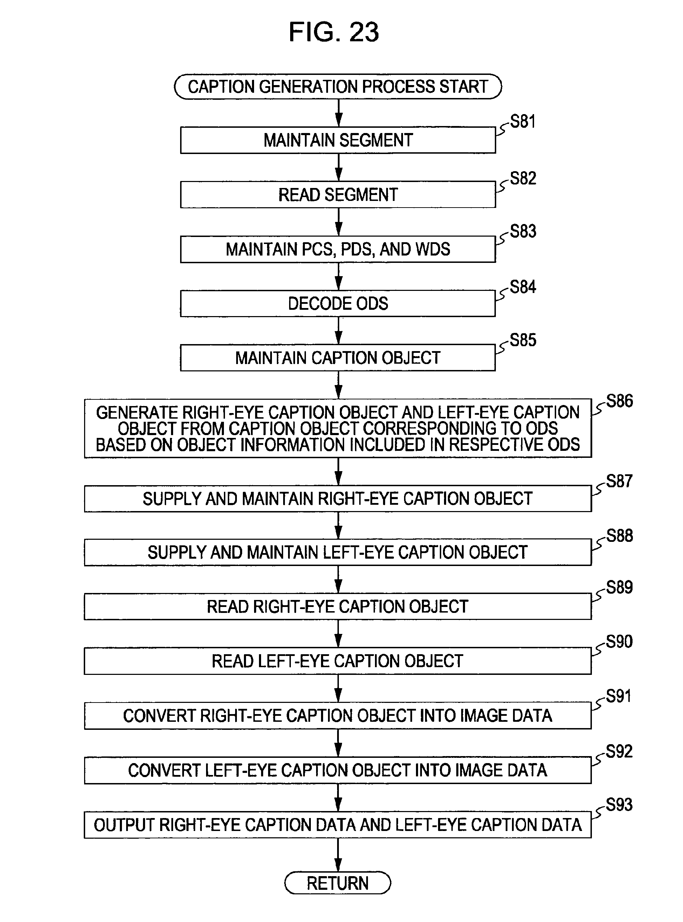

Fig. 23 is a flowchart illustrating the details of the caption generation processing in step S41 of Fig. 16, which is performed by the playback apparatus 90.

The processing in steps S81 to S85 of Fig. 23 is the same as the processing in steps S61 to S65 of Fig. 17, and thus the explanation thereof will be omitted.

In step S86, the 3D generation unit 121 generates the right-eye caption object and the left-eye caption object from the caption object that corresponds to the ODS on the basis of the offset information included in the respective ODS supplied from the control unit 122. Then, the processing proceeds to step S87.

The processing in steps S87 to S93 is the same as the processing in steps S67 to S73 of Fig. 17, and thus the explanation thereof will be omitted.

Also, the menu generation processing in step S42 of Fig. 16 performed by the playback apparatus 90 is the same as the caption generation processing illustrated in Fig. 23 except that the object to be processed is not the caption data, but is the menu data, and thus the explanation thereof will be omitted.

### [3D display example of a caption]

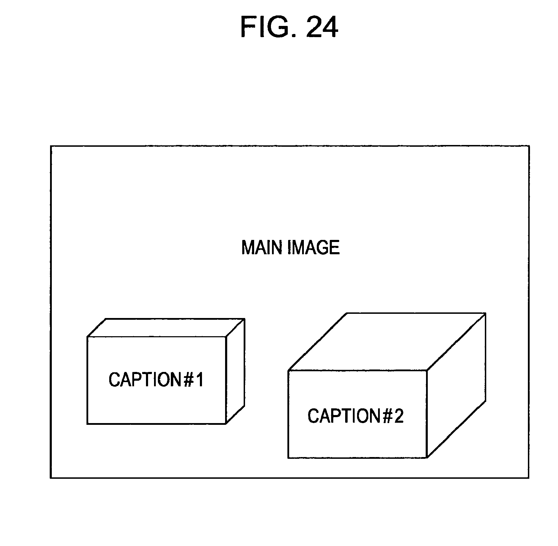

Fig. 24 is a diagram illustrating an example of a caption that is 3D-displayed on the display unit 51 of the playback apparatus 90.

The playback apparatus 90 generates the caption object of the caption obtained as the result of making the caption that corresponds to the ODS disparity on the basis of the offset information in the unit of an ODS included in the respective ODS as the right-eye caption object.

Accordingly, as shown in Fig. 24, the positions in the depth direction of caption #1 and caption #2 as the 3D images displayed on a screen 1 may be set to be different from each other. Also, in an example of Fig. 24, the signs (i.e. positive and negative signs) of the positions in the depth direction of the caption #1 and the caption #2 are the same. That is, both the caption #1 and the caption #2 appear to project, but they may be set to be different from each other.

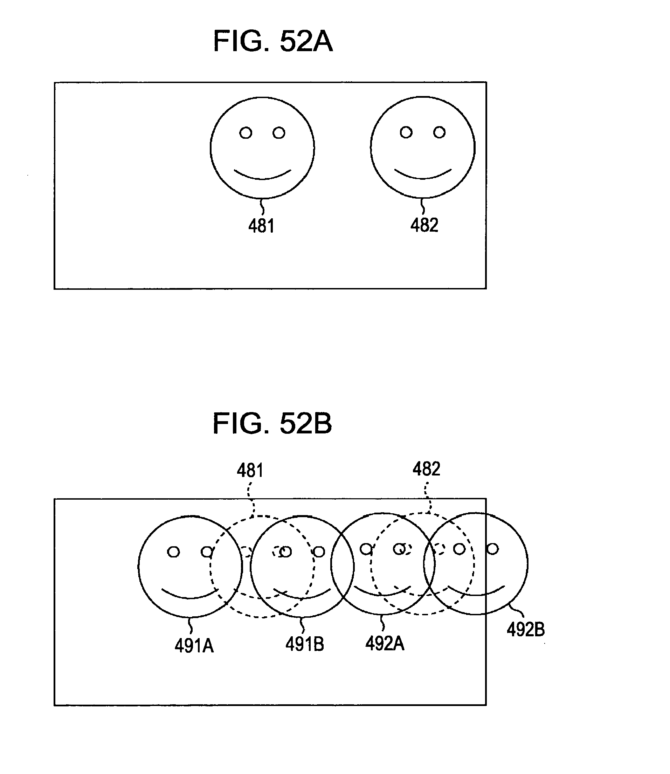

Further, as an additional condition as illustrated in Fig. 52, the right-eye caption image or menu image should not project from the plane (i.e. screen). Also, in the case where a plurality of menu buttons exist in a screen 1 and offset information is set for each menu button, i.e. offset information is described in the unit of an ODS, the right-eye image and the left-eye image of a certain menu button should not overlap the right-eye image and the left-eye image of another menu button, respectively.

As described above, in the disk 81, the caption data and the menu data are recorded simultaneously with the offset information in the unit of an OSD. Accordingly, the playback apparatus 90 generates the 3D caption data from the caption data on the basis of the offset information in the unit of an ODS, and generates the 3D menu data from the menu data, so that the caption or the menu button can be three-dimensionally displayed.

### <Third embodiment>

### [Configuration example of a display set according to a third embodiment of the disk]

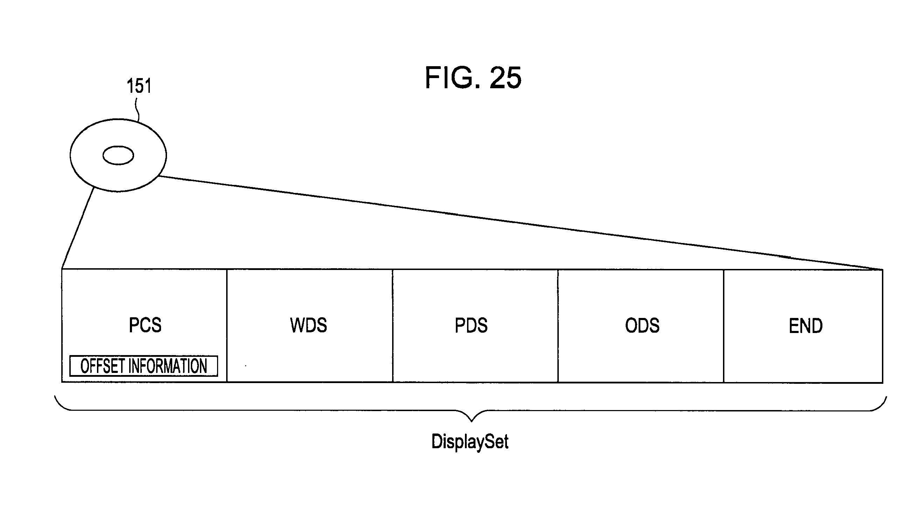

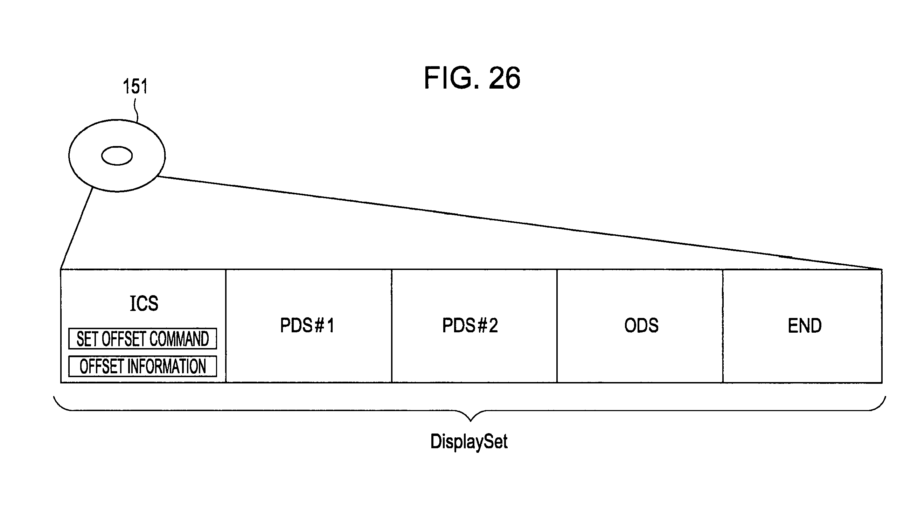

Fig. 25 is a diagram illustrating a configuration example of a display set of caption data according to a third embodiment of the disk to which the present invention is applied, and Fig. 26 is a diagram illustrating a configuration example of a display set of menu data.

As illustrated in Fig. 25, according to the disk 151, in the same manner as the disk 11, offset information in the unit of a picture is described in the PCS.

Also, as illustrated in Fig. 26, according to the disk 151, in the same manner as the disk 11, offset information in the unit of a picture is described in the ICS. Also, according to the disk 151, a set offset command is described in the ICS.

The set offset command is a navigation command that includes offset change information that indicates the offset information after the change of a picture unit of a caption or menu button, to set the offset change information. In the third embodiment and a fourth embodiment to be described later, as the offset change information, offset information that indicates the difference between a vector indicating the offset information being set and a vector indicating the offset information after the change is used.

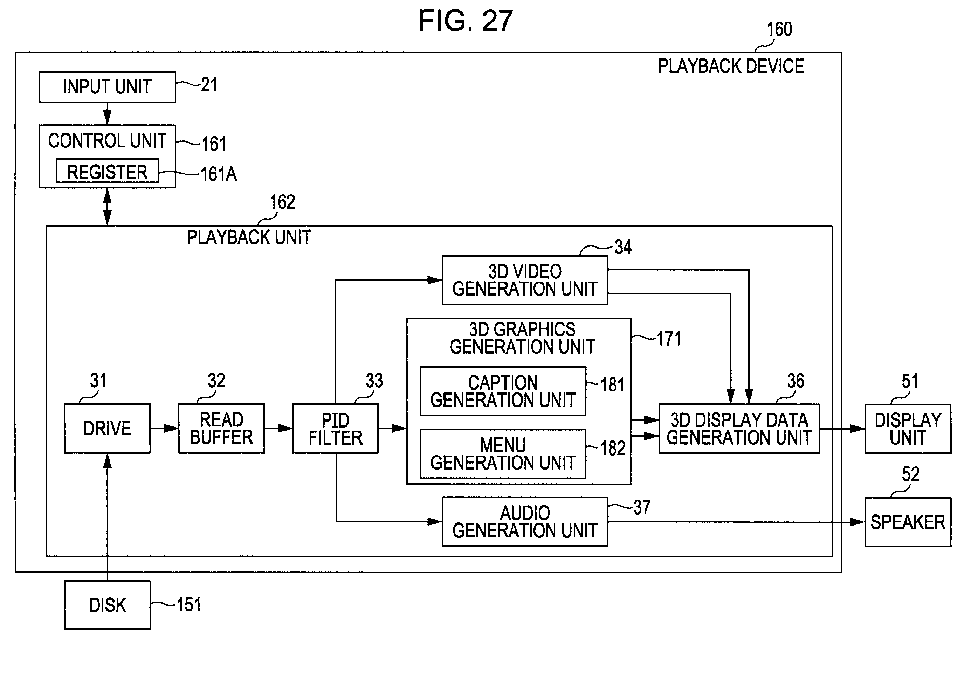

The playback apparatus 160 (see Fig. 27 to be described later) that plays the disk 151, in the case of executing the set offset command, changes the offset information in the unit of a picture of the caption or the menu button on the basis of the offset change information in the unit of a picture of the caption or the menu button described in the set offset command and the offset information in the unit of a picture of the caption or the menu button currently set.

### [Detailed configuration example of a playback apparatus]

Fig. 27 is a block diagram illustrating a configuration example of a playback apparatus 160 that plays the disk 151.

The configurations as illustrated in Fig. 27, which are the same as the configurations of Fig. 13, are allocated with the same reference numerals, and the duplicate description thereof will be appropriately omitted.

The configurations of the playback apparatus 160 in Fig. 27 are different from the configurations of Fig. 13 on the point that a control unit 161 is installed instead of the control unit 22 and a playback unit 162 is installed instead of the playback unit 23. The configuration of the playback unit 162 is different from the configuration of Fig. 13 on the point that a 3D graphics generation unit 171 is installed instead of the 3D graphics generation unit 35.

The control unit 161 controls the playback unit 162 in accordance with the instruction from the input unit 21. Also, the control unit 161, in accordance with the instruction that corresponds to the manipulation of a menu button provided from the input unit 21, requests a command that corresponds to the menu button from the 3D graphic generation unit 171. Then, the control unit 161 sets the offset change information in the unit of a picture of the caption or the menu button described in a set offset command transmitted as the result of the command request by maintaining the offset change information in a built-in register 161A. The control unit 161 supplies the offset change information in the unit of a picture of the caption or the menu button that is maintained in the register 161A to the 3D graphics generation unit 171.

The register 161A is composed of a register for maintaining the set status and the playback status of the playback apparatus, for example, which is called a PSR (Player Status Register). The register 161 A maintains the offset change information or the like in the unit of a picture of the caption or the menu button.

The 3D graphics generation unit 171 is composed of a caption generation unit 181 and a menu generation unit 182. The caption generation unit 181, in the same manner as the caption generation unit 41 of Fig. 13, generates the right-eye caption data and the left-eye caption data on the basis of the offset information in the unit of a picture by using the PES packet of the caption data that is supplied from the PID filter 33. Also, the caption generation unit 181 supplies the right-eye caption data and the left-eye caption data to the 3D display data generation unit 36 as the 3D caption data.

Also, the caption generation unit 181 updates the offset information in the unit of a picture of the caption on the basis of the offset change information in the unit of a picture of the caption transmitted from the control unit 161 and the currently set offset information.

The menu generation unit 182, in the same manner as the menu generation unit 42 of Fig. 13, generates the right-eye menu data and the left-eye menu data on the basis of the offset information in the unit of a picture by using the PES packet of the menu data that is supplied from the PID filter 33. Also, the menu generation unit 182 supplies the right-eye menu data and the left-eye menu data to the 3D display data generation unit 36 as the 3D menu data.

Also, the menu generation unit 182 transmits a set offset command included in the ICS to the control unit 161 in accordance with a request for a command which corresponds to an offset change button that is a menu button for instructing the change of the offset from the control unit 161. Also, the menu generation unit 182 updates the offset information in the unit of a picture of the menu button on the basis of the offset change information in the unit of a picture of the menu button transmitted from the control unit 161 and the currently set offset information.

### [Detailed configuration example of a caption generation unit]

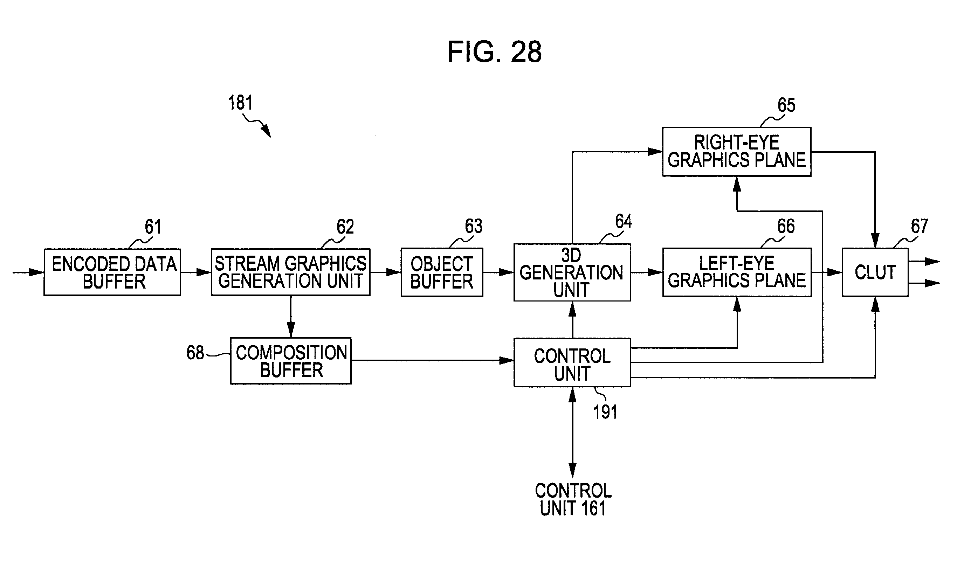

Fig. 28 is a block diagram illustrating a detailed configuration example of a caption generation unit 181 of the playback apparatus 160.

The configurations as illustrated in Fig. 28, which are the same as the configurations of Fig. 14, are allocated with the same reference numerals, and the duplicate description thereof will be appropriately omitted.

The configurations of the caption generation unit 181 in Fig. 28 are different from the configurations of Fig. 14 on the point that a control unit 191 is installed instead of the control unit 69.

The control unit 191, in the same manner as the control unit 69, reads the offset information in the unit of a picture included in the PCS supplied from the composition buffer 68, and supplies the read offset information to the 3D generation unit 64. Also, the control unit 191, in the same manner as the control unit 69, instructs the right-eye graphics plane 65 and the left-eye graphics plane 66 to transmit the right-eye caption object and the left-eye caption object, respectively, on timing based on the PTS included in the PES packet header. Further, the control unit 191, in the same manner as the control unit 69, reads the PDS from the composition buffer 68, and supplies the read PDS to the CLUT 67.

Also, the control unit 191 controls the respective units in accordance with the instruction from the control unit 161 (see Fig. 27).

Further, the control unit 191 receives the offset change information in the unit of a picture of the caption that is stored in the register 161A, which is transmitted from the control unit 161. The control unit 161 adds a vector indicated by the received offset change information in the unit of a picture of the caption to a vector indicated by the offset information in the unit of a picture included in the PCS, and sets the offset information in the unit of a picture indicated by the vector as new offset information in the unit of a picture. Then, the control unit 191 supplies the offset information in the unit of a picture to the 3D generation unit 64.

### [Detailed configuration example of a menu generation unit]

The menu generation unit 182 of the playback apparatus 160 is configured in the same manner as the caption generation unit 181 of Fig. 28, except that the object to be processed is not the caption data, but is the menu data, and thus the illustration thereof will be omitted. However, the control unit of the menu generation unit 182, in accordance with the request for a command that corresponds to the offset change button from the control unit 161, reads the set offset command included in the ICS from the composition buffer, and transmits the read set offset command to the control unit 161.

### [Explanation of processing of a playback apparatus]

The playback processing performed by the playback apparatus 160, the 3D graphics generation processing, and the caption generation processing are the same as the playback processing illustrated in Fig. 15, the 3D graphics generation processing illustrated in Fig. 16, and the caption generation processing illustrated in Fig. 17, respectively, and thus the explanation thereof will be omitted.

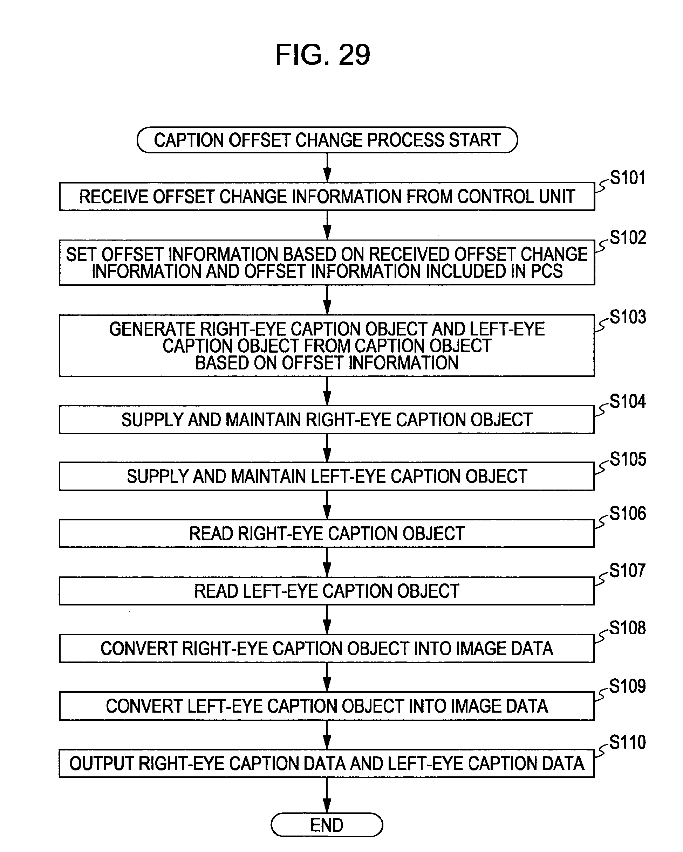

Fig. 29 is a flowchart illustrating the offset change processing performed by the caption generation unit 181 of the playback apparatus 160. The caption offset change processing starts when the control unit 161 transmits the offset change information in accordance with the instruction that corresponds to the manipulation of the offset change button from the input unit 21.

In step S101 of Fig. 29, the control unit 191 receives the offset change information in the unit of a picture of the caption that is maintained in the register 161A from the control unit 161.

In step S102, the control unit 191 sets new offset information in the unit of a picture on the basis of the offset change information in the unit of a picture of the caption received from the control unit 161 and the offset information in the unit of a picture included in the PCS. Then, the control unit 191 supplies the set offset information in the unit of a picture to the 3D generation unit 64, and makes the processing proceed to step S103.

In step S103, the 3D generation unit 64 generates the right-eye caption object and the left-eye caption object from the caption object on the basis of the offset information in the unit of a picture that is supplied from the control unit 191, and makes the processing proceed to step S104. The processing in steps S104 to S110 is the same as the processing in steps S67 to S73 of Fig. 17, and thus the explanation thereof will be omitted.

In this case, the menu offset change processing performed by the menu generation unit 182 is the same as the caption offset change processing of Fig. 29 except that the object to be processed is not the caption data, but is the menu data, and thus the explanation thereof will be omitted.

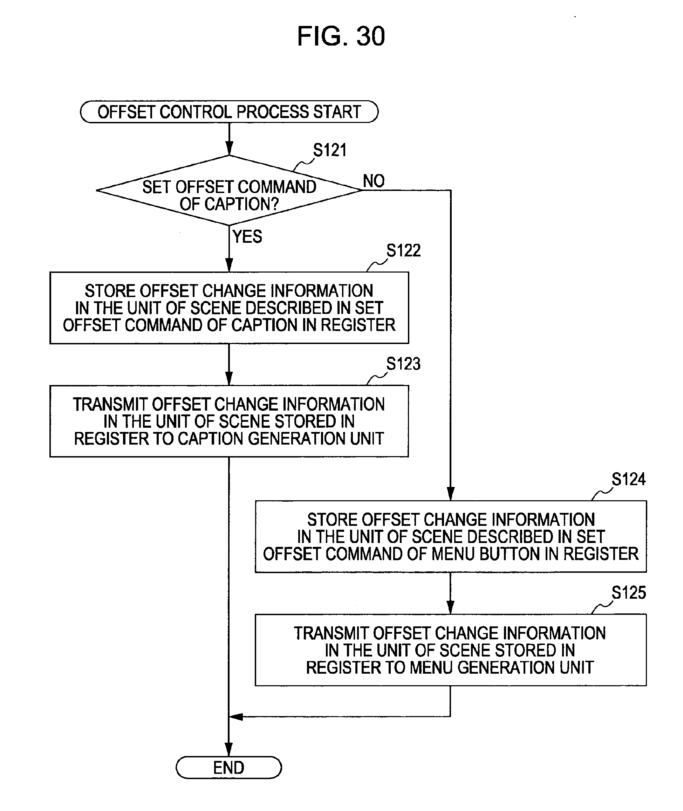

Fig. 30 is a flowchart illustrating the details of the offset control processing performed by the playback apparatus 160. This offset control processing starts when the control unit 161 requests a command that corresponds to the offset change button from the menu generation unit 182 in accordance with the instruction of the offset change from the input unit 21.

In step S121 of Fig. 30, the control unit 161 determines whether the set offset command transmitted from the menu generation unit 182 is the set offset command of the caption. If it is determined that the set offset command is the set offset command of the caption in step S121, the control unit 161 stores offset change information in the unit of a picture of the caption described in the set offset command of the caption in the register 161A in step S122.

In step S123, the control unit 161 transmits the offset change information in the unit of a picture of the caption stored in the register 161 A to the caption generation unit 181, and then ends the processing.

On the other hand, if it is determined that the set offset command is not the set offset command of the caption in step S121, i.e. if the set offset command of the menu button is transmitted from the menu generation unit 182, the processing proceeds to step S124. In step S124, the control unit 161 stores offset change information in the unit of a picture of the menu button described in the set offset command of the menu button in the register 161A.

In step S125, the control unit 161 transmits the offset change information in the unit of a picture of the menu button stored in the register 161 A to the menu generation unit 182, and then ends the processing.

### [3D display example of a caption]

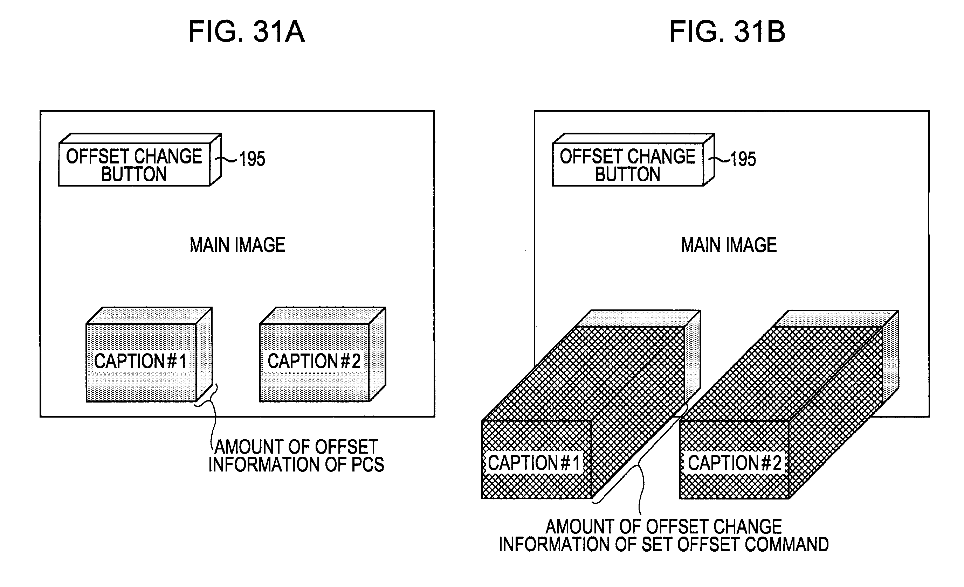

Figs. 31A and 31B are diagrams illustrating an example of a caption that is 3D-displayed on the display unit 51 of the playback apparatus 160.

As illustrated in Fig. 31A, in the playback apparatus 160, an offset change button 195 as a 3D image having a predetermined length in a predetermined depth direction is displayed on the screen of the display unit 51 on the basis of the offset information in the unit of a picture included in the ICS. In an example of Fig. 31A, caption #1 and caption #2 as 3D images having the same length in the same depth direction are further displayed on the screen on the basis of the offset information in the unit of a picture included in the PCS in the unit of a picture included in the PCS.

In the screen of Fig. 31A, if the offset change is ordered by a user through manipulation of the offset change button 195 using the input unit 21, the screen of the display unit 51 is changed to a screen as shown in Fig. 31B.

Specifically, if the offset change button 195 is manipulated, the offset change information in the unit of a picture of the caption described in the set offset command that is included in the ICS corresponding to the offset change button 195 is maintained in the register 161 A of the playback apparatus 160. Also, the offset information in the unit of a picture that is indicated by a vector obtained as the result of adding a vector indicated by the offset change information in the unit of a picture to a vector indicated by the currently set offset information in the unit of a picture is set as new offset information in the unit of a picture. As a result, as shown in Fig. 31B, the length in the depth direction of the caption #1 and the caption #2 is increased as long as the length that corresponds to the offset change information in the unit of a picture in the depth direction.

### <Fourth embodiment>

### [Configuration example of a display set according to a fourth embodiment of the disk]

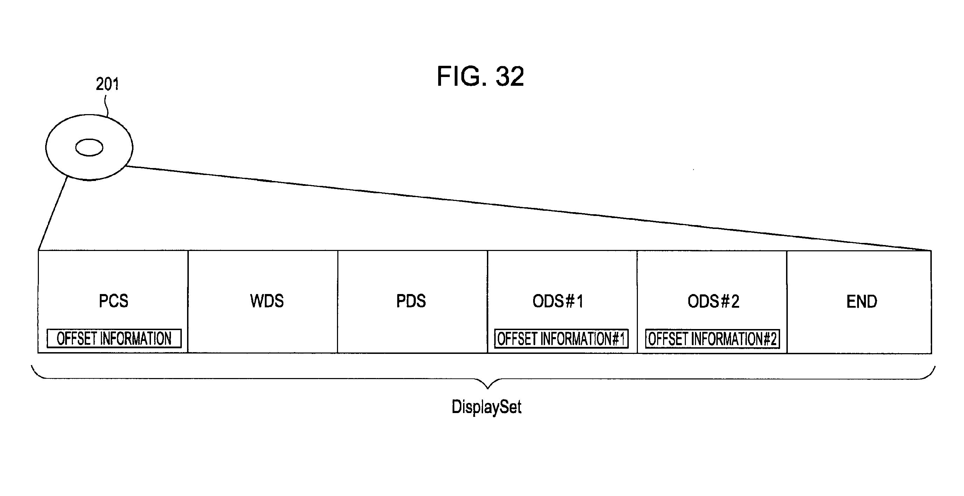

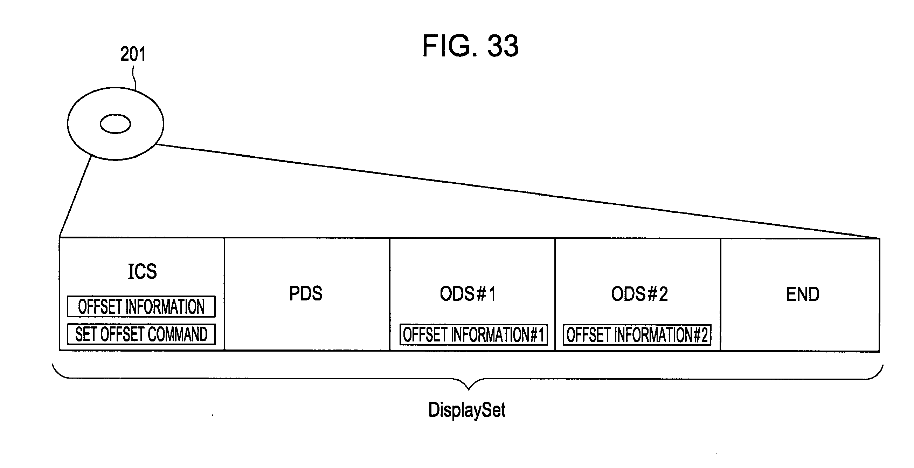

Fig. 32 is a diagram illustrating a configuration example of a display set of caption data according to a fourth embodiment of the disk to which the present invention is applied, and Fig. 33 is a diagram illustrating a configuration example of a display set of menu data.

In a disk 201, information on the offset information recorded in the disks 11, 81, and 151 are recorded in all.

Specifically, as illustrated in Fig. 32, according to the disk 201, in the same manner as the disk 11, offset information in the unit of a picture is described in the PCS. Also, according to the disk 201, in the same manner as the disk 81, offset information in the unit of an ODS is described in the ODS, and in the same manner as the disk 151, a set offset command is described in the PCS.

Also, as illustrated in Fig. 33, in the disk 201, in the same manner as the disk 11, offset information in the unit of a picture is described in the ICS, and in the same manner as the disk 151, set offset command is described in the PCS. Also, in the disk 201, in the same manner as the disk 81, offset information in the unit of an ODS is described in the ODS.

### [Detailed configuration example of a playback apparatus]

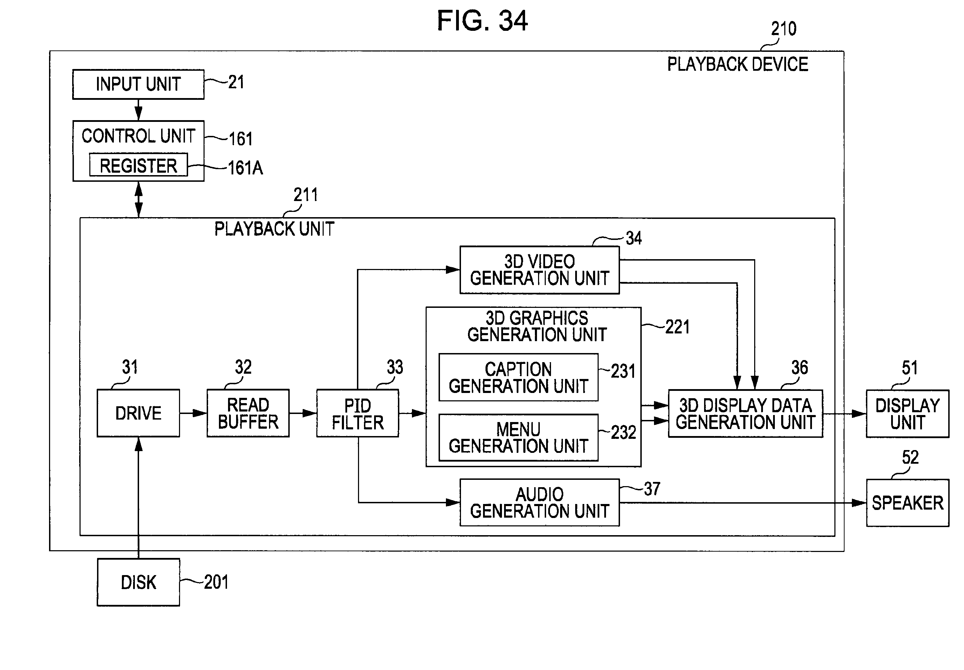

Fig. 34 is a block diagram illustrating a configuration example of a playback apparatus 210 that plays the disk 201.

The playback apparatus 210 of Fig. 34 has all the functions of the playback apparatus 20 of Fig. 13, the playback apparatus 90 of Fig. 21, and the playback apparatus 160 of Fig. 27.

Specifically, the playback apparatus 210 of Fig. 34 is composed of an input unit 21, a display unit 51, a speaker 52, a control unit 161, and a playback unit 211. The configurations as illustrated in Fig. 34, which are the same as the configurations of Fig. 27, are allocated with the same reference numerals, and the duplicate description thereof will be appropriately omitted.

The configurations of the playback apparatus 211 are different from the configurations of Fig. 27 on the point that a 3D graphics generation unit 221 is mainly installed instead of the 3D graphics generation unit 171.

The 3D graphics generation unit 221 is composed of a caption generation unit 231 and a menu generation unit 232. The caption generation unit 231 generates the right-eye caption data and the left-eye caption data on the basis of the offset information in the unit of a picture and the offset information in the unit of an ODS by using the PES packet of the caption data that is supplied from the PID filter 33. Also, the caption generation unit 231 supplies the right-eye caption data and the left-eye caption data to the 3D display data generation unit 36 as the 3D caption data.

Also, the caption generation unit 231, in the same manner as the caption generation unit 181 of Fig. 27, updates the offset information in the unit of a picture of the caption on the basis of the offset change information in the unit of a picture of the caption transmitted from the control unit 161 and the currently set offset information.

The menu generation unit 232 generates the right-eye menu data and the left-eye menu data on the basis of the offset information in the unit of a picture and the offset information in the unit of an ODS by using the PES packet of the menu data that is supplied from the PID filter 33. Also, the menu generation unit 232 supplies the right-eye menu data and the left-eye menu data to the 3D display data generation unit 36 as the 3D menu data.

Also, the menu generation unit 232, in the same manner as the menu generation unit 182 of Fig. 27, transmits a set offset command included in the ICS to the control unit 161 in accordance with a request for a command which corresponds to the offset change button 195 from the control unit 161. Also, the menu generation unit 232, in the same manner as the menu generation unit 182, updates the offset information in the unit of a picture of the menu button on the basis of the offset change information in the unit of a picture of the menu button transmitted from the control unit 161 as the result of transmitting the set offset command to the control unit 161 and the currently set offset information.

### [Detailed configuration example of a caption generation unit]

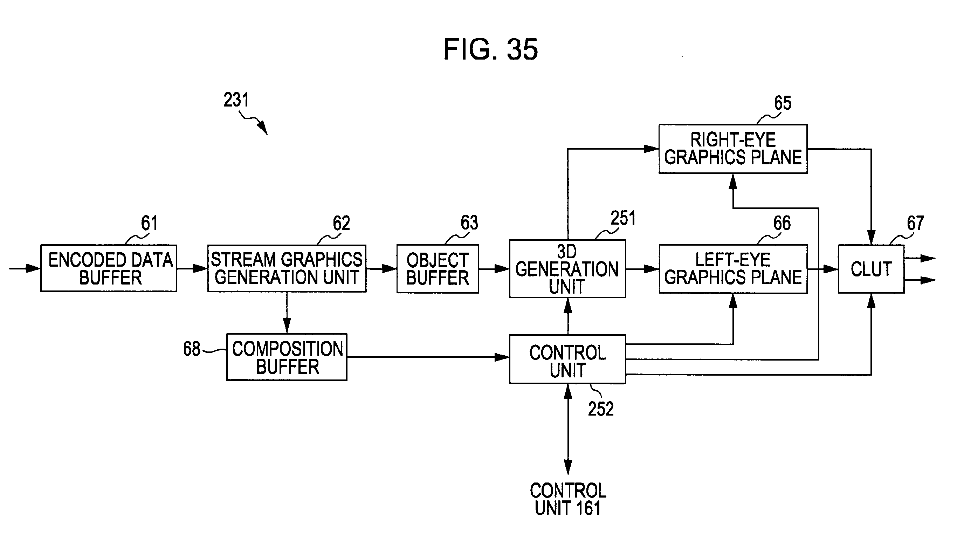

Fig. 35 is a block diagram illustrating a detailed configuration example of a caption generation unit 231 of the playback apparatus 210.

The caption generation unit 231 of Fig. 35 has all functions of the caption generation unit 41 of Fig. 14, the caption generation unit 111 of Fig. 22, and the caption generation unit 181 of Fig. 28.

Specifically, the caption generation unit 231 of Fig. 35 is provided with an encoded data buffer 61, a stream graphics generation unit 62, an object buffer 63, a right-eye graphics plane 65, and a left-eye graphics plane 66. Also, the caption generation unit 231 is provided with a CLUT 67, a composition buffer 68, a 3D generation unit 251, and a control unit 252. The configurations as illustrated in Fig. 35, which are the same as the configurations of Fig. 28, are allocated with the same reference numerals, and the duplicate description thereof will be appropriately omitted.

The 3D generation unit 251 has functions of both the 3D generation unit 64 of Fig. 14 and the 3D generation unit 121 of Fig. 22. Specifically, the 3D generation unit 251 reads the caption object from the object buffer 63 under the control of the control unit 252. The 3D generation unit 251 generates the right-eye caption object and the left-eye caption object from the caption objects corresponding to the respective ODS on the basis of the offset information in the unit of a picture and in the unit of an ODS from the control unit 252. Also, the 3D generation unit 251 supplies the right-eye caption object to the right-eye graphics plane 65, and supplies the left-eye caption object to the left-eye graphics plane 66.

The control unit 252, in the same manner as the control unit 69 in Fig. 14, reads the offset information in the unit of a picture included in the PCS supplied from the composition buffer 68, and supplies the read offset information to the 3D generation unit 121. Also, the control unit 252, in the same manner as the control unit 69, instructs the right-eye graphics plane 65 and the left-eye graphics plane 66 to transmit the right-eye caption object and the left-eye caption object, respectively, on timing based on the PTS included in the PES packet header. Further, the control unit 252, in the same manner as the control unit 69, reads the PDS from the composition buffer 68, and supplies the read PDS to the CLUT 67.

Also, the control unit 252, in the same manner as the control unit 122 of Fig. 22, reads the offset information in the unit of an ODS included in the respective ODS from the composition buffer 68, and supplies the read offset information to the 3D generation unit 121.

The control unit 252, in the same manner as the control unit 191, receives the offset change information in the unit of a picture of the caption that is stored in the register 161A, which is transmitted from the control unit 161. The control unit 252, in the same manner as the control unit 161, sets new offset information in the unit of a picture on the basis of the received offset change information in the unit of a picture of the caption and the offset information in the unit of a picture included in the PCS. Also, the control unit 252, in the same manner as the control unit 191, supplies the offset information in the unit of a picture to the 3D generation unit 251.

### [Detailed configuration example of a menu generation unit]

The menu generation unit 232 of the playback apparatus 210 is configured in the same manner as the caption generation unit 231 of Fig. 35, except that the object to be processed is not the caption data, but is the menu data, and thus the illustration thereof will be omitted. However, the control unit of the menu generation unit 232, in accordance with the request for a command that corresponds to the offset change button from the control unit 161, reads the set offset command included in the ICS from the composition buffer, and transmits the read set offset command to the control unit 161.

### [Explanation of processing of a playback apparatus]

The playback processing performed by the playback apparatus 210, the 3D graphics generation processing, the caption offset change processing, and the offset control processing are the same as the playback processing illustrated in Fig. 15, the 3D graphics generation processing illustrated in Fig. 16, the offset change processing illustrated in Fig. 29, and the offset control processing illustrated in Fig. 30, respectively, and thus the explanation thereof will be omitted.

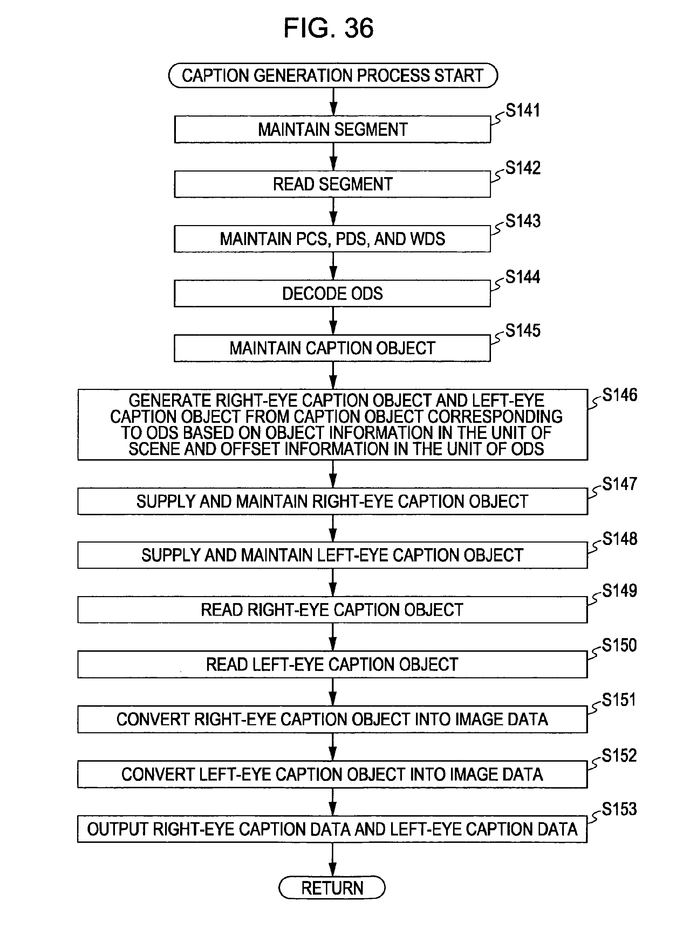

Fig. 36 is a flowchart illustrating the details of the caption generation processing in step S41 of Fig. 16 performed by the playback apparatus 210.

As the processing in steps S141 to S145 of Fig. 36 is the same as the processing in steps S61 to S65 in Fig. 17, the explanation thereof will be omitted.

In step S146, the 3D generation unit 251 generates the right-eye caption object and the left-eye caption object from the caption objects that correspond to the respective ODS on the basis of the offset information in the unit of a picture and the offset information in the unit of an ODS from the control unit 252. Then, the processing proceeds to step S147.

The processing in steps S147 to S153 is the same as the processing in steps S67 to S73 in Fig. 17, and thus the explanation thereof will be omitted.

In this case, the menu generation processing in step S42 of Fig. 16 that is performed by the playback apparatus 210 is the same as the caption generation processing of Fig. 36 except that the object to be processed is not the caption data, but is the menu data, and thus the explanation thereof will be omitted.

### [3D display example of a caption]

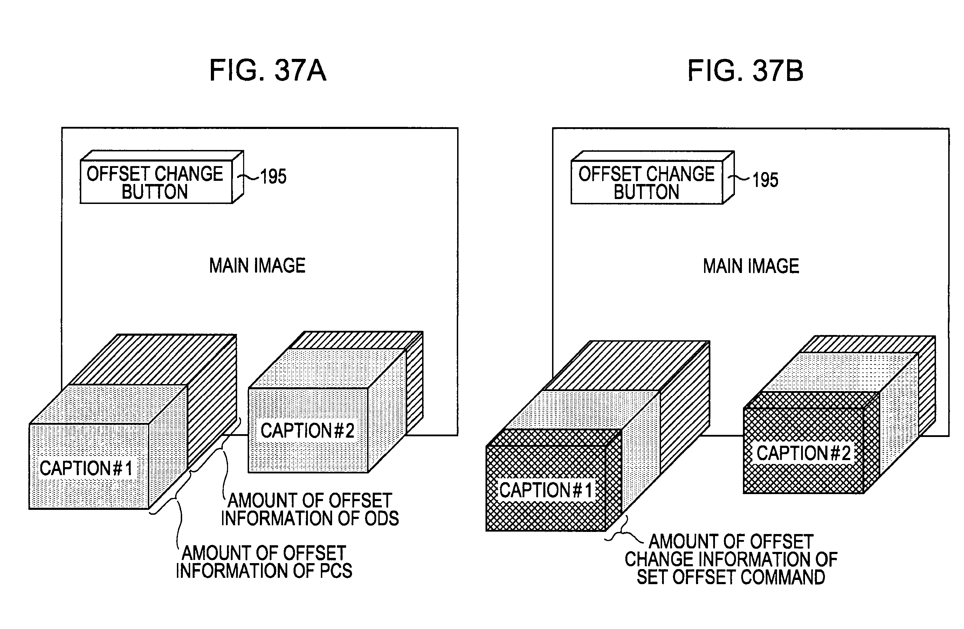

Figs. 37A and 37B are diagrams illustrating an example of a caption that is 3D-displayed on the display unit 51 of the playback apparatus 210.

As illustrated in Fig. 37A, in the playback apparatus 210, an offset change button 195 as a 3D image having a predetermined length in a predetermined depth direction is displayed on the screen of the display unit 51 on the basis of the offset information in the unit of a picture and the offset information in the unit of an ODS.

Also, the playback apparatus 210 generates a caption object of the caption that is obtained as the result of making the caption corresponding to the respective ODS disparity on the basis of the offset information in the unit of an ODS and making the whole caption on the screen further disparity on the basis of the offset information in the unit of a picture described in the PCS. Then, the playback apparatus 210 takes the caption object as the right-eye caption object.

As a result, in an example of Fig. 37A, caption #1 and caption #2 as 3D images having the same depth direction and different lengths in the depth direction are further displayed on the screen. The length of the caption #1 in the depth direction is the sum of the length in the depth direction that corresponds to the offset information in the unit of an ODS described in the ODS of the caption #1 and the length in the depth direction that corresponds to the offset information in the unit of a picture described in the PCS of the picture including the caption #1.

Also, the length of the caption #2 in the depth direction, in the same manner as the caption #1, is the sum of the length in the depth direction that corresponds to the offset information in the unit of an ODS of the caption #2 and the length in the depth direction that corresponds to the offset information in the unit of a picture including the caption #2.

In the screen of Fig. 37A, if the offset change is ordered by a user through manipulation of the offset change button 195 using the input unit 21, the screen of the display unit 51 is changed to a screen as shown in Fig. 37B.

Specifically, if the offset change button 195 is manipulated, the offset change information in the unit of a picture of the caption described in the set offset command that is included in the ICS corresponding to the offset change button 195 is maintained in the register 161A of the playback apparatus 210. Also, the offset information in the unit of a picture that is indicated by a vector obtained as the result of adding a vector indicated by the offset change information in the unit of a picture to a vector indicated by the currently set offset information in the unit of a picture is set as new offset information in the unit of a picture. As a result, the length in the depth direction of the caption #1 and the caption #2 is increased as long as the length that corresponds to the offset change information in the unit of a picture in the depth direction.

### <Fifth embodiment>

### [Configuration example of a display set according to a fifth embodiment of the disk]

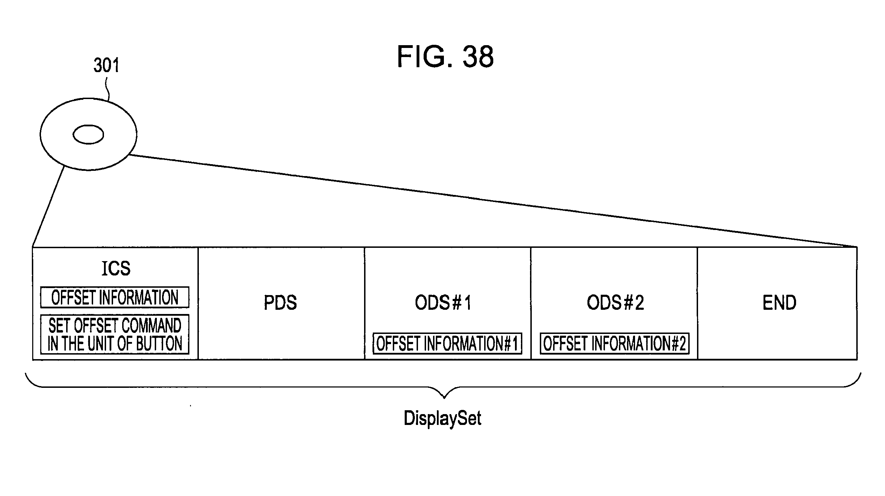

Fig. 38 is a diagram illustrating a configuration example of a display set of menu data according to a fifth embodiment of the disk to which the present invention is applied.

As illustrated in Fig. 38, according to the disk 301, in the same manner as the disk 11, offset information in the unit of a picture is described in the ICS, and in the same manner as the disk 81, offset information in the unit of an ODS is described in the ODS.

Also, according to the disk 301, a set offset command in the unit of a button is described in the PCS. The set offset command in the unit of a button is a navigation command that includes offset change information in the unit of a menu button, i.e. in the unit of an ODS, to set the offset change information in the unit of an ODS. Specifically, in the set offset command in the unit of a button, a button ID, and offset change information of a menu button specified by the button ID are described.

As described above, according to the disk 301, the set offset command in the unit of a button is described in the ICS, and thus in the playback apparatus 310 (to be described later) that plays the disk 301, the offset information can be changed in the unit of a menu button.

In this case, the configuration of the display set of the caption data recorded in the disk 301 is the same as the configuration of the display set of the caption data recorded in the disk 11 as illustrated in Fig. 10, and thus the explanation thereof will be omitted.

### [Detailed configuration example of a playback apparatus]

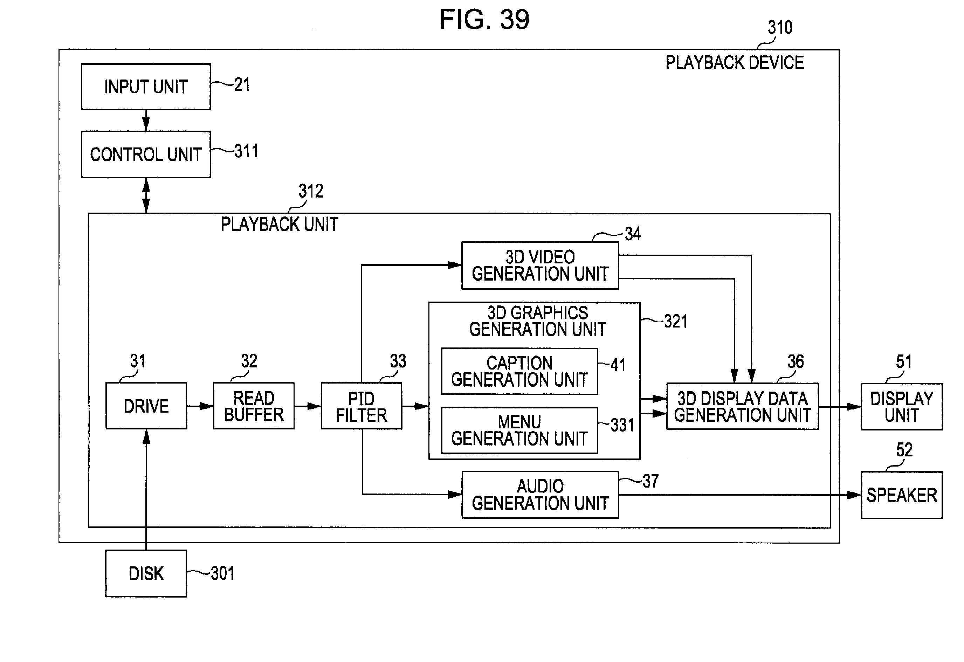

Fig. 39 is a block diagram illustrating a configuration example of a playback apparatus 310 that plays the disk 301.

The configurations as illustrated in Fig. 39, which are the same as the configurations of Fig. 34, are allocated with the same reference numerals, and the duplicate description thereof will be appropriately omitted.

The configurations of the playback apparatus 310 in Fig. 39 are different from the configurations of Fig. 34 on the point that a control unit 311 is installed instead of the control unit 161 and a playback unit 312 is installed instead of the playback unit 211. The configuration of the playback unit 312 is different from the configuration of Fig. 34 on the point that a 3D graphics generation unit 321 is installed instead of the 3D graphics generation unit 221.

The control unit 311 controls the playback unit 312 in accordance with the instruction from the input unit 21. Also, the control unit 311, in accordance with the instruction that corresponds to the manipulation of a menu button provided from the input unit 21, requests a set offset command that corresponds to the menu button from the 3D graphic generation unit 321. Then, the control unit 311 supplies the offset change information in the unit of a menu button and the button ID described in the set offset command in the unit of a menu button transmitted from the menu generation unit 331 to the menu generation unit 331.

The 3D graphics generation unit 321 is composed of a caption generation unit 41 as illustrated in Fig. 13 and a menu generation unit 331. The menu generation unit 331, in the same manner as the menu generation unit 232 of Fig. 34, generates the right-eye menu data and the left-eye menu data on the basis of the offset information in the unit of a picture and the offset information in the unit of an ODS by using the PES packet of the menu data that is supplied from the PID filter 33. Also, the menu generation unit 331 supplies the right-eye menu data and the left-eye menu data to the 3D display data generation unit 36 as the 3D menu data.

Also, the menu generation unit 331 transmits a set offset command in the unit of a button included in the ICS to the control unit 311 in accordance with a request for a command which corresponds to an offset change button 195 from the control unit 311. Also, the menu generation unit 331 updates the offset information in the unit of an ODS of the menu button specified by the button ID on the basis of the offset change information in the unit of a menu button and the button ID transmitted from the control unit 311.

### [Detailed configuration example of a menu generation unit]

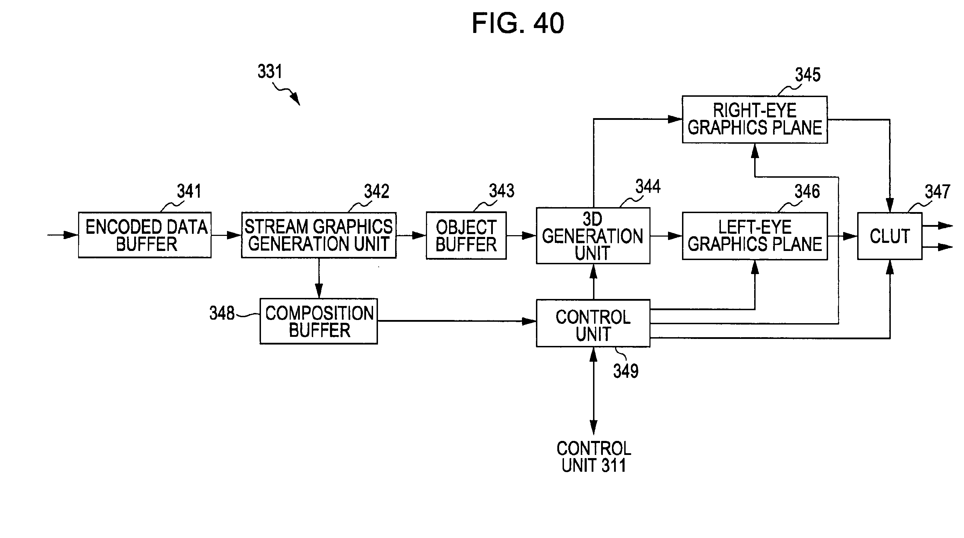

Fig. 40 is a block diagram illustrating a detailed configuration example of a menu generation unit 331 of Fig. 39.

The menu generation unit 331 of Fig. 40 is composed of an encoded data buffer 341, a stream graphics generation unit 342, an object buffer 343, a 3D generation unit 344, a right-eye graphics plane 345, a left-eye graphics plane 346, CLUT 347, a composition buffer 348, and a control unit 349.

The configurations as illustrated in Fig. 40 are the same as the menu generation unit 232 of Fig. 34 except for the control unit 349, and thus the explanation thereof will be omitted.

The control unit 349 reads the offset information in the unit of a picture included in the ICS supplied from the composition buffer 348, and supplies the read offset information to the 3D generation unit 344. Also, the control unit 349 instructs the right-eye graphics plane 345 and the left-eye graphics plane 346 to transmit the right-eye menu object and the left-eye menu object, respectively, on timing based on the PTS included in the PES packet header. Further, the control unit 349 reads the PDS from the composition buffer 348, and supplies the read PDS to the CLUT 67.

Also, the control unit 349 reads the offset information in the unit of an ODS included in the respective ODS from the composition buffer 348, and supplies the read offset information to the 3D generation unit 344. The control unit 349 controls the respective units in accordance with the instruction from the control unit 311 (see Fig. 39).

Further, the control unit 349 reads the set offset command in the unit of a button included in the ICS from the composition buffer 348 according to the request for the command that corresponds to the offset change button 195 from the control unit 311, and transmits the read set offset command to the control unit 311. Also, the control unit 349 receives the offset change information in the unit of a menu button and the button ID transmitted from the control unit 311. The control unit 349 updates the offset information in the unit of an ODS on the basis of the received offset change information in the unit of a menu button and the currently set offset change information of the ODS that corresponds to the button ID transmitted together with the offset information. Then, the control unit 349 supplies the offset information in the unit of an ODS to the 3D generation unit 344.

### [Explanation of processing of a playback apparatus]

The playback processing performed by the playback apparatus 310 and the 3D graphics generation processing are the same as the playback processing illustrated in Fig. 15 and the 3D graphics generation processing illustrated in Fig. 16, respectively, and thus the explanation thereof will be omitted. Also, the caption generation processing by the playback apparatus 310 and the caption offset change processing are the same as the caption generation processing of Fig. 36 and the offset change processing of Fig. 29, respectively, the explanation thereof will be omitted.

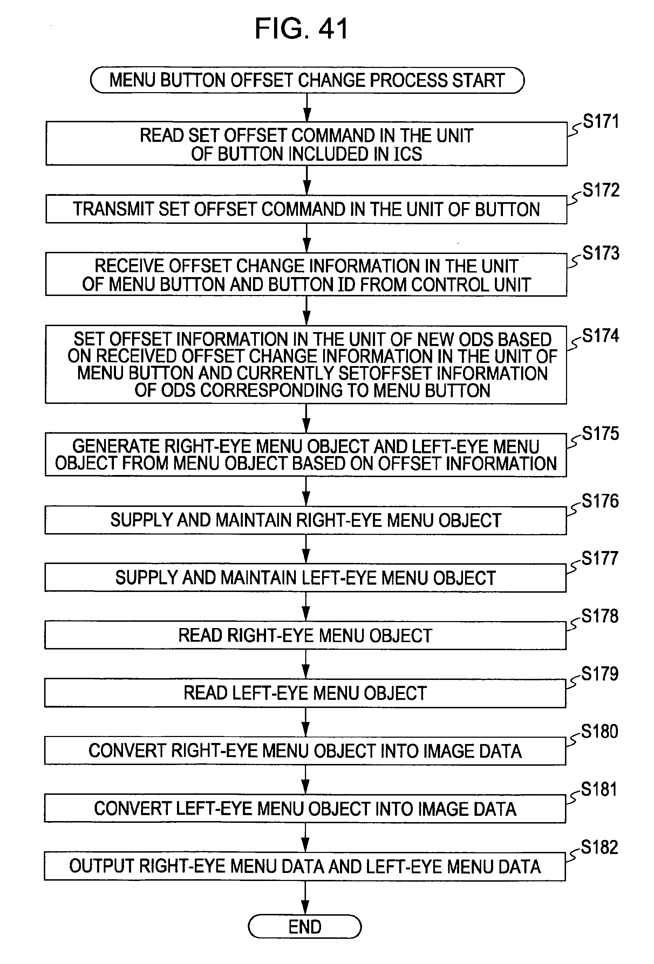

Fig. 41 is a flowchart illustrating the menu button offset change processing performed by the menu generation unit 331 of the playback apparatus 310. The menu button offset change processing starts when the control unit 311 requests the command that corresponds to the offset change button 195 from the menu generation unit 331 in accordance with the instruction corresponding to the manipulation of the offset change button 195 from the input unit 21.

In step S171 of Fig. 41, the control unit 349 reads the set offset command in the unit of a button included in the ICS from the composition buffer 348 in accordance with the request for the command that corresponds to the offset change button 195 from the control unit 311.

In step S172, the control unit 349 transmits the set offset command in the unit of a button read in step S171 to the control unit 311. The control unit 311 transmits the offset change information in the unit of a menu button and the button ID described in the set offset command in the unit of a button transmitted from the control unit 349 to the control unit 349.

In step S173, the control unit 349 receives the offset change information in the unit of a menu button and the button ID from the control unit 311. The control unit 349 recognizes the ODS that corresponds to the button ID received from the control unit 311 on the basis of the button ID included in the ICS that is maintained in the composition buffer 348.

In step S174, the control unit 349 sets new offset information in the unit of an ODS on the basis of the offset change information in the unit of a menu button received from the control unit 311 and the currently set offset information of the ODS corresponding to the menu button. Then, the control unit 349 supplies the offset information in the unit of an ODS to the 3D generation unit 344.

In step S175, the 3D generation unit 344 generates the right-eye menu object and the left-eye menu object from the menu object on the basis of the offset information in the unit of an ODS supplied from the control unit 349, and makes the processing proceed to step S176. The processing in steps S176 to S182 is the same as the processing in steps S67 to S73 of Fig. 17 except that the object to be processed is not the caption data, but is the menu data, and thus the explanation thereof will be omitted.

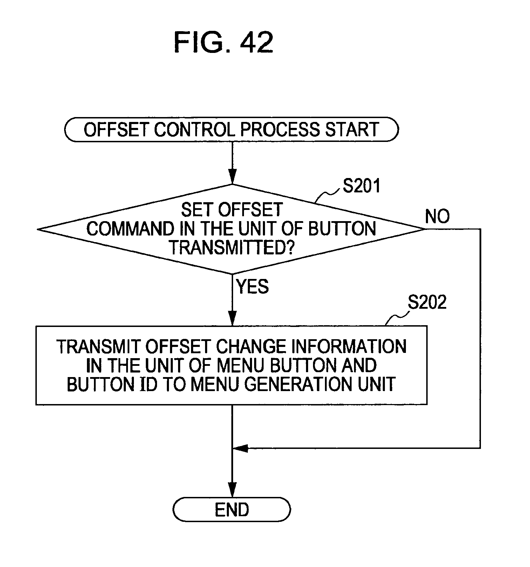

Fig. 42 is a flowchart illustrating the offset control processing performed by the playback apparatus 310. This offset control processing starts when the control unit 311 requests the command that corresponds to the offset change button 195 from the menu generation unit 331 in accordance with the instruction corresponding to the manipulation of the offset change button 195 from the input unit 21.

In step S201 of Fig. 42, the control unit 311 determines whether the set offset command in the unit of a button is transmitted from the menu generation unit 331 in accordance with the request. If it is determined that the set offset command in the unit of a button is transmitted in step S201, the control unit 311 transmits the offset change information in the unit of a menu button and the button ID described in the set offset command in the unit of a button to the menu generation unit 331 in step S202, and then ends the processing.

On the other hand, if it is determined that the set offset command in the unit of a button is not transmitted in step S201, the processing is ended.

### [3D display example of a menu button]

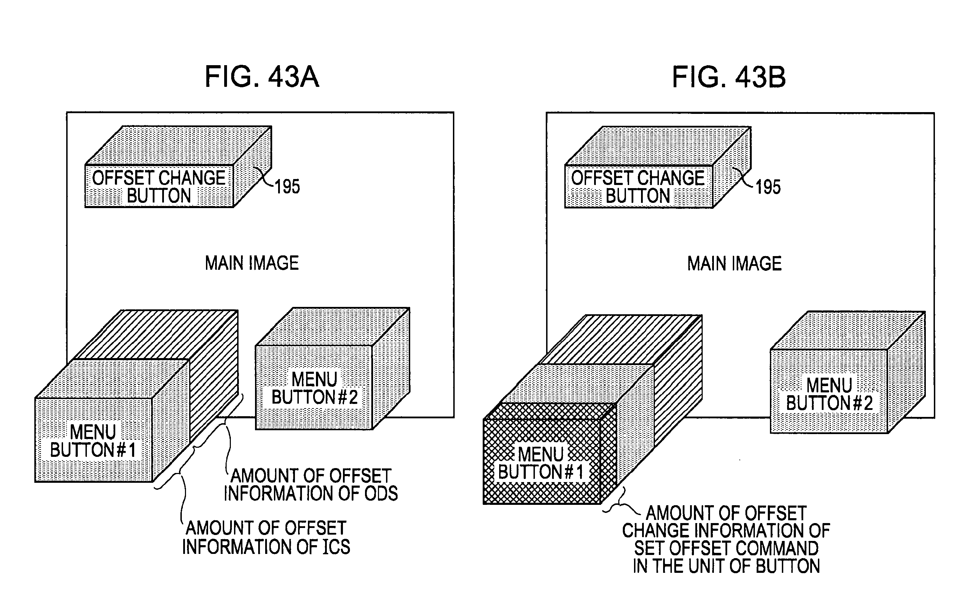

Figs. 43A and 43B are diagrams illustrating an example of a menu button that is 3D-displayed on the display unit 51 of the playback apparatus 310.

The playback apparatus 310 generates a menu button object of the menu button that is obtained as the result of making the menu button corresponding to the respective ODS disparity on the basis of the offset information in the unit of an ODS and making the whole menu buttons on the screen further disparity on the basis of the offset information in the unit of a picture. Then, the playback apparatus 310 takes the menu button object as the right-eye menu button object.

As a result, in an example of Fig. 43A, a menu button #1, a menu button #2, and an offset change button 195 as 3D images having the same depth direction and different lengths in the depth direction are displayed on the screen. Here, for easy understanding in explanation, the offset change button 195 has been described, but the offset change button 195 is a menu button #3.

The length of the menu button #1 in the depth direction is the sum of the length in the depth direction that corresponds to the offset information in the unit of an ODS of the menu button #1 and the length in the depth direction that corresponds to the offset information in the unit of a picture including the menu button #1.

Also, the length of the menu button #2 or the offset change button 195 in the depth direction, in the same manner as the menu button #1, is the sum of the length that corresponds to the offset information in the unit of an ODS of the menu button #2 or the offset change button 195 and the length that corresponds to the offset information in the unit of a picture including the menu button #2 and the offset change button 195. However, in an example of Fig. 43, since the offset value included in the offset information in the unit of an ODS of the menu button #2 and the offset change button 195 is 0, the length of the menu button #2 and the offset change button 195 in the depth direction is the length that correspond to the offset information in the unit of a picture including the menu button #2 and the offset change button 195.

In the screen of Fig. 43A, if a user inputs a command for the offset change through manipulation of the offset change button 195 using the input unit 21, the screen of the display unit 51 is changed to a screen as shown in Fig. 43B.

Specifically, if the offset change button 195 is manipulated, in the playback apparatus 310, the offset information in the unit of a picture that is indicated by a vector is obtained as the result of adding a vector indicated by the offset change information in the unit of a picture to a ODS vector indicated by the currently set offset information in the unit of a picture. The offset information in the unit of an ODS indicated by the vector obtained as the result of the addition is set as new offset information in the unit of an ODS. As a result, the length in the depth direction of the menu button #1, the menu button #2, and the offset change button 195 is increased as long as the length that corresponds to the offset change information in the unit of a menu button in the set offset command in the unit of a button in the depth direction.

In an example of Fig. 43, since the set offset command in the unit of a button does not include the menu button #2 and the offset change information of the offset change button 195, the distances in the depth direction of the menu button #2 and the offset change button 195 are not changed before and after the manipulation of the offset change button 195.

### <Sixth embodiment>

### [Configuration example of a display set according to a sixth embodiment of the disk]

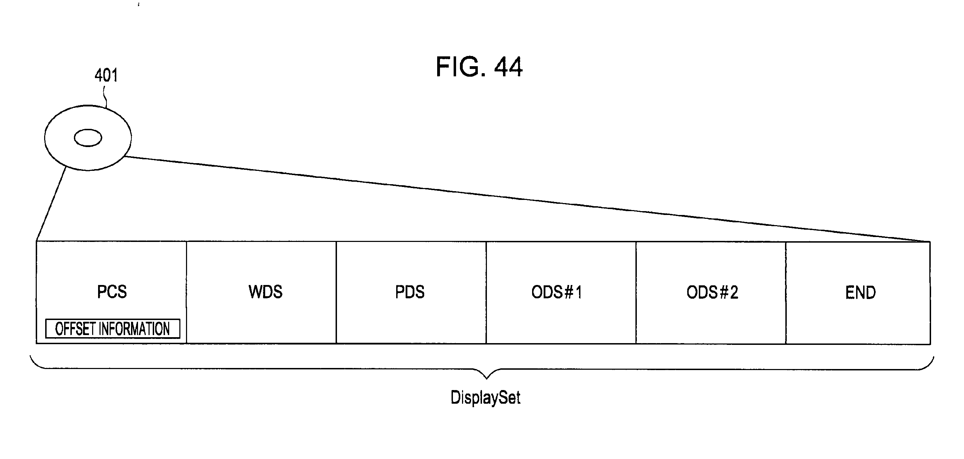

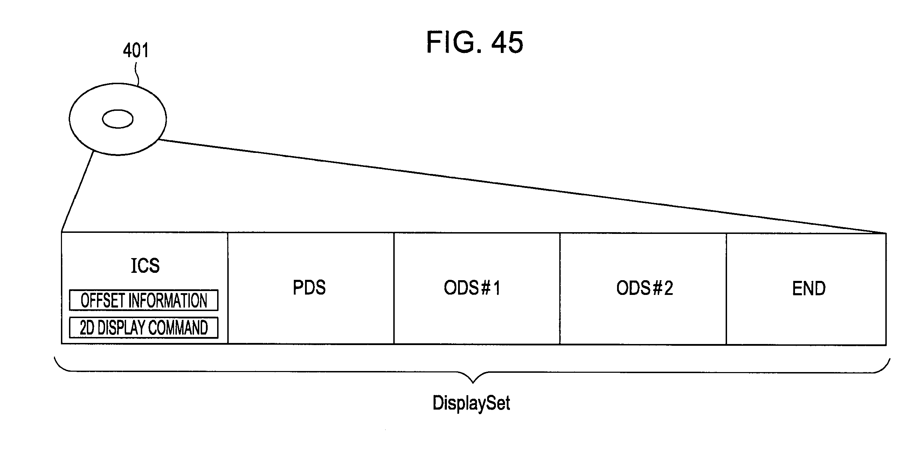

Fig. 44 is a diagram illustrating a configuration example of a display set of menu data according to a sixth embodiment of the disk to which the present invention is applied, and Fig. 45 is a diagram illustrating a configuration example of a display set of menu data.

As illustrated in Fig. 44, according to the disk 401, in the same manner as the disk 11, offset information in the unit of a picture is described in the PCS.

Also, as illustrated in Fig. 45, according to the disk 401, in the same manner as the disk 11, offset information in the unit of a picture is described in the ICS. Also, according to the disk 401, a command is described in ICS.

The command is a navigation command that changes the 3D-displayed caption or menu button to a 2D display. In the sixth embodiment of the present invention, by the command, the offset value in the unit of a picture of the caption or the menu button is disregarded.

That is, in the case of the caption, the offset value described in the PCS, the offset value for each plane set by the navigation command, and the offset value set for each ODS are disregarded. In the same manner, in the case of the menu button, the offset value described in the ICS, the offset value for each plane set by the navigation command, and the offset value set for each ODS are disregarded. If the offset value is set for each menu button by the navigation command, the corresponding value is disregarded, and thus the playback apparatus 410 (to be described later) 2D-displays the caption or menu that should be 3D-displayed.

As described above, since the command is described in the disk 401, the playback apparatus 410 can change the display of the caption or the menu button from the 3D display to the 2D display. In the same manner, if necessary, it is also possible to change the display of the caption or menu button from the 2D display to the 3D display again.

### [Detailed configuration example of a playback apparatus]

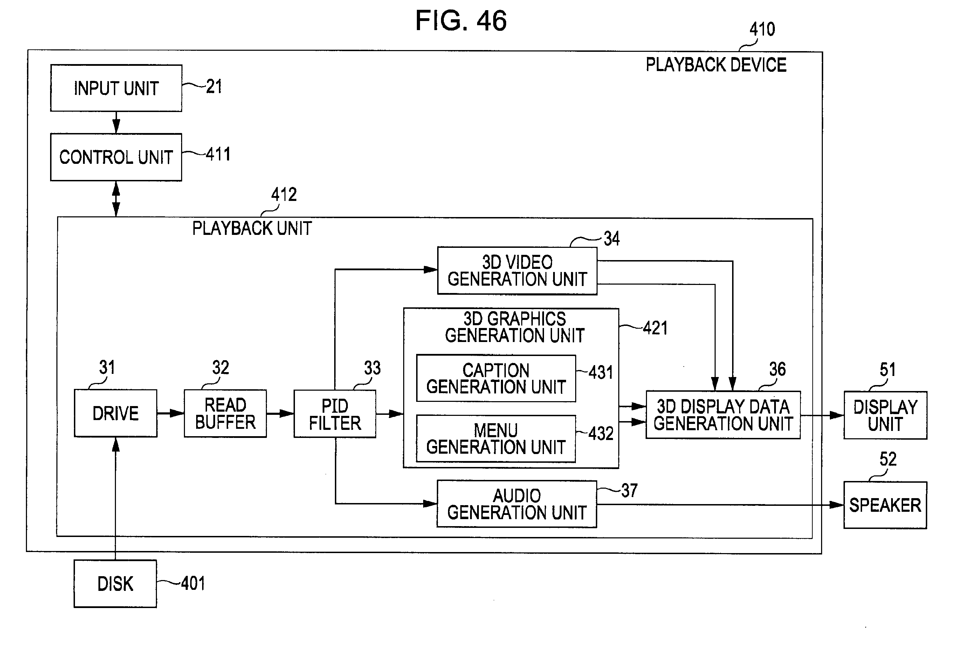

Fig. 46 is a block diagram illustrating a configuration example of a playback apparatus 410 that plays the disk 401.

The configurations as illustrated in Fig. 46, which are the same as the configurations of Fig. 13, are allocated with the same reference numerals, and the duplicate description thereof will be appropriately omitted.

The configurations of the playback apparatus 410 in Fig. 46 are different from the configurations of Fig. 13 on the point that a control unit 411 is installed instead of the control unit 22 and a playback unit 412 is installed instead of the playback unit 23. The configuration of the playback unit 412 is different from the configuration of Fig. 13 on the point that a 3D graphics generation unit 421 is installed instead of the 3D graphics generation unit 35.

The control unit 411 controls the playback unit 412 in accordance with the instruction from the input unit 21. Also, the control unit 411, in accordance with the instruction that corresponds to the manipulation of a menu button provided from the input unit 21, requests a command that corresponds to the menu button from the 3D graphics generation unit 421. Then, the control unit 411 supplies a command that nullifies the offset value in accordance with the command transmitted as the result of requesting the command to the 3D graphics generation unit 421.

The 3D graphics generation unit 421 is composed of a caption generation unit 431 and a menu generation unit 432. The caption generation unit 431 generates the right-eye caption data and the left-eye caption data on the basis of the offset information in the unit of a picture by using the PES packet of the caption data that is supplied from the PID filter 33. Also, the caption generation unit 431 supplies the right-eye caption data and the left-eye caption data to the 3D display data generation unit 36 as the 3D caption data. Depending upon the playback apparatus, if the command has already been received at this time, the playback apparatus may not reflect the offset value, and may make the right-eye caption data and the left-eye caption data equal to each other to perform the 2D processing. Hereinafter, it is exemplified that the 2D processing is performed after the 3D processing is once performed.

The caption generation unit 431 considers the offset value in the unit of a picture of the caption as 0 in accordance with the instruction transmitted from the control unit 411, and updates the offset value of the offset information in the unit of a picture of the caption.

The menu generation unit 432 generates the right-eye menu data and the left-eye menu data on the basis of the offset information in the unit of a picture by using the PES packet of the menu data supplied form the PID filter 33. Then, the menu generation unit 432 supplies the right-eye menu data and the left-eye menu data to the 3D display data generation unit 36 as the 3D menu data. Depending upon the playback apparatus, if the command has already been received at this time, the playback apparatus may not reflect the offset value, and may make the right-eye caption data and the left-eye caption data equal to each other to perform the 2D processing.

Also, the menu generation unit 432 transmits a command included in the ICS to the control unit 411 in accordance with the request for a command that corresponds to the 2D display button that is a menu button for instructing the 2D display from the control unit 411. Then, the menu generation unit 432 considers the offset value in the unit of a picture of the menu button as 0 in accordance with the instruction transmitted from the control unit 411, and updates the offset value of the offset information in the unit of a picture of the menu button.

### [Detailed configuration example of a caption generation unit]

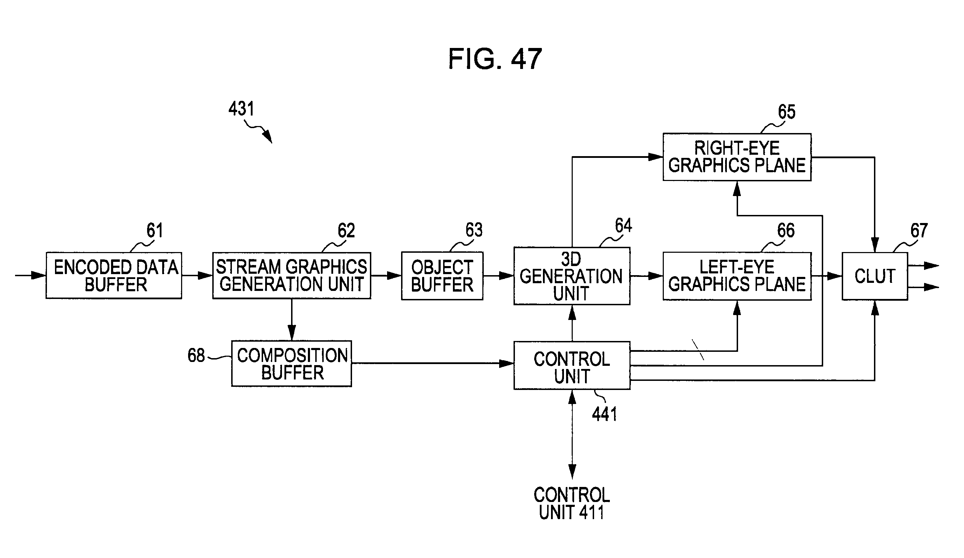

Fig. 47 is a block diagram illustrating a detailed configuration example of a caption generation unit 431 of the playback apparatus 410.

The configurations as illustrated in Fig. 47, which are the same as the configurations of Fig. 14, are allocated with the same reference numerals, and the duplicate description thereof will be appropriately omitted.

The configurations of the caption generation unit 431 in Fig. 47 are different from the configurations of Fig. 14 on the point that a control unit 441 is installed instead of the control unit 69.

The control unit 441, in the same manner as the control unit 69, reads the offset information in the unit of a picture included in the PCS supplied from the composition buffer 68, and supplies the read offset information to the 3D generation unit 64. Also, the control unit 441, in the same manner as the control unit 69, instructs the right-eye graphics plane 65 and the left-eye graphics plane 66 to transmit the right-eye caption object and the left-eye caption object, respectively, on timing based on the PTS included in the PES packet header. Further, the control unit 441, in the same manner as the control unit 69, reads the PDS from the composition buffer 68, and supplies the read PDS to the CLUT 67.

Also, the control unit 441 controls the respective units in accordance with the instruction from the control unit 441 (see Fig. 46).

Further, the control unit 441 receives the instruction that nullifies the offset value transmitted form the control unit 411. The control unit 411 takes 0 as a new offset value in the unit of a picture of the caption in accordance with the received command. The control unit 441 supplies the offset information including the offset value in the unit of a picture to the 3D generation unit 64.

### [Detailed configuration example of a menu generation unit]

The menu generation unit 432 of the playback apparatus 410 is configured in the same manner as the caption generation unit 431 of Fig. 47, except that the object to be processed is not the caption data, but is the menu data, and thus the illustration thereof will be omitted. However, the control unit of the menu generation unit 432, in accordance with the request for a command that corresponds to the 2D display button from the control unit 411, reads the command included in the ICS from the composition buffer, and transmits the read command to the control unit 411.

### [Explanation of processing of a playback apparatus]

The playback processing performed by the playback apparatus 410, the 3D graphics generation processing, and the caption generation processing are the same as the playback processing illustrated in Fig. 15, the 3D graphics generation processing illustrated in Fig. 16, and the caption generation processing illustrated in Fig. 17, respectively, and thus the explanation thereof will be omitted.

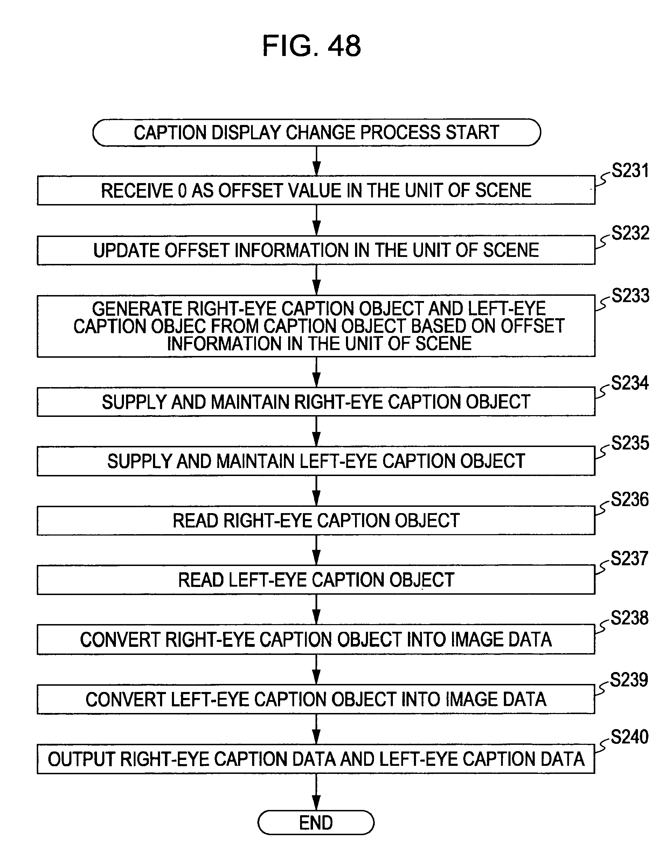

Fig. 48 is a flowchart illustrating the caption display change processing performed by the caption generation unit 431 of the playback apparatus 410. The caption display change processing starts when the control unit 411 transmits the instruction that nullifies the offset value in accordance with the instruction corresponding to the manipulation of the 2D display button from the input unit 21.

In step S233 of Fig. 48, the control unit 441 receives 0 as the offset value in the unit of a picture of the caption from the control unit 411 (i.e. receives the instruction that nullifies the offset value).

In step S232, the control unit 441, in accordance with the instruction received from the control unit 411, considers the offset value in the unit of a picture of the caption as 0, and updates the offset information in the unit of a picture. Then, the control unit 441 supplies the offset information after update to the 3D generation unit 64, and makes the processing proceed to step S233.

In step S233, the 3D generation unit 64 generates the right-eye caption object and the left-eye caption object from the caption object on the basis of the offset information in the unit of a picture supplied from the control unit 441, and makes the processing proceed to step S234. The processing in steps S234 to S240 is the same as the processing in steps S67 to S73 of Fig. 17, and thus the explanation thereof will be omitted.

In this case, the menu display change processing performed by the menu generation unit 432 is the same as the caption display change processing in Fig. 48 except that the object to be processed is not the caption data, but is the menu data, and thus the explanation thereof will be omitted.

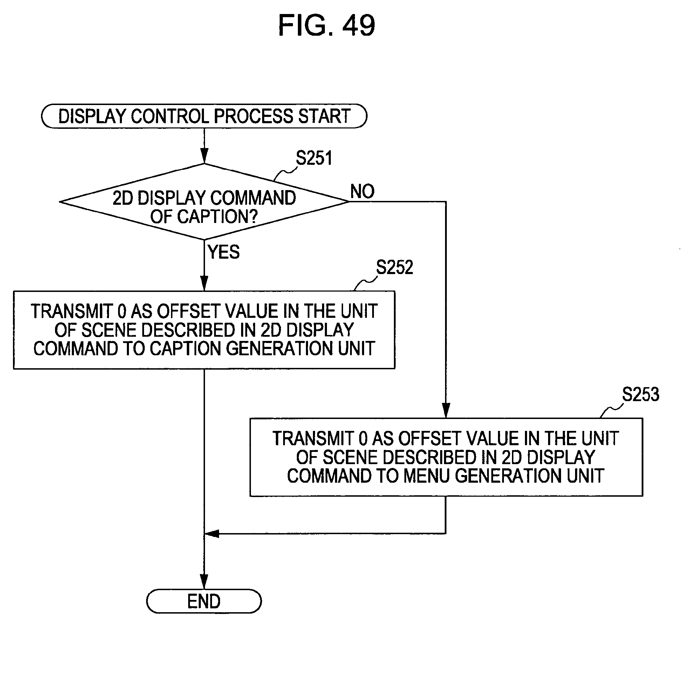

Fig. 49 is a flowchart illustrating the details of the display control processing performed by the playback apparatus 410. This display control processing starts when the control unit 411 requests the command that corresponds to the 2D display button from the menu generation unit 432 in accordance with the instruction corresponding to the manipulation of the 2D display button from the input unit 21.

In step S251 of Fig. 49, the control unit 411 determines whether the command transmitted from the menu generation unit 432 is the command of the caption in accordance with the request. If it is determined that the command is the command of the caption in step S251, the control unit 411 transmits 0 that is the offset value in the unit of a picture of the caption described in the command of the caption to the caption generation unit 431 in step S252. That is, the control unit 411 supplies the instruction that nullifies the offset value to the caption generation unit 431. Then, the processing is ended.

On the other hand, if it is determined that the command is not the command of the caption in step S251, i.e. if the command of the menu button is transmitted from the menu generation unit 432, the processing proceeds to step S253. In step S253, the control unit 411 transmits 0 that is the offset value in the unit of a picture of the menu button described in the command of the menu button to the menu generation unit 432. That is, the control unit 411 supplies the instruction that nullifies the offset value in the unit of a picture of the menu button to the menu generation unit 432. Then, the processing is ended.

### <Seventh embodiment>

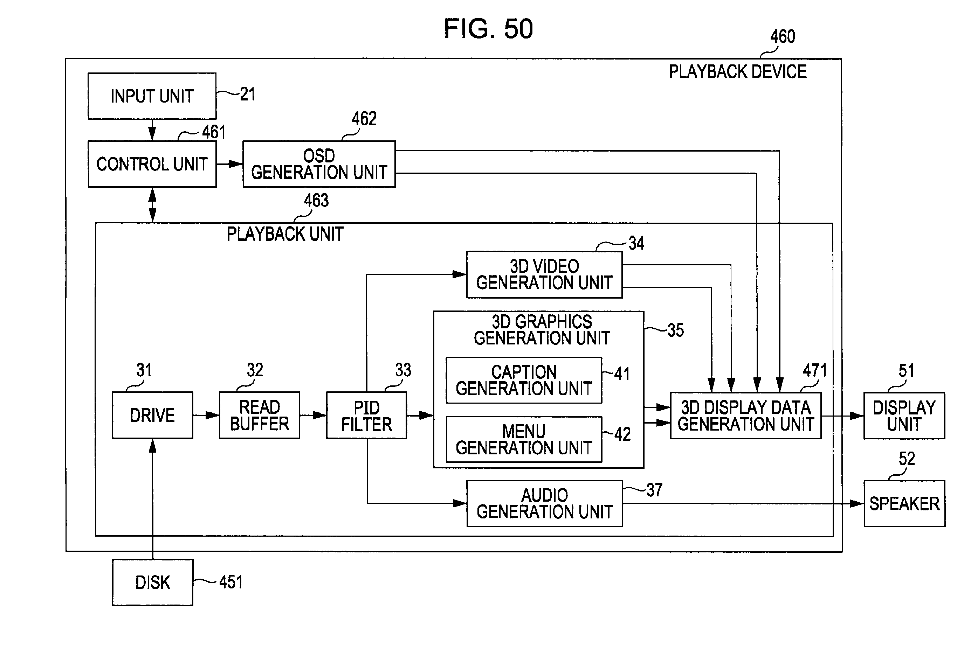

Fig. 50 is a block diagram illustrating a configuration example of a playback apparatus that plays the disk according to a seventh embodiment of the present invention.

The configurations as illustrated in Fig. 50, which are the same as the configurations of Fig. 13, are allocated with the same reference numerals, and the duplicate description thereof will be appropriately omitted.

The configurations of the playback apparatus 460 in Fig. 50 are different from the configurations of Fig. 13 on the point that a control unit 461 is installed instead of the control unit 22, an OSD generation unit 462 is newly installed, and a playback unit 463 is installed instead of the playback unit 23. The configuration of the playback unit 463 is different from the configuration of Fig. 13 on the point that a 3D display data generation unit 471 is installed instead of the 3D display data generation unit 36.

The playback apparatus 460 is a playback apparatus that plays the disk 451. According to the disk 451, the foremost 3D display based on the offset information among the offset information described in the disk 451 is described in the index file as the maximum offset information. The playback apparatus 460 displays the OSD (On Screen Display) image such as a menu inherent to the playback apparatus 460 on the foremost side.

Specifically, the control unit 461 controls the playback unit 463 according to the instruction from the input unit 21. For example, the control unit 461 controls the drive 31 according to the OSD display instruction from the input unit 21 to read the maximum offset information described in the index file of the disk 451, and supplies the read maximum offset information to the OSD generation unit 462.

The OSD generation unit 462 generates OSD image data from predetermined OSD image data stored in a memory (not illustrated) built in the playback apparatus 460 on the basis of the maximum offset information supplied from the control unit 461. The playback apparatus 460 may maintain the right-eye and left-eye image data in order to 3D-display the OSD in a storage region of the memory in the playback apparatus 460. Hereinafter, it is exemplified that the OSD is 3D-displayed.

Specifically, the OSD generation unit 462 takes the predetermined OSD image data stored in the memory as the left-eye OSD image data. Also, the OSD generation unit 462 generates the OSD image data of the OSD image obtained as the result of making the OSD image that corresponds to the left-eye OSD image data disparity as large as the value larger than the offset value in the offset direction of the maximum offset information. Then, the OSD generation unit 462 takes the OSD image data as the right-eye image data. The OSD generation unit 462 supplies the right-eye OSD image data and the left-eye OSD image data to the 3D display data generation unit 471 of the playback unit 463 as the 3D OSD image data.

The 3D display data generation unit 471 synthesizes the 3D video data from the 3D video generation unit 34, the 3D caption data and the 3D menu data from the 3D graphics generation unit 35, and the 3D OSD image data from the OSD generation unit 462. The 3D display data generation unit 471 supplies the left-eye display data and the right-eye display data obtained as the result of synthesis to the display unit 51 as the 3D display data.

### [Explanation of processing of a playback apparatus]

The playback processing performed by the playback apparatus 460, the 3D graphics generation processing, and the caption generation processing are the same as the playback processing illustrated in Fig. 15, the 3D graphics generation processing illustrated in Fig. 16, and the caption generation processing illustrated in Fig. 17, respectively, and thus the explanation thereof will be omitted.

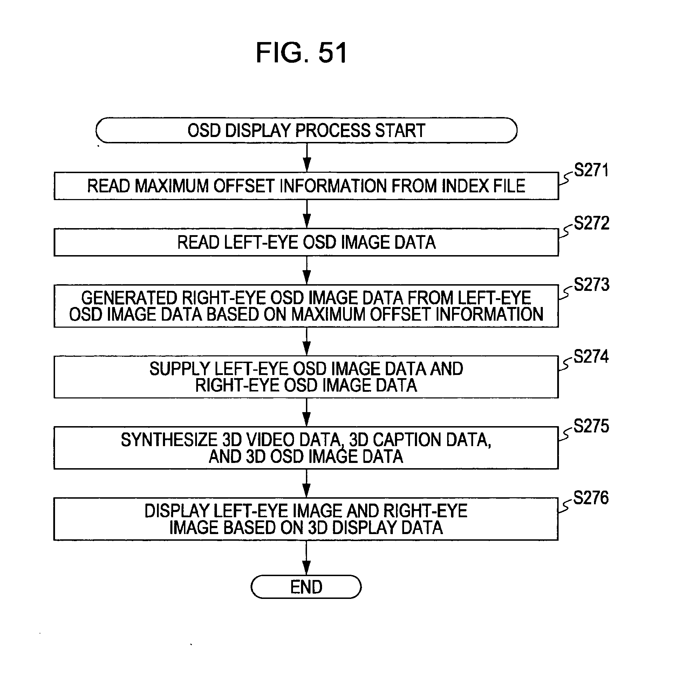

Fig. 51 is a flowchart illustrating the OSD display processing performed by the playback apparatus 460. The OSD display processing starts when the display of the OSD image is ordered from the input unit 21.

In step S271 of Fig. 51, the control unit 461 controls the drive 31 to read the maximum offset information form the index file of the disk 451, and supplies the read maximum offset information to the OSD generation unit 462.

In step S272, the OSD generation unit 462 reads the predetermined OSD image data from the memory (not illustrated) as the left-eye OSD image data. In step S273, the OSD generation unit 462 generates the right-eye OSD image data from the left-eye OSD image data on the basis of the maximum offset information.

In step S274, the OSD generation unit 462 supplies the left-eye OSD image data and the right-eye OSD image data to the 3D display data generation unit 471 as the 3D OSD image data. In step S275, the 3D display data generation unit 471 synthesizes the 3D video data from the 3D video generation unit 34, the 3D caption data and the 3D menu data from the 3D graphics generation unit 35, and the 3D OSD image data from the OSD generation unit 462. The 3D display data generation unit 471 supplies the left-eye display data and the right-eye display data obtained as the result of synthesis to the display unit 51 as the 3D display data.

In step S276, the display unit 51 alternately or simultaneously displays the left-eye image corresponding to the left-eye display data and the right-eye image corresponding to the right-eye display data on the basis of the 3D display data supplied form the 3D display data generation init 471. Then, the processing is ended.

As described above, since the maximum offset information is described in the disk 451, the playback apparatus 460 displays the OSD image on the foremost side on the basis of the maximum offset information. Accordingly, a user can clearly perform visual recognition of the OSD image.

Also, since the maximum offset information is described in the index file of the disk 451, the display position in the depth direction of the OSD image in a one-sheet disk 451 can be kept constant. As a result, a user's confusion caused by the change of the display position in the depth direction of the OSD image can be prevented.

In this case, in the index file, the offset value based on the maximum offset information rather than the maximum offset information may be described. For example, in the index file, an offset value of which the offset direction is limited to the positive direction, such as the display position that is ahead of the 3D display position, may be described. In this case, for example, if the offset direction of the maximum offset information is a negative direction, 0 is described in the index file as the offset value.

### <Eighth embodiment>

### [Configuration example of a display set according to an eighth embodiment of the disk]

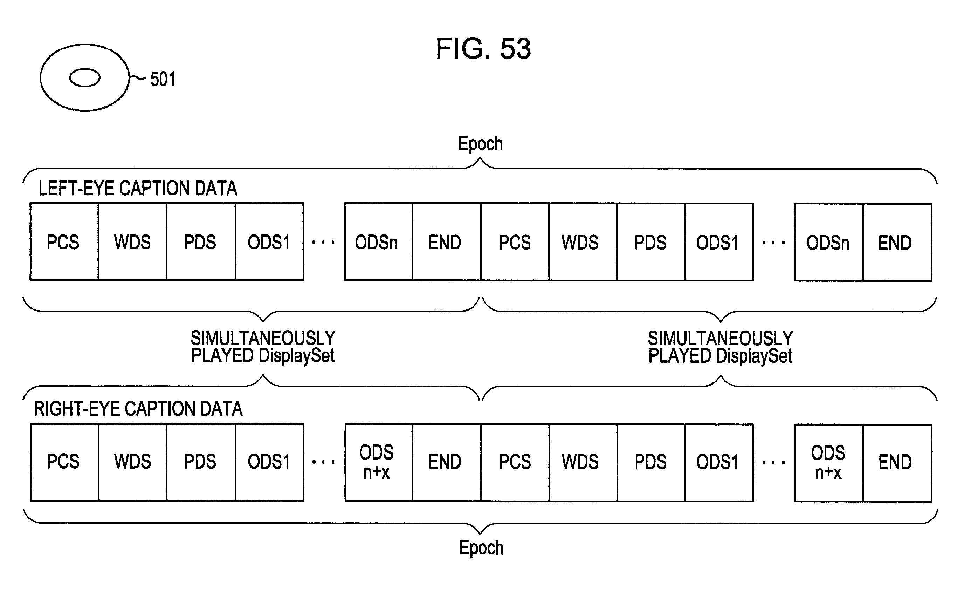

Fig. 53 is a diagram illustrating a configuration example of an epoch of the caption data according to the eighth embodiment of the disk to which the present invention is applied.

In the disk 501 of Fig. 53, two AV streams of the left-eye AV stream and the right-eye AV stream are recorded. As illustrated in Fig. 53, the structures of epoch of the left-eye AV stream and the right-eye AV stream that are simultaneously played are the same. That is, the number of display sets of the left-eye epoch is equal to the number of display sets of the right-eye epoch, which are simultaneously played.

Also, between the left-eye display set and the right-eye display set which are simultaneously played, the PTS of the respective segments are the same. Accordingly, the display timing of the left-eye caption and the right-eye caption can be simultaneously set.

The PTS included in the PES packet header of the PCS is requested on the basis of the decoding time of the ODS corresponding to the PCS, time for portraying the caption, and time for portraying a window corresponding to ODS. Accordingly, between the left-eye display set and the right-eye display set which are simultaneously played, the size in length and width of the caption corresponding to the ODS of the same sub-image ID is equal to the size in length and width of the window of the same window ID. Accordingly, the PTS included in the PES packet header of the PCS can be synchronized between the left-eye display set and the right-eye display set without inconsistency.

Also, between the left-eye display set and the right-eye display set which are simultaneously played, the sub-image ID and the window ID are the same. Accordingly, since the images corresponding to the same caption are simultaneously displayed, the user can see the 3D caption.

Further, between the left-eye display set and the right-eye display set which are simultaneously played, the numbers of segments except for the ODS are the same, and the DTSs of the respective segments are the same.

Also, the shape of the caption or menu button that corresponds to the same sub-image ID may differ. Also, PDS may also differ.

Since the structure of epoch of menu data and the relations between the left-eye display set and the right-eye display set which are simultaneously played are the same except that the PCS replaces the ICS, the explanation thereof will be omitted.

However, if the menu button is animated at a constant frame rate during a user's selection, it is necessary to make the frame rates of animation of the left-eye menu button and the right-eye menu button equal to each other. Accordingly, between the left-eye display set and the right-eye display set corresponding to the menu button, fields for determining the frame rates of the animation included in the ICS are set to be equal to each other. Accordingly, since the left-eye menu button and the right-eye menu button are animated at a constant frame rate, the user can see the 3D menu button animated at a constant frame rate.

Also, if a slide-in or the like by the animation, which is called an effect, is performed at the start of menu button display, it is necessary to make the number of pictures of animation and the interval equal to each other, respectively. Accordingly, between the left-eye display set and the right-eye display set that correspond to the menu button, fields for describing the number and interval of animation during the effect included in the ICS are set to be equal to each other. Accordingly, since the left-eye menu button and the right-eye menu button are effected accordingly, the user can see the effected 3D menu button.

### [Explanation of a window]

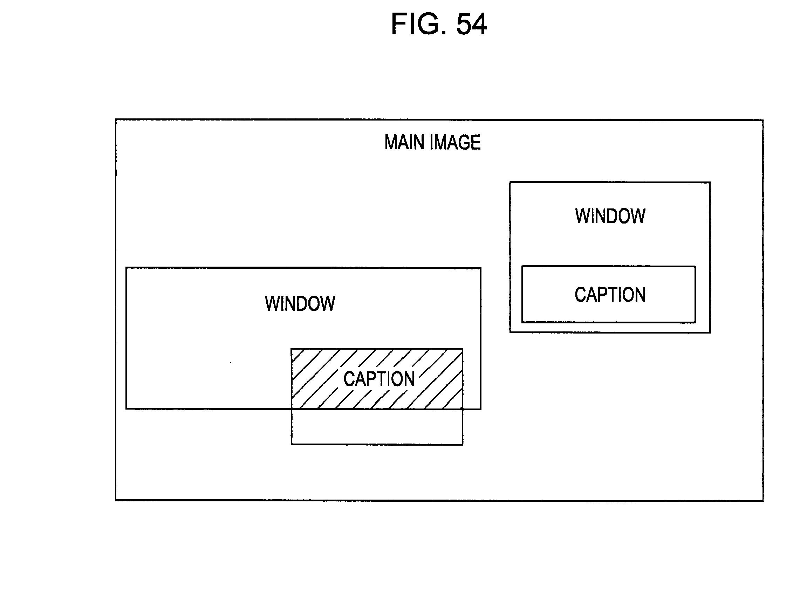

Fig. 54 is a diagram illustrating a window corresponding to a display set of caption data.

As illustrated in Fig. 54, in the screens corresponding to the respective display sets of the caption data, not more than two windows are arranged without being overlapping. The caption corresponding to the ODS is displayed only on a region within the window. Accordingly, the caption displayed in the left-side window in the screen of Fig. 54 is displayed only in the region indicated by slanting lines in the window, and other parts are not displayed.

### [Configuration example of a playback apparatus]

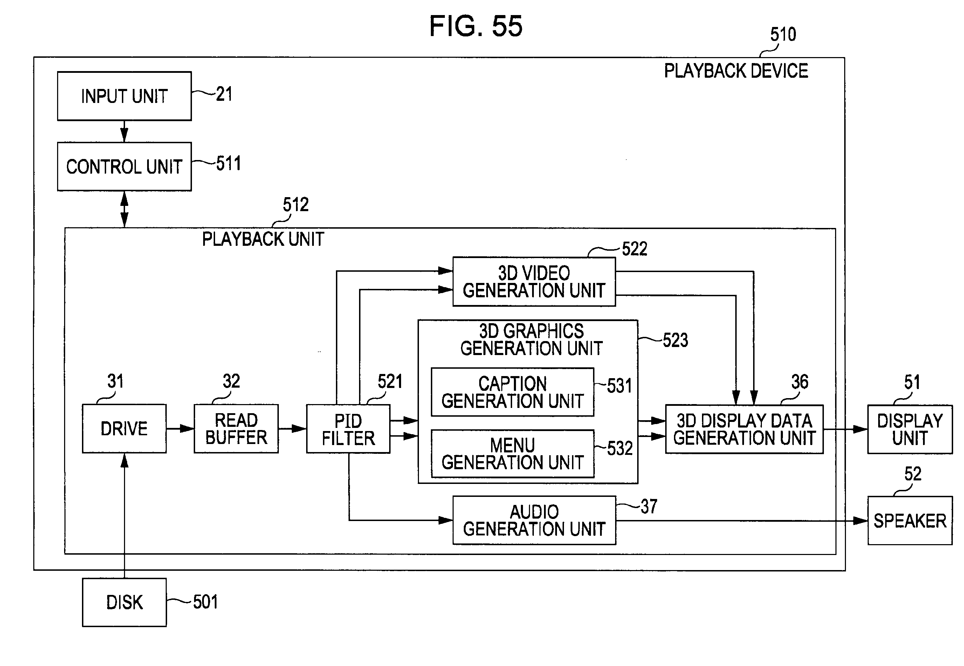

Fig. 55 is a block diagram illustrating a configuration example of a playback apparatus 510 that plays the disk 501.

The configurations as illustrated in Fig. 55, which are the same as the configurations of Fig. 13, are allocated with the same reference numerals, and the duplicate description thereof will be appropriately omitted.

The configurations of the playback apparatus 510 in Fig. 55 are different from the configurations of Fig. 13 on the point that a control unit 511 is installed instead of the control unit 22 and a playback unit 512 is installed instead of the playback unit 23. The configuration of the playback unit 512 is different from the configuration of Fig. 13 on the point that a PID filter 521, a 3D video generation unit 522, and a 3D graphics generation unit 523 are installed instead of the PID filter 33, the 3D video generation unit 34, and the 3D graphics generation unit 35.

The control unit 511 controls the playback unit 512 in accordance with the instruction from the input unit 21. For example, the control unit controls the drive 31 of the playback unit 512 to read an index file, a movie object file, a play list file, a clip information file, and the like, from the disk 501. Also, the control unit 511 recognizes packets of the packet numbers of the left-eye AV stream and the right-eye AV stream based on the read clip information file. Also, the control unit 511 controls the drive 31 to read the left-eye AV stream and the right-eye AV stream composed of the packets.

The PID filter 521 extracts the PES packets of the left-eye video data and left-eye caption data included in the left-eye AV stream on the basis of the PIDs of the respective packets of the left-eye AV stream supplied from the read buffer 32. Also, the PID filter 521 extracts the PES packets of the left-eye menu data and audio data included in the left-eye AV stream on the basis of the PIDs of the respective packets of the left-eye AV stream.

The PID filter 521 extracts the PES packets of the right-eye video data and right-eye caption data included in the right-eye AV stream on the basis of the PIDs of the respective packets of the right-eye AV stream supplied from the read buffer 32. Also, the PID filter 521 extracts the PES packets of the right-eye menu data included in the right-eye AV stream on the basis of the PIDs of the respective packets of the right-eye AV stream.

The 3D video generation unit 522 decodes the PES packet of the left-eye video data and the PES packet of the right-eye video data supplied from the PID filter 521. Also, the 3D video generation unit 522 supplies the left-eye video data and the right-eye video data obtained as the result of decoding to the 3D display data generation unit 36 as the 3D video data.

The 3D graphics generation unit 523 is composed of a caption generation unit 531 and a menu generation unit 532. The caption generation unit 531 decodes the PES packets of the left-eye caption data and the right-eye caption data supplied from the PID filter 521. Then, the caption generation unit 531 supplies the right-eye caption data and the left-eye caption data obtained as the result of decoding to the 3D display data generation unit 36 as the 3D caption data.

The menu generation unit 532 decodes the PES packets of the left-eye menu data and the right-eye menu data supplied from the PID filter 521. Also, the menu generation unit 532 supplies the left-eye menu data and the right-eye menu data obtained as the result of decoding to the 3D display data generation unit 36 as the 3D menu data.

### [Detailed configuration example of a caption generation unit]

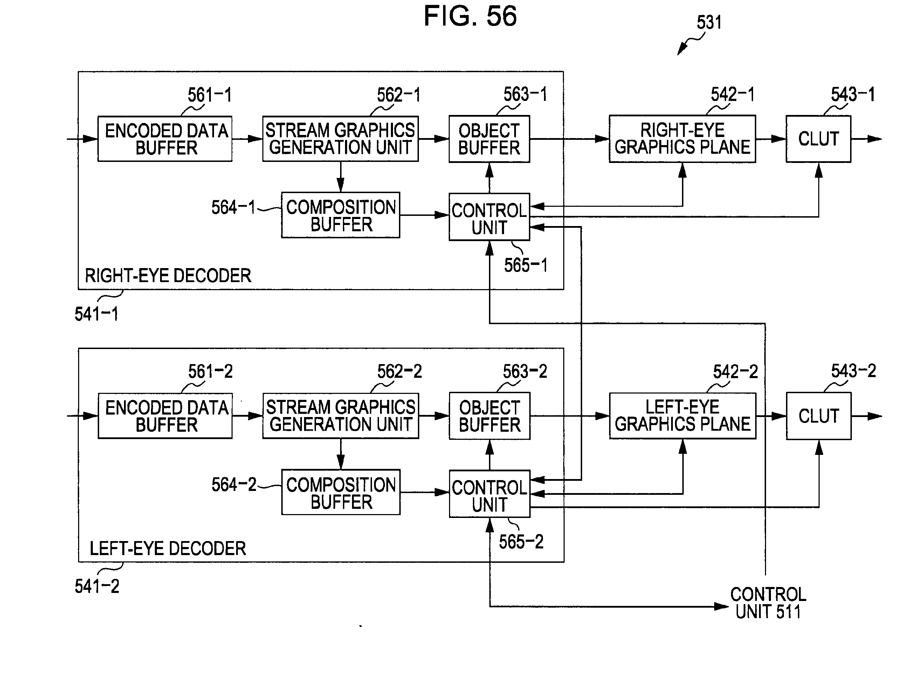

Fig. 56 is a block diagram illustrating a detailed configuration example of a caption generation unit 531 of Fig. 55.

In Fig. 55, the caption generation unit 531 is composed of a right-eye decoder 541-1, a left-eye decoder 541-2, a right-eye graphics plane 542-1, a left-eye graphics plane 542-2, a CLUT 543-1, and a CLUT 543-2.

The right-eye decoder 541-1 is composed of en encoded data buffer 561-1, a stream graphics generation unit 562-1, an object buffer 563-1, a composition buffer 564-1, and a control unit 565-1.

The encoded data buffer 561-1 maintains the segments of the PES packets of the right-eye caption data supplied form the PID filter 521. The encoded data buffer 561-1 reads the maintained segments and supplies the read segments to the stream graphics generation unit 562-1.

The stream graphics generation unit 562-1 decodes the ODS supplied from the encoded data buffer 561-1. Also, the stream graphics generation unit 562-1 supplies the right-eye caption data in an uncompressed state composed of index colors obtained as the result of decoding to the object buffer 563-1 as the right-eye caption object. Also, the stream graphics generation unit 562-1 supplies the PDS, PCS, and WDS supplied from the encoded data buffer 561-1 to the composition buffer 564-1.

The object buffer 563-1 maintains the right-eye caption object supplied from the stream graphics generation unit 562-1. The object buffer 563-1 deletes the maintained right-eye caption object in the unit of an epoch. Also, the object buffer 563-1, under the control of the control unit 565-1, reads the maintained right-eye caption object, and supplies the read right-eye caption object to the right-eye graphics plane 542-1.

The composition buffer 564-1 maintains the PDS, PCS, and WDS supplied from the stream graphics generation unit 562-1.

The control unit 565-1 monitors the storage state of the right-eye caption object for one picture by the right-eye graphics plane 542-1, and reports the completion of the storage of the right-eye caption object for one picture to the control unit 565-2. The control unit 565-1 instructs the right-eye graphics plane 542-1 to perform the transmission on the basis of the PTS included in the PES packet header or the report of the completion of the storage of the left-eye caption object from the control unit 565-2. Further, the control unit 565 reads the PDS from the composition buffer 564 and supplies the read PDS to the CLUT 543-1.

Also, the control unit 565-1 controls the respective units according to the instruction from the control unit 511 (see Fig. 55).

The left-eye decoder 541-2 is composed of an encoded data buffer 561-2, a stream graphics generation unit 562-2, an object buffer 563-2, a composition buffer 564-2, and a control unit 565-2. Since the left-eye decoder 541-2 is configured in the same manner as the right-eye decoder 541-1, and performs the same processing except that the object to be processed is the left-eye caption data, the explanation thereof will be omitted.

The right-eye graphics plane 542-1 maintains the right-eye caption object for one picture supplied from the object buffer 563-1. The right-eye graphics plane 542-1 deletes the right-eye caption object maintained in the unit of an epoch. Also, the right-eye graphics plane 542-1, in accordance with the instruction of transmission from the control unit 565-1, reads the maintained right-eye caption object, and supplies the read right-eye caption object to the CLUT 543-1.

The left-eye graphics plane 542-2 maintains the left-eye caption object for one picture supplied from the object buffer 563-2. The left-eye graphics plane 542-2 deletes the left-eye caption object maintained in the unit of an epoch. Also, the left-eye graphics plane 542-2, in accordance with the instruction of transmission from the control unit 565-2, reads the maintained left-eye caption object, and supplies the read left-eye caption object to the CLUT 543-2.

The CLUT 543-1 stores a table in which the index colors correspond to Y, Cr, and Cb values on the basis of the PDS supplied from control unit 565-1. The CLUT 543-1 converts the index colors of the right-eye caption object supplied from the right-eye graphics plane 542-1 into image data composed of Y, Cr, and Cb values on the basis of the stored table. Then, the CLUT 543-1 supplies the image data to the 3D display data generation unit 36 as the right-eye caption data.

The CLUT 543-2 stores a table in which the index colors correspond to Y, Cr, and Cb values on the basis of the PDS supplied from control unit 565-2. The CLUT 543-2 converts the index colors of the left-eye caption object supplied from the left-eye graphics plane 542-2 into image data composed of Y, Cr, and Cb values on the basis of the stored table. Then, the CLUT 543-2 supplies the image data to the 3D display data generation unit 36 as the left-eye caption data.

As described above, in the caption generation unit 531, the object buffer 563-1, the object buffer 563-2, the right-eye graphics plane 542-1, and the left-eye graphics plane 542-2 are cleared in the unit of an epoch. However, in the disk 401, since the same number of display sets constituting the epoch exists in the AV streams of the right-eye AV stream and in the left-eye AV stream, it is not possible that only one display of the right-eye caption and the left-eye caption is stopped. As a result, the caption can be three-dimensionally displayed.

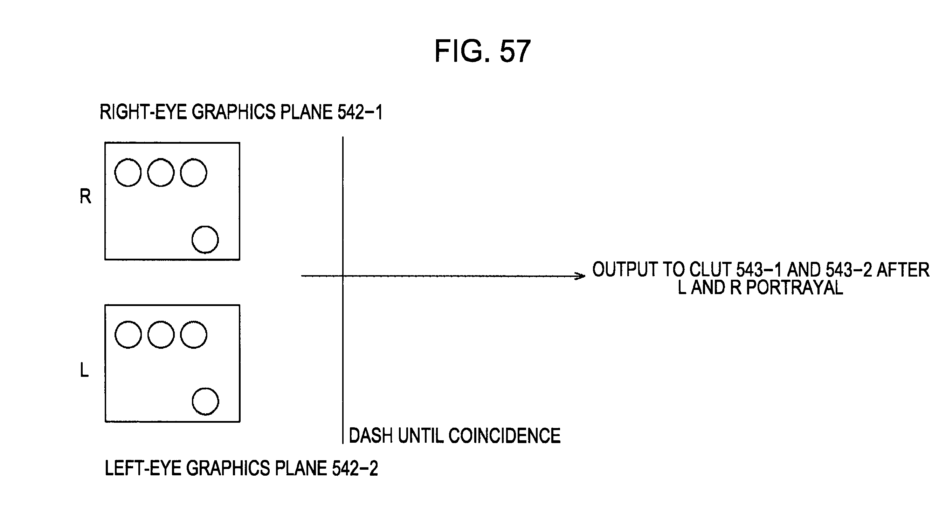

Fig. 57 is a diagram illustrating the transmission instruction based on the completion report by the control units 565-1 and 565-2.

The control unit 565-1 monitors the storage state of the right-eye caption object for one picture by the right-eye graphics plane 542-1. If the storage of the right-eye caption object for one picture is completed by the right-eye graphics plane 542-1, the control unit 565-1 reports the completion to the control unit 565-2.

The control unit 565-1 waits for the completion report from the control unit 565-2. That is, as illustrated in Fig. 57, the control unit 565-1 waits for until the right-eye caption object for one picture and the left-eye caption object for one picture coincide with the right-eye graphics plane 542-1 and the left-eye graphics plane 542-2, respectively. The control unit 565-1, once the completion report is received, instructs the right-eye graphics plane 542-1 to perform the transmission.

In the same manner, the control unit 565-2 monitors the storage state of the left-eye caption object for one picture by the left-eye graphics plane 542-2. If the storage of the left-eye caption object for one picture is completed by the left-eye graphics plane 542-2, the control unit 565-2 reports the completion to the control unit 565-1.

The control unit 565-2 waits for the completion report from the control unit 565-1. The control unit 565-2, once the completion report is received from the control unit 565-1, instructs the left-eye graphics plane 542-2 to perform the transmission.

As described above, in the playback apparatus 510, the right-eye caption object for one picture and the left-eye caption object for one picture are transmitted after they coincide with the right-eye graphics plane 542-1 and the left-eye graphics plane 542-2, respectively.

In the embodiment of the present invention, the transmission from the right-eye graphics plane 542-1 and the left-eye graphics plane 542-2 is synchronized. However, the transmission from the CLUT 543-1 and the CLUT 543-2 may be synchronized.

### [Detailed configuration example of a menu generation unit]

Although the illustration is omitted, the menu generation unit 532 is configured in the same manner as the caption generation unit 531 of Fig. 56 except that the object to be processed is not the caption data, but is the menu data.

Accordingly, even in the menu generation unit 532, the right-eye caption object for one picture and the left-eye caption object for one picture are transmitted after they coincide with the right-eye graphics plane 542-1 and the left-eye graphics plane 542-2, respectively.

Accordingly, even in the case of changing the screen structure, an emphasis display according to the selection of a menu button, deleting the menu button, not performing the display on timing based on the PTS such as an additional display of the menu button, and the like, the 3D display of the menu button can be clearly performed.

### [Processing of a playback apparatus]

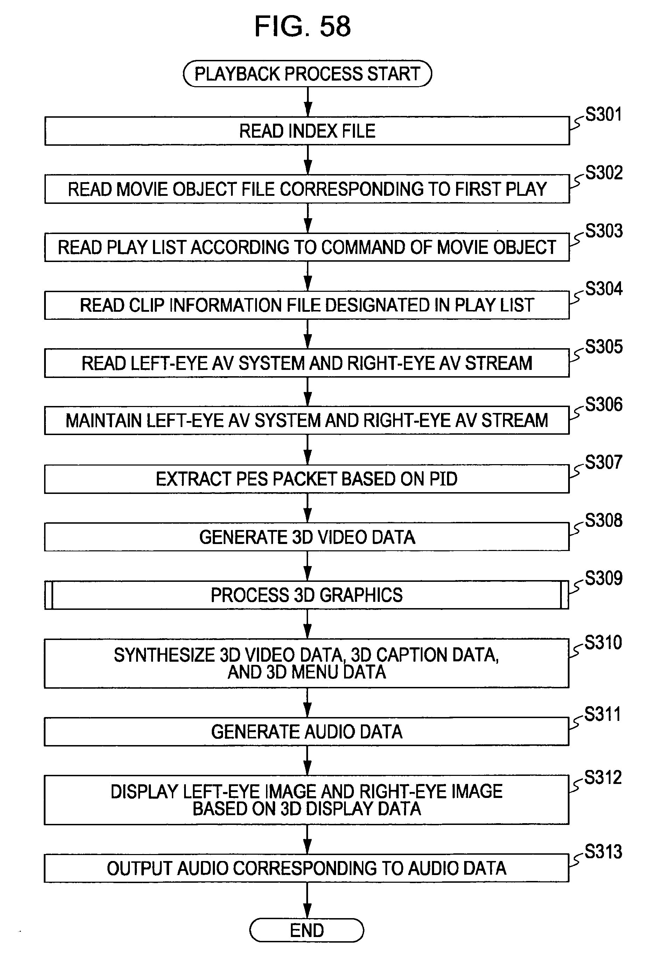

Fig. 58 is a flowchart illustrating a playback processing by a playback apparatus 510. The playback processing starts, for example, when the disk 501 is mounted on the drive 31.

The processing in steps S301 to S304 in Fig. 58 is the same as the processing in steps S11 to S14 in Fig. 15, and thus the explanation thereof will be omitted.

After the processing in step S304, the control unit 511 recognizes the packet number of the left-eye AV stream and the right-eye AV stream to be played on the basis of the play list and the clip information file. Also, the control unit 511 instructs the drive 31 to play the left-eye AV stream and the right-eye AV stream composed of packets of the packet numbers to be played.

Then, in step S305, the drive 31, in accordance with the instruction from the control unit 511, reads the left-eye AV stream and the right-eye AV stream to be played from the disk 501, and supplies the read AV streams to the read buffer 32. In step S306, the read buffer 32 maintains the left-eye AV stream and the right-eye AV stream supplied from the drive 31.

In step S307, the PID filter 521 extracts the PES packets on the basis of the PIDs of the respective packets of the left-eye AV stream and the right-eye AV stream from the read buffer 32.

Specifically, the PID filter 521 extracts the PES packets of the left-eye video data, left-eye caption data, left-eye menu data, and audio data on the basis of the PIDs of the respective packets of the left-eye AV stream. Also, the PID filter 521 extracts the PES packets of the right-eye video data, right-eye caption data, and right-eye menu data on the basis of the PIDs of the respective packets of the right-eye AV stream.

In step S308, the 3D video generation unit 522 decodes the left-eye video data and the right-eye video data supplied from the PID filter 521, and generates the 3D video data.

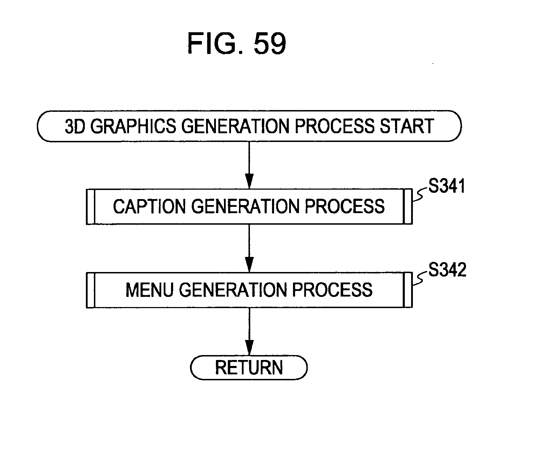

In step S309, the 3D graphics generation unit 523 generates the 3D caption data using the left-eye and right-eye caption data, and performs the 3D graphics generation processing that generates the 3D menu data using the left-eye and right-eye menu data. The details of the 3D graphics generation processing will be described later with reference to Fig. 59.

After the processing in step S309, the processing proceeds to step S310. The processing in steps S310 toe S313 is the same as the processing in steps S20 to S23, and thus the explanation thereof will be omitted.

In this case, in Fig. 58, the playback processing just after the mounting of the disk 501 has been described. However, the same playback processing is performed when the title corresponding to the movie object file except for the first play is played after the mounting of the disk 501. In this case, however, the movie object file read in step S302 is a movie object file corresponding to the title number of the title to be played in the index file.

Fig. 59 is a flowchart illustrating the details of the 3D graphics generation processing in step S309 of Fig. 58.

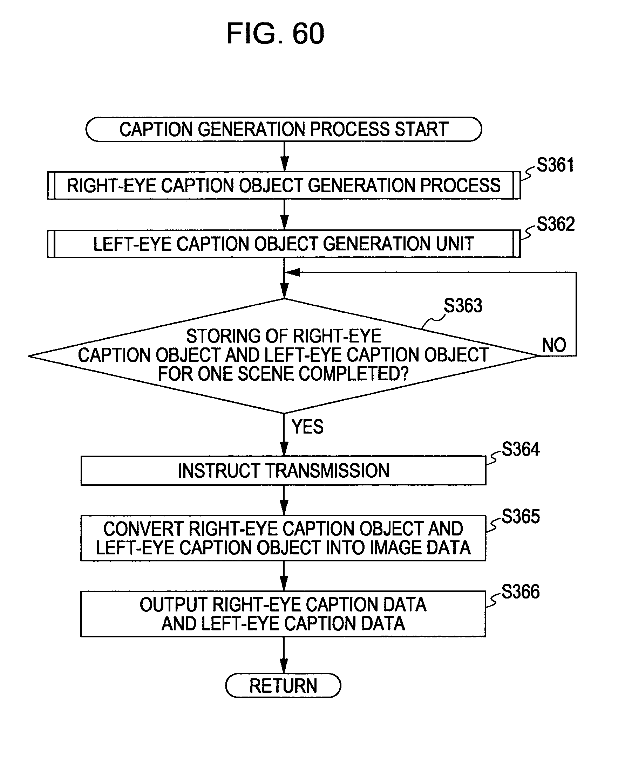

In step S341 of Fig. 59, the caption generation unit 531 performs the caption generation processing that generates the 3D caption data using the PES packets of the left-eye caption data and the right-eye caption data. The details of the caption generation processing will be described later with reference to Fig. 60.

In step S342, the menu generation unit 532 performs the menu generation processing that generates the 3D menu data using the PES packets of the menu data of the left-eye menu data and the right-eye menu data, and makes the processing proceed to step S309 in Fig. 59. Then, the processing after the step S310 is performed.

Fig. 60 is a flowchart illustrating the details of the caption generation processing in step S341 of Fig. 59.

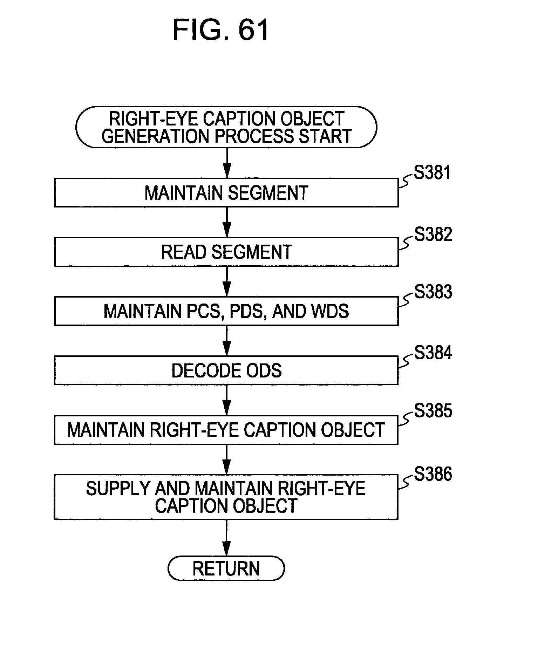

In step S361 of Fig. 60, the right-eye decoder 541-1 performs the right-eye caption object generation processing that generates the right-eye caption object using the PES packets of the right-eye caption data from the PID filter 521. The details of the right-eye caption object generation processing will be described with reference to Fig. 61.

In step S362, the left-eye decoder 541-2 performs the left-eye caption object generation processing that generates the left-eye caption object using the PES packets of the left-eye caption data from the PID filter 521.

In step S363, the control units 565-1 and 565-2 determines whether the storage of the right-eye caption object and the left-eye caption object for one picture is completed. Specifically, the control units 565-1 and 565-2 completes the storage of one picture by the object buffers 563-1 and 563-2, and the control units 565-2 and 565-1 determines whether the storage completion of one picture has been reported by the object buffer 563-1 and 563-2.

In step S363, if it is determined that the storage of the right-eye caption object and the left-eye caption object for one picture has not yet been completed, the control units wait for until the storage is completed.

On the other hand, if it is determined that the storage of the right-eye caption object and the left-eye caption object for one picture has been completed in step S363, the control units 565-1 and 565-2 instructs the object buffers 563-1 and 563-2 to transmit the caption objects in step S364. Accordingly, the right-eye caption object for one picture and the left-eye caption object for one picture, which are maintained in the object buffers 563-1 and 563-2 are transmitted to the right-eye graphics plane 542-1 and the left-eye graphics plane 542-2, respectively.

In step S365, the CLUT 543-1 and CLUT 543-2 converts the right-eye caption object from the right-eye graphics plane 542-1 and the left-eye caption object from the left-eye graphics plane 542-2 into image data, respectively.

In step S366, the CLUT 543-1 outputs the right-eye caption data obtained as the result of conversion in step S365 to the 3D display data generation unit 36, and the CLUT 543-2 outputs the left-eye caption data obtained as the result of conversion to the 3D display data generation unit 36. Then, the processing returns to step S341 in Fig. 59, and then proceeds to step S342.

In this case, the menu generation processing in step S342 of Fig. 59 is the same as the caption generation processing of Fig. 60 except that the object to be processed is not the caption data, but is the menu data, and thus the explanation thereof will be omitted.

Fig. 61 is a flowchart illustrating the details of the right-eye caption object generation processing in step S361 of Fig. 60.

In step S381 of Fig. 61, the encoded data buffer 561-1 maintains the segments among the PES packets of the right-eye caption data supplied from the PID filter 521. In step S382, the encoded data buffer 561-1 reads the maintained segments and supplies the read segments to the stream graphics generation unit 562-1.

In step S383, the stream graphics generation unit 562-1 supplies the PCS, PDS, and WDS supplied from the encoded data buffer 561-1 to the composition buffer 564-1 to maintain the PCS, PDS, and WDS.

In step S384, the stream graphics generation unit 562-1 decodes the ODS supplied from the encoded data buffer 561-1. Then, the stream graphics generation unit 562-1 supplies the uncompressed right-eye caption data composed of the index colors obtained as the result of decoding to the object buffer 563-1 as the right-eye caption object. In step S385, the object buffer 563-1 maintains the right-eye caption object supplied from the stream graphics generation unit 562-1.

In step S386, the object buffer 563-1, under the control of the control unit 565-1, reads the maintained right-eye caption object, and supplies the read right-eye caption object to the right-eye graphics plane 542-1 to maintain the right-eye caption object. Then, the processing returns to step S361 in Fig. 60, and then proceeds to step S362.

In this case, the left-eye caption object generation processing in step S362 of Fig. 60 is the same as the right-eye caption object generation processing in Fig. 61 except that the object to be processed is not the right-eye caption data, but is the left-eye caption data, and thus the explanation thereof will be omitted.

Also, in the description, it is exemplified that a separate PDS is provided between the right-eye display set and the left-eye display set which are simultaneously played. However, the same PDS may be provided between the right-eye display set and the left-eye display set which are simultaneously played. In this case, since one CLUT is provided, the packaging load of the playback apparatus can be reduced.

### <Ninth embodiment>

### [Configuration example of a display set according to a ninth embodiment of the disk]

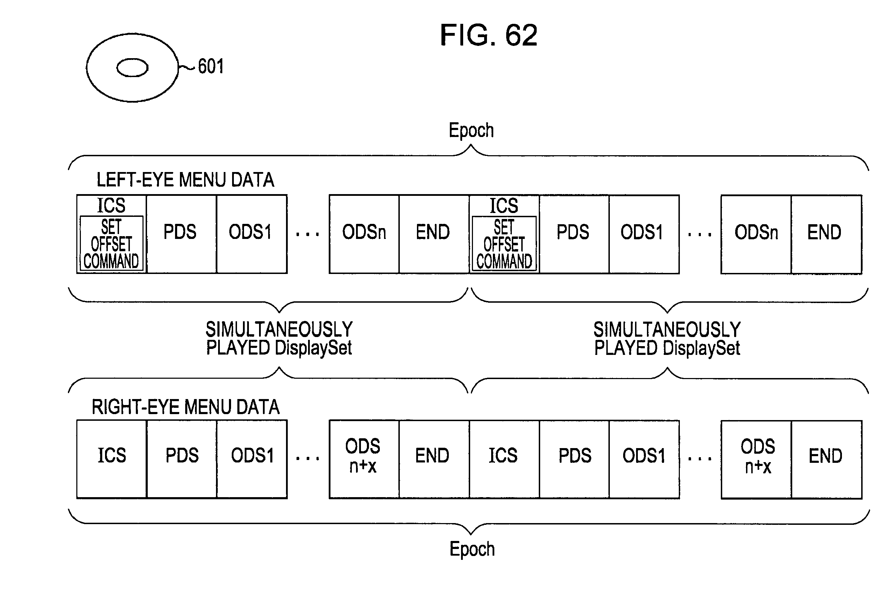

Fig. 62 is a diagram illustrating a configuration example of an epoch of the menu data according to the ninth embodiment of the disk to which the present invention is applied.

In the disk 601 of Fig. 62, in the same manner as the disk 501 of Fig. 53, two AV streams of the left-eye AV stream and the right-eye AV stream are recorded. Also, as illustrated in Fig. 62, in the disk 601, in the same manner as the disk 501, the structure of epoch of the left-eye AV stream is the same as the structure of epoch of the right-eye AV stream.

Also, the relation between the left-eye display set and the right-eye display set which are simultaneously played in the disk 601 is the same as that in the disk 501 except that the same PDS is provided, and the set offset command is described only in the left-eye ICS. Also, in the ninth embodiment and a tenth embodiment to be described later, the offset information after the change can be used as the offset change information.

As described above, since the set offset command is set in the left-eye ICS in the disk 601, a playback apparatus 610 that plays the disk 601 (to be described later) can change the length in depth direction of all captions or menu buttons in the screen that corresponds to the ICS.

Also, the epoch structure of the caption data and the relations between the left-eye display set and the right-eye display set which are simultaneously played are the same as those in the disk 501 except that the same PDS is provided.

### [Configuration example of a playback apparatus]

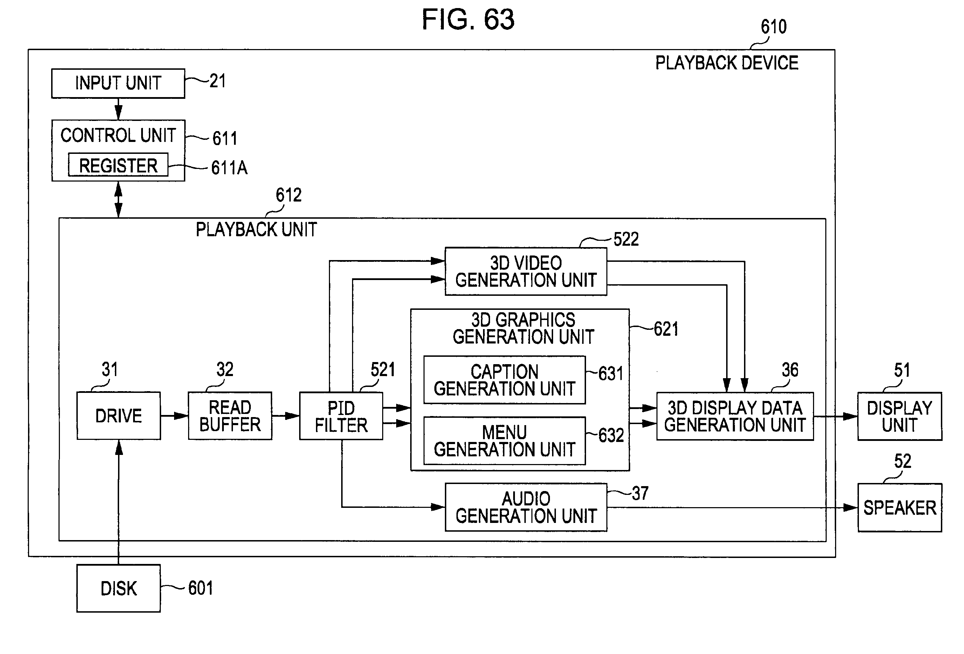

Fig. 63 is a block diagram illustrating a configuration example of a playback apparatus 610 that plays the disk 601.

The configurations as illustrated in Fig. 63, which are the same as the configurations of Fig. 55, are allocated with the same reference numerals, and the duplicate description thereof will be appropriately omitted.

The configurations of the playback apparatus 610 in Fig. 63 are different from the configurations of Fig. 55 on the point that a control unit 611 is installed instead of the control unit 511 and a playback unit 612 is installed instead of the playback unit 512. The configuration of the playback unit 612 is different from the configuration of Fig. 55 on the point that a 3D graphics generation unit 621 is installed instead of the 3D graphics generation unit 523.

The control unit 611, in the same manner as the control unit 511, controls the playback unit 612 in accordance with the instruction from the input unit 21. For example, the control unit 611 requests a command that corresponds to the menu button from the 3D graphics generation unit 621 in accordance with the instruction that corresponds to the manipulation of the menu button from the input unit 21. Also, the control unit 611 maintains offset change information in the unit of a picture of a caption or a menu button that is described in the set offset command transmitted as the result of the request in a built-in register 611A. The control unit 611 supplies the offset change information in the unit of a picture of the caption or menu button maintained in the register 611A to the 3D graphics generation unit 621.

The register 611A, in the same manner as the register 161A or the register 311A, is composed of PSRs, and maintains the offset change information in the unit of a picture of the caption or menu button.

The 3D graphics generation unit 621 is composed of a caption generation unit 631 and a menu generation unit 632.

The caption generation unit 631, in the same manner as the caption generation unit 531 of Fig. 55, decodes the PES packets of the left-eye caption data and the right-eye caption data supplied from the PID filter 521. Then, the caption generation unit 631, in the same manner as the caption generation unit 531, supplies the left-eye caption data and the right-eye caption data obtained as the result of decoding to the 3D display data generation unit 36 as the 3D caption data.

Also, the caption generation unit 631 updates the left-eye caption data on the basis of the offset change information in the unit of a picture of the caption transmitted from the control unit 611.

The menu generation unit 632, in the same manner as the menu generation unit 532 of Fig. 55, decodes the PES packets of the left-eye menu data and the right-eye menu data supplied from the PID filter 521. Also, the menu generation unit 632, in the same manner as the menu generation unit 532, supplies the left-eye menu data and the right-eye menu data obtained as the result of decoding to the 3D display data generation unit 36 as the 3D menu data.

Also, the menu generation unit 632 transmits the set offset command included in the ICS to the control unit 611 according to the request for a command that corresponds to the offset change button 195 from the control unit 611. Then, the menu generation unit 632 updates the left-eye menu data on the basis of the offset change information in the unit of a picture of the menu button transmitted from the control unit 611 as the result of transmission.

### [Detailed configuration example of a caption generation unit]

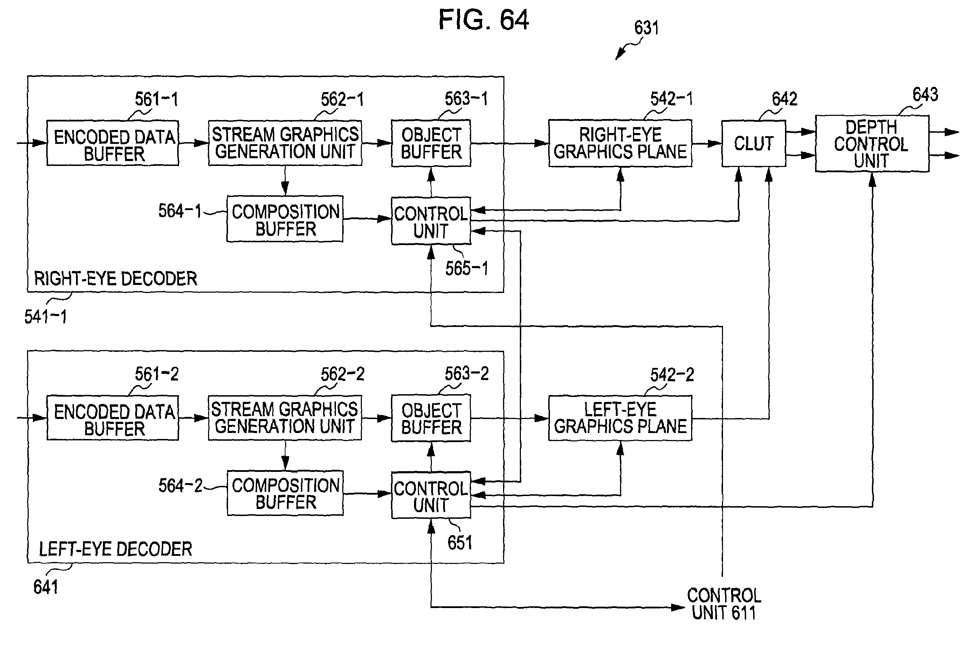

Fig. 64 is a block diagram illustrating a detailed configuration example of a caption generation unit 631 of Fig. 63.

The configurations as illustrated in Fig. 64, which are the same as the configurations as illustrated in Fig. 56, are allocated with the same reference numerals. Duplicate explanation thereof will be appropriately omitted.

The configuration of the caption generation unit 631 of Fig. 64 is different from the configuration of Fig. 56 on the point that a left-eye decoder 641 is installed instead of the left-eye decoder 541-2, a CLUT 642 is installed instead of the CLUT 543-1 and the CLUT 543-2, and a depth control unit 643 is newly installed. The configuration of the left-eye decoder 641 is different from the configuration of Fig. 56 on the point that a control unit 651 is installed instead of the control unit 565-2.

The control unit 651 of the left-eye decoder 641, in the same manner as the control unit 565-2 in Fig. 56, monitors the storage state of the left-eye caption object for one picture by the left-eye graphics plane 542-2, and reports the completion of the storage of the left-eye caption object for one picture to the control unit 565-1. The control unit 651, in the same manner as the control unit 565-2, instructs the left-eye graphics plane 542-2 to perform the transmission on the basis of the PTS included in the PES packet header or the report from the control unit 565-1.

Also, the control unit 651 controls the respective units according to the instruction from the control unit 611 (see Fig. 63).

Further, the control unit 651 receives the offset change information in the unit of a picture of the caption stored in the register 611 A, which is transmitted from the control unit 611, and supplies the offset change information to the depth control unit 643.

The CLUT 642 stores a table in which the index colors correspond to Y, Cr, and Cb values on the basis of the PDS supplied from control unit 565-1. In this case, since the same PDS is provided in the left-eye display set and the right-eye display set, which are simultaneously played in the disk 601, the table corresponds to both the left-eye caption object and the right-eye caption object.

The CLUT 642 converts the index colors of the right-eye caption object supplied from the right-eye graphics plane 542-1 into image data composed of Y, Cr, and Cb values on the basis of the stored table. Then, the CLUT 642 supplies the image data to the depth control unit 643 as the right-eye caption data.

Also, the CLUT 642 stores a table in which the index colors correspond to Y, Cr, and Cb values on the basis of the PDS supplied from the control unit. The CLUT 642 converts the index colors of the left-eye caption object supplied from the left-eye graphics plane 542-2 into image data composed of Y, Cr, and Cb values on the basis of the stored table. Then, the CLUT 642 supplies the image data to the depth control unit 643 as the left-eye caption data.

The depth control unit 643 generates caption data of the caption obtained as the result of making the caption in the unit of a picture that corresponds to left-eye caption data from the CLUT 642 disparity as large as the offset value in an offset direction indicated by the offset change information from the control unit 651. The depth control unit 643 supplies the caption data to the 3D display data generation unit 36 as new left-eye caption data. Also, the depth control unit 643 generates caption data of the caption obtained as the result of making the caption in the unit of a picture that corresponds to right-eye caption data from the CLUT 642 disparity as large as the offset value in an offset direction indicated by the offset change information from the control unit 651. The depth control unit 643 supplies the caption data to the 3D display data generation unit 36 as new right-eye caption data.

In this case, the depth control unit 643 is not installed in the rear end of the CLUT 642, but is installed between the object buffer 563-1 and the right-eye graphics plane 521-1 and between the object buffer 563-2 and the left-eye graphics plane 542-2, respectively, to provide a right-eye function and a left-eye function.

### [Detailed configuration example of a menu generation unit]

Although the illustration is omitted, the menu generation unit 632 is configured in the same manner as the caption generation unit 631 of Fig. 64 except that the object to be processed is not the caption data, but is the menu data. However, the control unit of the left-eye decoder of the menu generation unit 632 reads the set offset command included in the ICS from the composition buffer in accordance with the request for a command that corresponds to the offset change button 195 from the control unit 611, and transmits the read set offset command to the control unit 611.

### [Processing of a playback apparatus]

The playback processing performed by the playback apparatus 610, the 3D graphics generation processing, the caption generation processing, and the right-eye caption object generation processing are the same as the playback processing in Fig. 58, the 3D graphics generation processing of Fig. 59, the caption generation processing of Fig. 60, and the right-eye caption object generation processing of Fig. 61, and thus the explanation thereof will be omitted.

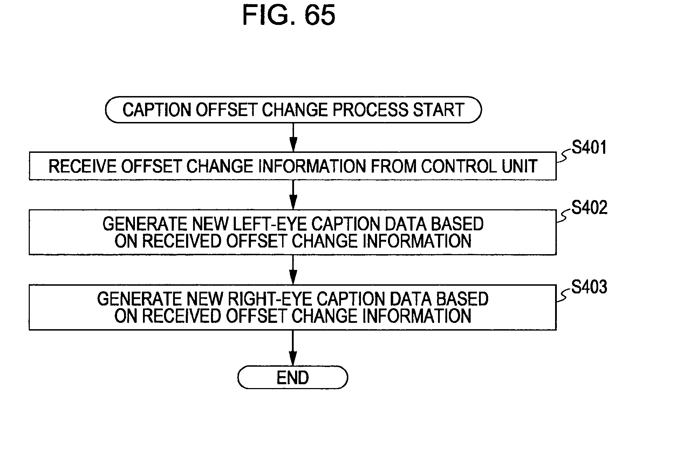

Fig. 65 is a flowchart illustrating the caption offset change processing by the caption generation unit 631 of the playback apparatus 610. The caption offset change processing starts when the control unit 611 transmits the offset change information in accordance with the instruction that corresponds to the manipulation of the offset change button 195 from the input unit 21.

In step S401 of Fig. 65, the control unit 651 receives the offset change information in the unit of a picture of the caption maintained in the register 611 A from the control unit 611, and supplies the received offset change information to the depth control unit 643.

In step S402, the depth control unit 643 generates new left-eye caption data on the basis of the offset change information in the unit of a picture of the caption received from the control unit 611. In step S403, the depth control unit 643 generates new right-eye caption data on the basis of the offset change information in the unit of a picture of the caption received from the control unit 611. Then, the depth control unit outputs the new right-eye caption data and left-eye caption data to the 3D display data generation unit 36 as the 3D caption data, and ends the processing.

In this case, the menu offset change processing performed by the menu generation unit 632 is the same as the caption offset change processing of Fig. 65 except that the object to be processed is not the caption data, but is the menu data, and thus the explanation thereof will be omitted.

Also, the offset control processing performed by the control unit 611 is the same as the offset control processing of Fig. 30, and thus the explanation thereof will be omitted.

### [3D display example of a caption]

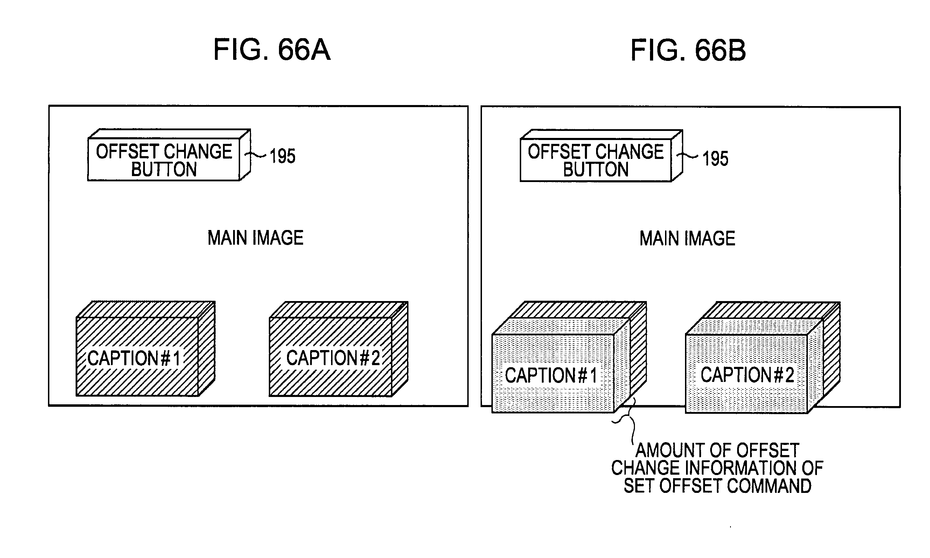

Figs. 66A and 66B are diagrams illustrating an example of a caption 3D-displayed on the display unit 51 of the playback apparatus 610.

As illustrated in Fig. 66A, in the playback apparatus 610, the offset change button 195 as the 3D image having a predetermined length in a predetermined depth direction is displayed on the screen of the display unit 51 on the basis of the offset information in the unit of a picture included in the ICS. In an example of Fig. 66A, caption #1 and caption #2, as the 3D images having the same length in the same depth direction, are further displayed on the basis of the left-eye display set and the right-eye display set.

In the screen of Fig. 66A, if a user orders the offset change by manipulating the offset change button 195 using the input unit 21, the screen of the display unit 51 is changed to the screen as shown in Fig. 66B.

Specifically, if the offset change button 195 is manipulated, the offset change information in the unit of a picture of the caption described in the set offset command that is included in the left-eye ICS corresponding to the offset change button 195 is maintained in the register 611A of the playback apparatus 610. Also, the caption data of the caption obtained as the result of making the caption in the unit of a picture that corresponds to left-eye caption data disparity as large as the offset value in an offset direction indicated by the offset change information is generated as new left-eye caption data. As a result, the length in the depth direction of the caption #1 and the caption #2 is increased as long as the length that corresponds to the offset change information in the unit of a picture that is maintained in the register 611A.

### <Tenth embodiment>

### [Configuration example of a display set according to a tenth embodiment of the disk]

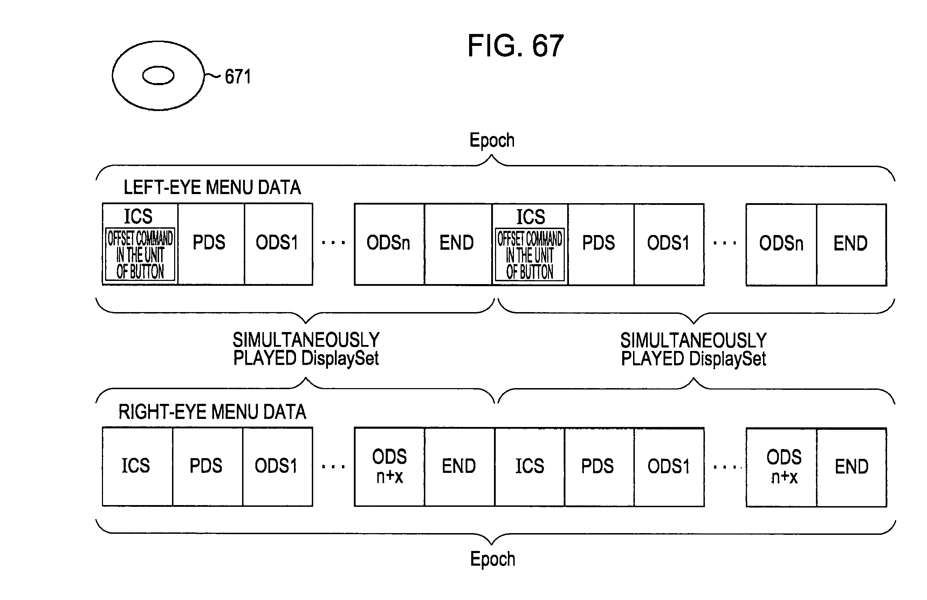

Fig. 67 is a diagram illustrating a configuration example of an epoch of the menu data according to the tenth embodiment of the disk to which the present invention is applied.

In the disk 671 of Fig. 67, in the same manner as the disk 501 of Fig. 53, two AV streams of a left-eye AV stream and the right-eye AV stream are recorded. Also, as illustrated in Fig. 67, in the disk 671, in the same manner as the disk 501, the structure of epoch of the left-eye AV stream is the same as the structure of epoch of the right-eye AV stream.

Also, the relation between the left-eye display set and the right-eye display set which are simultaneously played in the disk 671 is the same as that in the disk 501 except the following two points. According to the two different points, the same PDS is provided, and the set offset command in the unit of a button is described only in the left-eye ICS.

As described above, the set offset command in the unit of a button is set in the left-eye ICS in the disk 671. Accordingly, a playback apparatus 680 that plays the disk 671 (to be described later) can change the length in the depth direction of menu buttons in the screen that corresponds to the ICS in the unit of a menu button.

In this case, the epoch structure of the caption data recorded on the disk 671 and the relations between the left-eye display set and the right-eye display set which are simultaneously played are the same as those in the disk 501, and thus the explanation thereof will be omitted.

### [Configuration example of a playback apparatus]

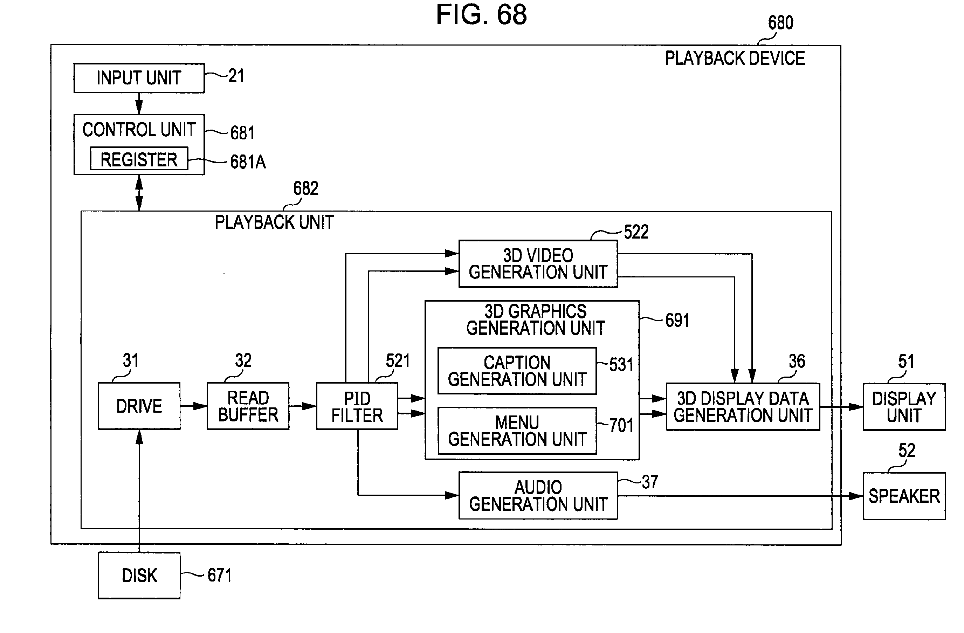

Fig. 68 is a block diagram illustrating a configuration example of a playback apparatus 680 that plays the disk 671.

The configurations as illustrated in Fig. 68, which are the same as the configurations of Fig. 63, are allocated with the same reference numerals, and the duplicate description thereof will be appropriately omitted.

The configurations of the playback apparatus 680 in Fig. 68 are different from the configurations of Fig. 63 on the point that a control unit 681 is installed instead of the control unit 611 and a playback unit 682 is installed instead of the playback unit 612. The configuration of the playback unit 682 is different from the configuration of Fig. 63 on the point that a 3D graphics generation unit 691 is installed instead of the 3D graphics generation unit 621.

The control unit 681, in the same manner as the control unit 611 of Fig. 63, controls the playback unit 682 in accordance with the instruction from the input unit 21. Also, the control unit 681 requests a set offset command that corresponds to the menu button from the 3D graphics generation unit 691 in accordance with the instruction that corresponds to the manipulation of the menu button from the input unit 21. Also, the control unit 681 supplies the offset change information in the unit of a menu button and a button ID described in the set offset command in the unit of a button transmitted from the menu generation unit 701 as the result of the request to the menu generation unit 701.

The 3D graphics generation unit 691 is composed of a caption generation unit 531 as shown in Fig. 55 and a menu generation unit 701. The menu generation unit 701, in the same manner as the menu generation unit 632 of Fig. 63, decodes the PES packets of the left-eye menu data and the right-eye menu data supplied from the PID filter 521. Then, the menu generation unit 701, in the same manner as the menu generation unit 632, supplies the left-eye menu data and the right-eye menu data obtained as the result of decoding to the 3D display data generation unit 36 as the 3D menu data.

Also, the menu generation unit 701 transmits the set offset command in the unit of a button included in the ICS to the control unit 681 in accordance with the request for a command that corresponds to the offset change button 195 from the control unit 681. Also, the menu generation unit 701 updates the left-eye menu data on the basis of the offset change information in the unit of a menu button and the button ID transmitted from the control unit 681.

### [Detailed configuration example of a menu generation unit]

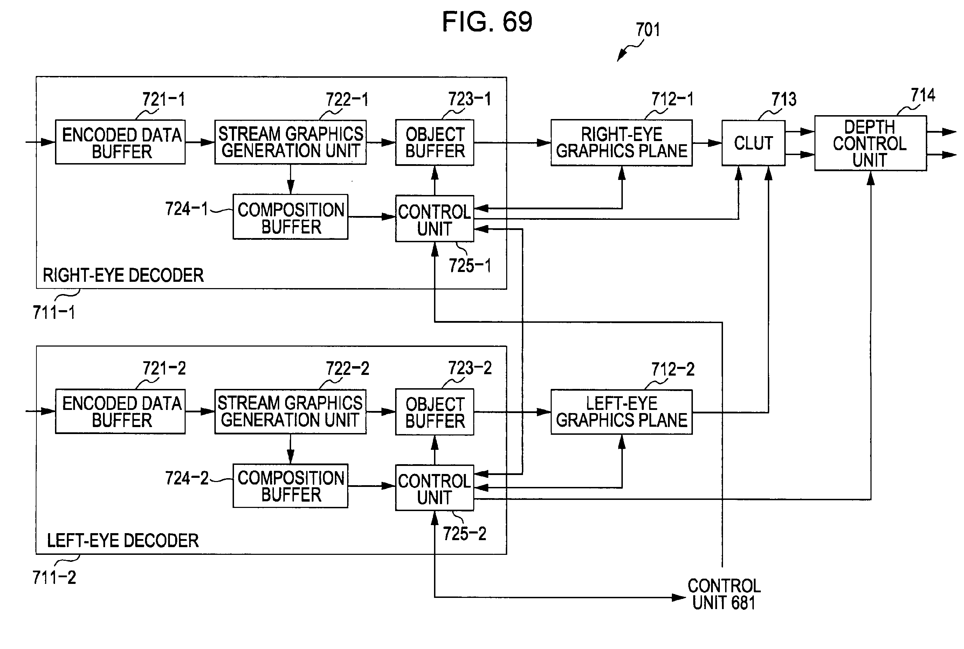

Fig. 69 is a block diagram illustrating a detailed configuration example of a menu generation unit 701 of Fig. 68.

In Fig. 69, the menu generation unit 701 is composed of a right-eye decoder 711-1, a left-eye decoder 711-2, a right-eye graphics plane 712-1, a left-eye graphics plane 712-2, a CLUT 713, and a depth control unit 714.

The right-eye decoder 711-1 is composed of an encoded data buffer 721-1, a stream graphics generation unit 722-1, an object buffer 723-1, a composition buffer 724-1, and a control unit 725-1. The left-eye decoder 711-2 is composed of an encoded data buffer 721-2, a stream graphics generation unit 722-2, an object buffer 723-2, a composition buffer 724-2, and a control unit 725-2.

The configuration as illustrated in Fig. 69 is the same as the configuration of the menu generation unit 632 of Fig. 63 except for the control unit 725-2 and the depth control unit 714, and thus the explanation thereof will be omitted.

The control unit 725-2 monitors the storage state of the left-eye caption object for one picture by the left-eye graphics plane 712-2, and reports the completion of the storage of the left-eye caption object to the control unit 725-1. The control unit 725-2 instructs the left-eye graphics plane 712-2 to perform the transmission on the basis of the ICS from the composition buffer 724-2, or the report from the control unit 725-1.

Also, the control unit 725-2 controls the respective units according to the instruction from the control unit 681 (see Fig. 68).

Further, the control unit 725-2 reads the set offset command in the unit of a button included in the ICS from the composition buffer 724-2 in accordance with the request for a command that corresponds to the offset change button 195 from the control unit 681, and transmits the read set offset command to the control unit 681. Also, the control unit 725-2 receives the offset change information in the unit of a menu button and the button ID transmitted from the control unit 681 as the result of transmission. The control unit 725-2 supplies the received offset change information in the unit of a menu button to the depth control unit 714 as the offset change information in the unit of an ODS of the ODS that corresponds to the button ID transmitted together with the offset change information.

The depth control unit 714 generates menu data of the menu button obtained as the result of making the menu button in the screen that corresponds to the left-eye menu data from the CLUT 713 disparity on the basis of the offset change information in the unit of an ODS that corresponds to the menu button. Then, the depth control unit 714 supplies the menu data to the 3D display data generation unit 36 as new left-eye caption data. Also, the depth control unit 714 generates menu data of a menu button obtained as the result of making the menu button in the screen that corresponds to the right-eye menu data from the CLUT 713 disparity on the basis of the offset change information in the unit of an ODS that corresponds to the menu button. The depth control unit 714 supplies the menu data to the 3D display data generation unit 36 as new right-eye caption data.

### [Processing of a playback apparatus]

The playback processing performed by the playback apparatus 680, the 3D graphics generation processing, the caption generation processing, and the right-eye caption object generation processing are the same as the playback processing in Fig. 58, the 3D graphics generation processing of Fig. 59, the caption generation processing of Fig. 60, and the right-eye caption object generation processing of Fig. 61, and thus the explanation thereof will be omitted.

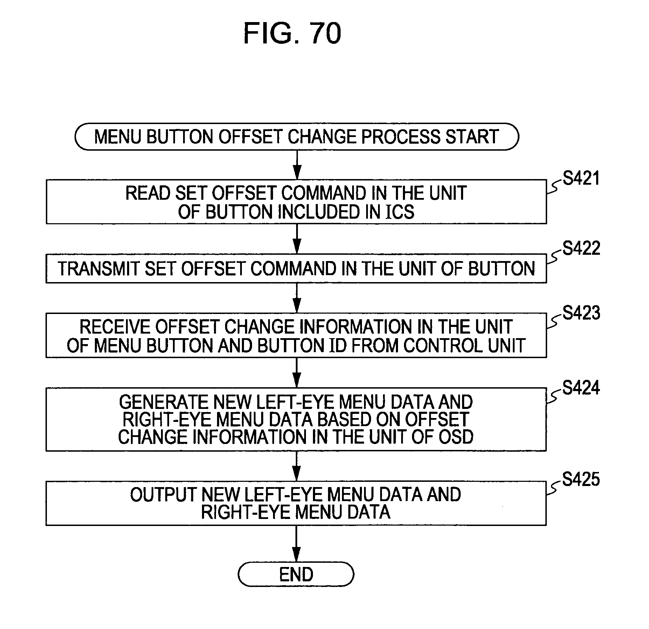

Fig. 70 is a flowchart illustrating the menu button offset change processing performed by the menu generation unit 701 of the playback apparatus 680. The menu button offset change processing starts when the control unit 681 requests the command that corresponds to the offset change button 195 from the menu generation unit 701 according to the instruction that corresponds to the manipulation of the offset change button 195 from the input unit 21.

In step S421 of Fig. 70, the control unit 725-2 reads the set offset command in the unit of a button included in the ICS from the composition buffer 724-2 in accordance with the request for a command that corresponds to the offset change button 195 from the control unit 681.

In step S422, the control unit 725-2 transmits the set offset command in the unit of a button read in step S421 to the control unit 681. The control unit 681 transmits the offset change information in the unit of a menu button and the button ID described in the set offset command in the unit of a button transmitted from the control unit 725-2 to the control unit 725-2.

In step S423, the control unit 725-2 receives the offset change information in the unit of a menu button and the button ID from the control unit 681. Also, the control unit 725-2 recognizes the ODS that corresponds to the button ID received from the control unit 681 based on the button ID included in the ICS that is maintained in the composition buffer 724-2. Then, the control unit 725-2 supplies the received offset change information in the unit of a menu button received from the control unit 681 to the depth control unit 714 as the offset change information in the unit of an ODS of the recognized ODS.

In step S424, the depth control unit 714 generates new left-eye menu data and right-eye menu data on the basis of the offset change information in the unit of an ODS supplied from the control unit 725-2. In step S425, the depth control unit 714 outputs the new left-eye menu data and right-eye menu data generated in step S424 to the 3D display data generation unit 36, and ends the processing.

In this case, the offset control processing by the control unit 681 is the same as the offset control processing in Fig. 42, the explanation thereof will be omitted.

### [3D display example of a menu button]

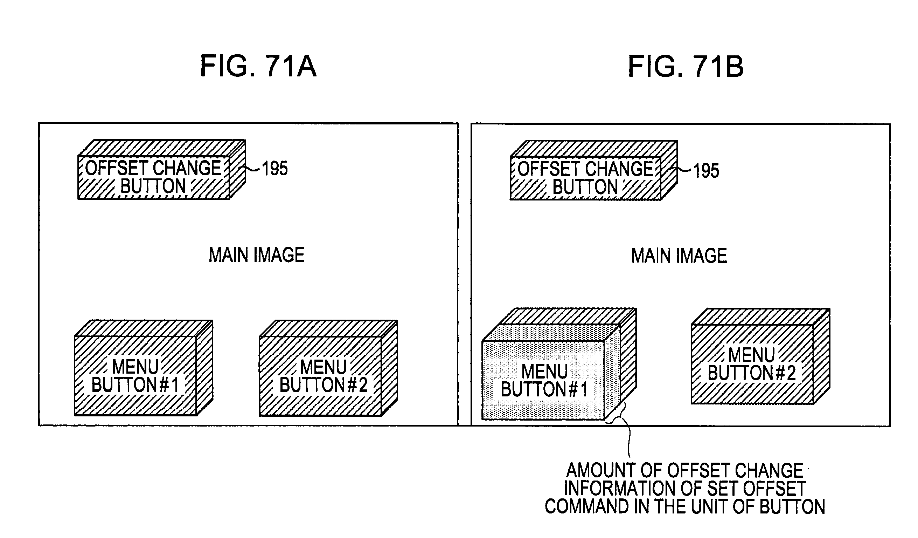

Figs. 71A and 71B are diagrams illustrating an example of a menu button 3D-displayed on the display unit 51 of the playback apparatus 680.

In an example of Fig. 71A, menu button #1, menu button #2, and offset change button 195 as the 3D images having the same length in the same depth direction are displayed on the screen on the basis of the left-eye display set and the right-eye display set.

In the screen of Fig. 71A, if a user inputs an instruction for the offset change by manipulating the offset change button 195 using the input unit 21, the screen of the display unit 51 is changed to the screen as shown in Fig. 71B.

Specifically, if the offset change button 195 is manipulated, the playback apparatus 680 generates menu data obtained as the result of making the positions of the left-eye menu buttons currently displayed disparity on the basis of the offset change information in the unit of a menu button. Then, the playback apparatus 610 takes the menu data as new left-eye menu data. Also, the playback apparatus 680 generates menu data obtained as the result of making the positions of the right-eye menu buttons currently displayed disparity on the basis of the offset change information in the unit of a menu button. Then, the playback apparatus 610 takes the menu data as new right-eye menu data.

As a result, the length in the depth direction of the menu button #1, the menu button #2, and the offset change button 195 is increased as long as the length that corresponds to the offset change information in the unit of a menu button in the set offset command in the unit of a button.

In this case, in an example of Fig. 71, since the offset change information of the menu button #2 and the offset change button 195 is not included in the set offset command in the unit of a button, the distance in the depth direction of the menu button #2 and the offset change button 195 is not changed before and after the manipulation of the offset change button 195.

Further, in the case of setting an offset for each menu button as an additional condition, if a plurality of menu buttons exist in a screen 1 and offset information is set for each menu button, the right-eye image and the left-eye image of a certain menu button should not overlap the right-eye image and the left-eye image of another menu button, respectively.

### <Eleventh embodiment>

### [Configuration example of a display set according to an eleventh embodiment of the disk]

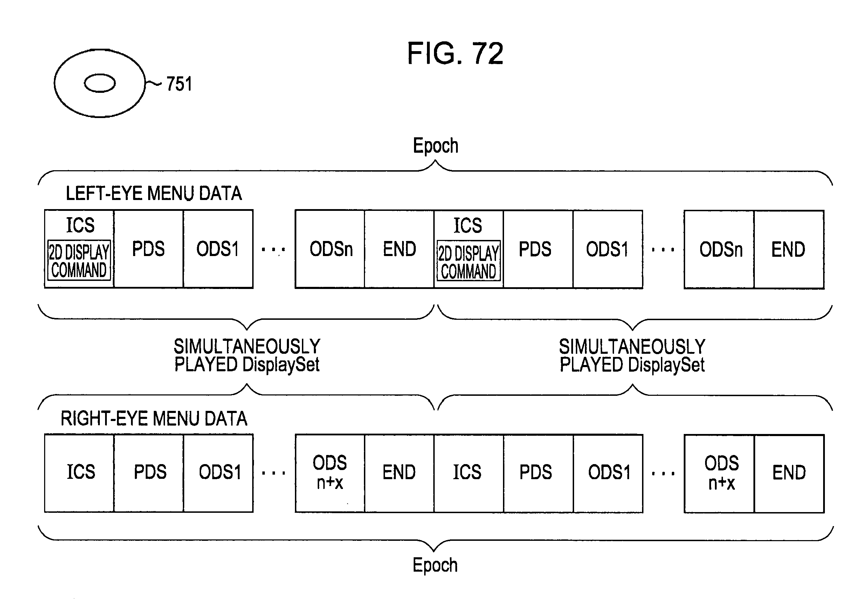

Fig. 72 is a diagram illustrating a configuration example of an epoch of the menu data according to the eleventh embodiment of the disk to which the present invention is applied.

In the disk 751 of Fig. 72, two AV streams of a left-eye AV stream and the right-eye AV stream are recorded, similar to the disc 501 of Fig. 53. As illustrated in Fig. 72, in the disk 751, the structure of epoch of the left-eye menu data is similar to the structure of epoch of the right-eye menu data, as the disk 501.

Also, in the disk 751, a relationship between the left-eye display set and the right-eye display set which are simultaneously played is similar to that in the disk 501, except for two points, that is, the PDS are equal and the command is described in only the left-eye ICS. In the eleventh embodiment, in the command, the information displaying instruction of making the left-eye menu data as both-eye menu data.

As such, since the command is installed on the left-eye ICS in the disk 751, a playback apparatus 760 (described below) for playing the disk 751 may performs the 2D display of the menu button.

In this instance, the structure of the caption data and the relationship between the left-eye display set and the right-eye display set which are displayed simultaneously are similar to those in disk 501, except that the PCS are similar, and the explanation thereof will be omitted herein.

### [Configuration example of playback apparatus]

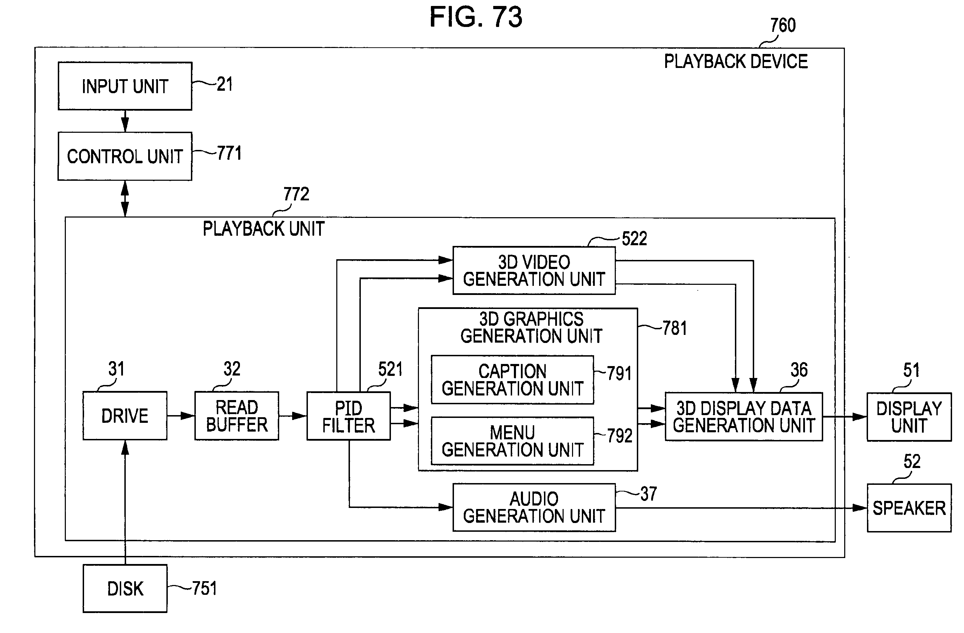

Fig. 73 is a block diagram illustrating a configuration example of the playback apparatus 760 that plays the disk 751.

The configurations as illustrated in Fig. 73, which are the same as the configurations of Fig. 55 are allocated with the same reference numerals, and the duplicate description thereof will be appropriately omitted.

The configuration of the playback apparatus 760 of Fig. 73 is different from the configuration of Fig. 55 on the point that the control unit 771 is installed instead of the control unit 511 and a playback unit 772 is installed instead of the playback unit 512. The configuration of the playback unit 772 is different from the configuration of Fig. 55 on the point that a 3D graphics generation unit 781 is installed instead of the 3D graphics generation unit 523.

The control unit 771, in the same manner as the control unit 511, controls the playback unit 772 in accordance with the instruction from the input unit 21. Also, the control unit 771 demands a command corresponding to the menu button for the 3D graphics generation unit 781 in accordance with the instruction corresponding to the manipulation of the menu button from the input unit 21. The control unit 771 supplies the instruction corresponding to the transmitted command to the 3D graphics generation unit 781.

The 3D graphics generation unit 781 is composed of a caption generation unit 791 and a menu generation unit 792.

The caption generation unit 791, in the same manner as the caption generation unit 531 of Fig. 55, decodes the PES packet of the caption data for the left-eye caption data and the right-eye caption data which are supplied from the PID filter 521. The caption generation unit 791, in the same manner as the caption generation unit 531, supplies the left-eye caption data and the right-eye caption data obtained from the above decoding process to the 3D display data generation unit 36 as the 3D caption data. Also, the caption generation unit 791 updates the 3D caption data on the basis of the command transmitted from the control unit 771.

The menu generation unit 792 decodes the PES packet of the menu data for the left-eye menu data and the right-eye menu data which are supplied from the PID filter 521, similar to the menu generation unit 532 of Fig. 55. The menu generation unit 792, in the same manner as the menu generation unit 532, supplies the left-eye menu data and the right-eye menu data obtained from the above decoding process to the 3D display data generation unit 36 as the 3D caption data. Further, the menu generation unit 792 transmits the command included in the ICS of the left-eye menu data to the control unit 771 in accordance with the demand of the command corresponding to the 2D display button from the control unit 771. The menu generation unit 792 updates the 3D menu data based on the instruction transmitted from the control unit 771.

### [Detailed configuration example of the caption generation unit]

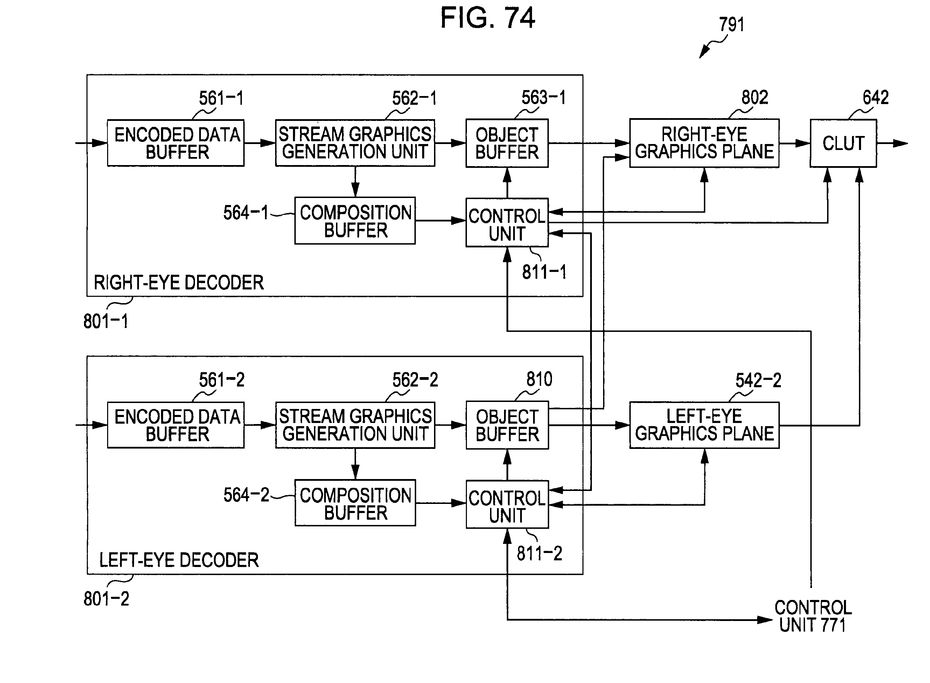

Fig. 74 is a block diagram illustrating a detailed configuration example of the caption generation unit 791 of Fig. 73.

The configurations as illustrated in Fig. 74, which are the same as the configurations as illustrated in Fig. 56 or Fig. 64, are allocated with the same reference numerals. Duplicate explanation thereof will be appropriately omitted.

The configuration of the caption generation unit 791 of Fig. 74 is different from the configuration of Fig. 56 on the point that a right-eye decoder 801-1 and a left-eye decoder 801-2 are installed instead of the right-eye decoder 541-1 and the left-eye decoder 541-2. It is different from on the point that a right-eye graphics plane 802 is installed instead of the right-eye graphics plane 542-1 and a CLUT 642 is installed instead of the CLUT 543-1 and the CLUT 543-2.

The configuration of the right-eye decoder 801-1 is different from the configuration of Fig. 56 on the point that a control unit 811-1 is installed instead of the control unit 565-1. Further, the configuration of the left-eye decoder 801-2 is different from the configuration of Fig. 56 on the point that an object buffer 810 is installed instead of the object buffer 563-2 and a control unit 811-2 is installed instead of the control unit 565-2.

The control unit 811-1 of the right-eye decoder 801-1, in the same manner as the control unit 565-1 in Fig. 56, monitors the storage state of the right-eye caption object for one picture by the right-eye graphics plane 802, and reports the completion of the storage of the right-eye caption object for one picture to the control unit 811-2. The control unit 811-1, in the same manner as the control unit 0470, instructs the right-eye graphics plane 802 to perform the transmission on the basis of the PTS included in the PES packet header or the report from the control unit 811-2.

Also, the control unit 811-1 controls the respective units according to the instruction from the control unit 771 (see Fig. 73).

The object buffer 810 of the left-eye decoder 801-2 maintains the left-eye caption object supplied from the stream graphics generation unit 562-2. The object buffer 810 deletes the left-eye caption object maintained in a unit of epoch. Further, the object buffer 810 reads the maintained left-eye caption object in accordance with the control from the control unit 811-2, and supplies it to the left-eye graphics plane 542-2.

Further, the object buffer 810 supplies the maintained left-eye caption object to the right graphics plane 802 and the left-eye graphics plane 542-2 in accordance with the control of the control unit 811-2.

The control unit 811-2, in the same manner as the control unit 565-2 in Fig. 56, monitors the storage state of the left-eye caption object for one picture by the left-eye graphics plane 542-2, and reports the completion of the storage of the left-eye caption object for one picture to the control unit 811-1. The control unit 811-2, in the same manner as the control unit 565-2, instructs the left-eye graphics plane 542-2 to perform the transmission on the basis of the PTS included in the PES packet header or the report from the control unit 565-1.

Also, the control unit 811-2 controls the respective units according to the instruction from the control unit 771 (see Fig. 73).

In addition, the control unit 811-2 instructs the right-eye graphics plane 802 and the left-eye graphics plane 542-2 to perform transmission to the object buffer 810 in accordance with the instruction transmitted from the control unit 771.

The right-eye graphics plane 802 maintains the right-eye caption object for one picture supplied from the object buffer 563-1, in the same manner as the right-eye graphics plane 542-1. Further, the right-eye graphics plane 802 maintains the left-eye caption object for one picture supplied from the object buffer 810 as the right-eye caption object for one picture.

Further, the right-eye graphics plane 802 deletes the right-eye caption object maintained in a unit of epoch, similar to the right-eye graphics plane 542-1. Further, the right-eye graphics plane 802 reads the maintained right-eye caption object in accordance with the transmission instruction from the control unit 811-1, similar to the right-eye graphics plane 542-1, and supplies it to the CLUT 642.

### [Detailed configuration example of a menu generation unit]

Although the illustration is omitted, the menu generation unit 792 is configured in the same manner as the caption generation unit 791 of Fig. 74 except that the object to be processed is not the caption data, but is the menu data. However, the control unit of the left-eye decoder of the menu generation unit 792 reads the command included in the ICS from the composition buffer in accordance with the request for a command that corresponds to the 2D display button from the control unit 771, and transmits the read command to the control unit 771.

### [Processing of a playback apparatus]

The playback processing performed by the playback apparatus 760, the 3D graphics generation processing, the caption generation processing, and the right-eye caption object generation processing are the same as the playback processing in Fig. 58, the 3D graphics generation processing of Fig. 59, the caption generation processing of Fig. 60, and the right-eye caption object generation processing of Fig. 61, and thus the explanation thereof will be omitted.

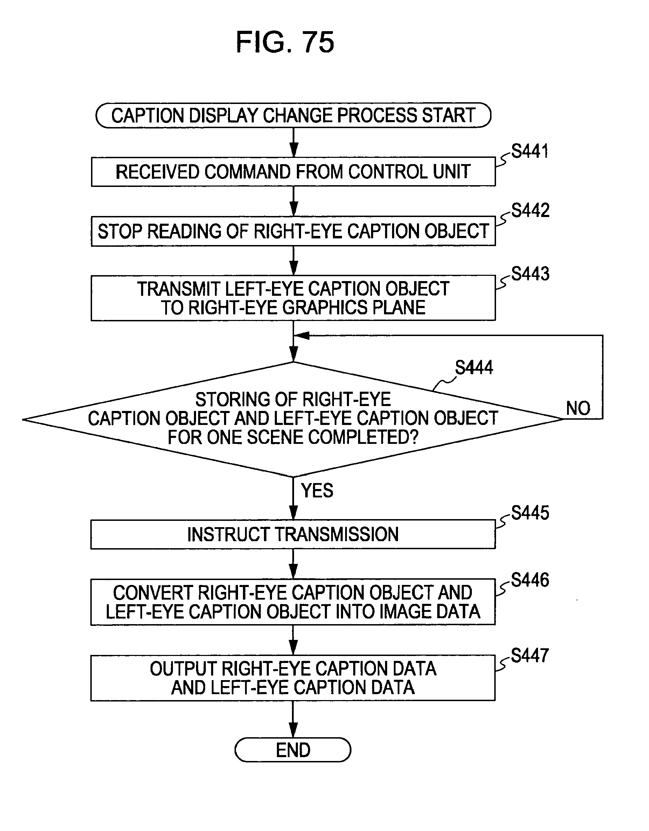

Fig. 75 is a flowchart illustrating the caption display change processing performed by the caption generation unit 791 of the playback apparatus 760. The caption offset change processing starts when the control unit 771 requests a command from the 3D graphics generation unit 781 in accordance with the instruction of offset change from the input unit 21.

In step S441 of Fig. 75, the control units 811-1 and 811-2 receive instructions from the control unit 771.

In step S442, the control unit 811-1, in accordance with the instruction received in step S441, controls the object buffer 563-1 to stop the reading of the right-eye caption object from the object buffer 563-1.

In step S443, the control unit 811-2, in accordance with the instruction received in step S441, controls the object buffer 810 to transmit the left-eye caption object of the object buffer 810 to the right-eye graphics plane 802. The right-eye graphics plane 802 maintains the left-eye caption object as the right-eye caption object. Then, the processing proceeds to step S444.

Since the steps S444 to S447 are the same as the steps S363 to S366 of Fig. 60, the explanation thereof will be omitted.

By performing the caption offset change processing as described above, the right-eye caption data and the left eye caption data become the same caption data that corresponds to the left-eye AV stream. Thus, the user can see the 2D display of the caption. Accordingly, the user may change the caption display state from the 3D display to the 2D display by instructing the 2D display using the input unit 21 when the user feels eye strain or the like.

In this case, the menu display change processing performed by the menu generation unit 792 is the same as the caption display change processing of Fig. 75 except that the object to be processed is not the caption data, but is the menu data, and thus the explanation thereof will be omitted.

Also, in the eleventh embodiment of the present invention, in the command, information that indicates the instruction for changing the left-eye caption data to both-eye caption data is described. However, information that indicates the instruction for generating both-eye common caption data from the left-eye and right-eye caption data may be described in the command.

### [Another detailed configuration example of a caption generation unit]

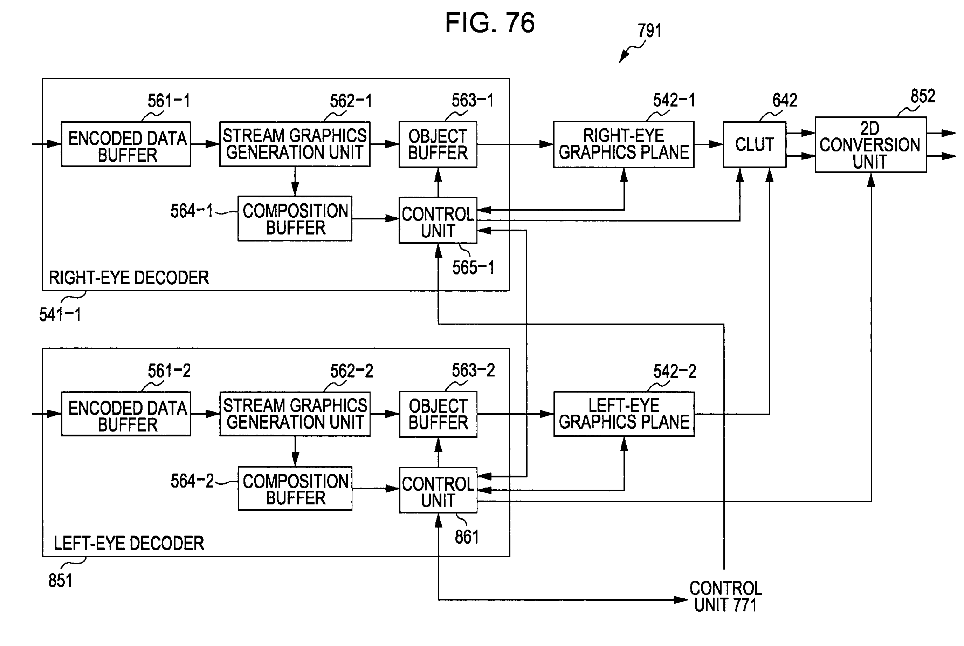

Fig. 76 is a diagram illustrating a detailed configuration example of a caption generation unit 791 in the above-described case.

The configurations as illustrated in Fig. 76, which are the same as the configurations of Fig. 56 or Fig. 74, are allocated with the same reference numerals, and the duplicate description thereof will be appropriately omitted.

The configuration of the caption generation unit 791 of Fig. 76 is different from the configuration of Fig. 74 on the point that a right-eye decoder 541-1 and a left-eye decoder 851 are installed instead of the right-eye decoder 801-1 and the left-eye decoder 801-2. Also, the configuration of the caption generation unit 791 is different from the configuration of Fig. 74 on the point that a right-eye graphics plane 542-1 is installed instead of the right-eye graphics plane 802, and a 2D conversion unit 852 is newly installed.

The configuration of the left-eye decoder 851 is different from the configuration of Fig. 76 on the point that an object buffer 563-2 is installed instead of the object buffer 810, and a control unit 861 is installed instead of the control unit 811-2.

The control unit 861 of the left-eye decoder 851, in the same manner as the control unit 811-2 of Fig. 74, monitors the storage state of the left-eye caption object for one picture by the left-eye graphics plane 542-2, and reports the completion of the storage to the control unit 565-1. The control unit 861, in the same manner as the control unit 811-2, instructs the left-eye graphics plane 542-2 to perform the transmission on the basis of the PTS included in the PES packet header or the report from the control unit 565-1.

Also, the control unit 861 controls the respective units in accordance with the instruction from the control unit 771 (see Fig. 73).

Further, the control unit 861 receives the instruction transmitted from the control unit 771, and supplies the received instruction to the 2D conversion unit 852.

The 2D conversion unit 852 generates the both-eye common caption data from the left-eye caption data and the right-eye caption data output from the CLUT 642 in accordance with the instruction supplied from the control unit 861. The 2D conversion unit 852 supplies the generated both-eye common caption data to the 3D display data generation unit 36 as the left-eye caption data and the right-eye caption data.

### [Processing of a 2D conversion unit]

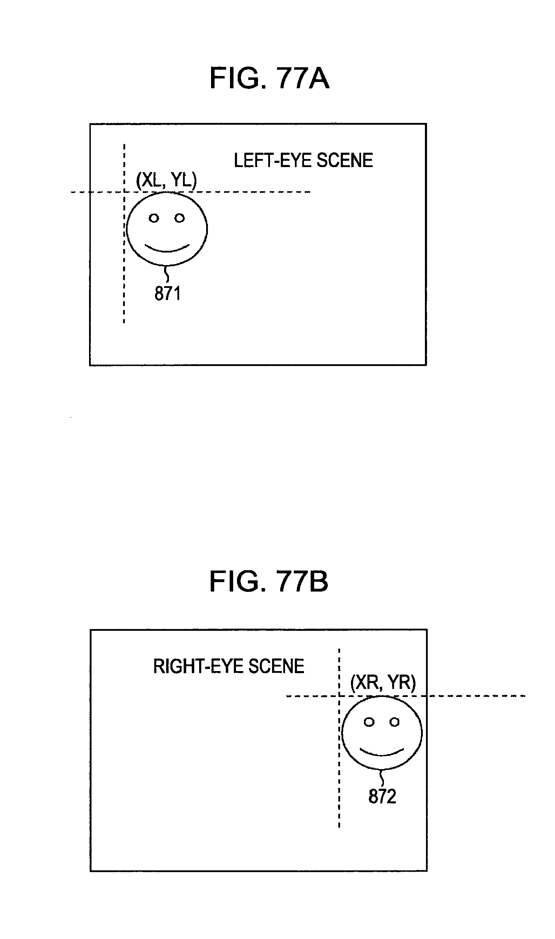

Figs. 77A and 77B are diagrams illustrating an example of a method of generating both-eye common caption data performed by the 2D conversion unit 852 of Fig. 76. According to the simplest 2D conversion method, any one of the left-eye and right-eye caption data is transmitted as the caption data after synthesis.

First, as illustrated in Fig. 77A, it is assumed that the position on the screen of the left-eye caption 871 is (XL, YL), and as shown in Fig. 77B, the position on the screen of the right eye caption 872 is (XR, YR). However, YL and YR are the same.

In this case, if it is assumed that the position on the screen of the both-eye common caption is (X, Y), X is represented by equation X=XR-α, X=XL-β using constant α and β which are preset in the 2D conversion unit 852. Accordingly, 2D conversion unit 852 obtains X by calculating the equation X=X{(XR+XL)-α-β}/2 and obtains Y using the equation Y=YL=YR.

The 2D conversion unit 852 generates the caption data obtained as the result of changing the position of the caption that corresponds to the right-eye caption data to the position (X, Y) as the right-eye caption data. Also, the 2D conversion unit 852 generates the caption data obtained by changing the position of the respective captions corresponding to the left-eye caption data to the position (X, Y) as the left-eye caption data.

As described above, since the same right-eye caption data and left-eye caption data are generated, a user can see the 2D display of the caption.

Although it is exemplified that the set offset command or the command is described in the left-eye menu data, it is also possible to describe the set offset command or the command in the right-eye menu data. Also, the set offset command or the command may be described in both the left-eye menu data and the right-eye menu data.

Also, in the ICS, a 3D display command for changing the display state from the 2D display to the 3D display may be installed. In this case, by the 3D display command, the processing according to the command is returned to the original processing.

As described above, it is exemplified that the OSD and the menu button or caption are in a one-to-one correspondence. If one menu button or caption corresponds to a plurality of ODS, or a plurality of menu buttons or captions correspond to one ODS, the "offset information in the unit of an ODS" as described above becomes the "offset information in the unit of a menu button or in the unit of a caption". Also, the same process can be performed with respect to the "offset change information in the unit of an OSD", and in the case where the set offset command in the unit of a button is executed, the offset information is changed in the unit of a button.

The series of processing as described above may be executed by hardware and may be executed by software.

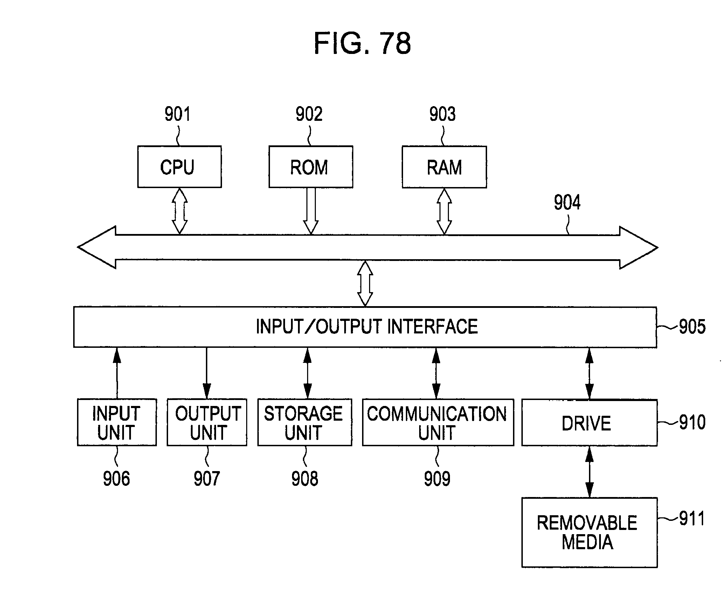

In this case, as at least a part of the playback apparatus, for example, a personal computer as illustrated in Fig. 78 may be adopted.

In Fig. 78, a CPU (Central Processing Unit) 901 performs various kinds of processing in accordance with a program recorded in a ROM (Read Only Memory) 902 or a program loaded from a storage unit 908 to a RAM (Random Access Memory) 903. In the RAM 903, data that is necessary when the CPU 901 executes various kinds of processing is properly stored.

The CPU 901, the ROM 902, and the RAM 903 are connected to one another through a bus 904. The input/output interface 905 is also connected to the bus 904.

To an input/output interface 905, an input unit 906 composed of a keyboard, a mouse, or the like, an output unit 907 composed of a display or the like, a storage unit 908 composed of a hard disk or the like, and a communication unit 909 composed of a modem, a terminal adaptor, or the like, are connected. The communication unit 909 controls communications performed with other devices (not illustrated) through a network including Internet.

To the input/output interface 905, a drive 910 is connected if necessary, and a removable media 911 composed of a magnetic disk, an optical disk, an optomagnetic disk, a semiconductor memory, or the like, is properly connected, so that a computer program read from such disks is installed in the storage unit 908 if necessary.

In the case of executing the series of processing using software, a program included in the software is installed in a computer provided in dedicated hardware or installed, for example, in a general-purpose personal computer, which is capable of executing various kinds of functions when various programs are installed.

A recording medium including the above-described programs, as illustrated in Fig. 78, is configured not only by a removable media (i.e. package media) composed of a magnetic disk (including floppy disk) recorded with programs, an optical disk (including CD-ROM (Compact Disk-Read Only Memory), a DVD (Digital Versatile Disk), and a blue-ray disk), semiconductor memory, or the like, which are distributed to transfer a program to a user separately from the device main body, but also by a ROM 902 recorded with a program, which is transferred to a user in a state where it is pre-inserted into the device main body, a hard disk included in a storage unit 908, or the like.

In the description of the invention, the steps describing a program recorded in a recording medium include not only processing performed in a time-series manner according to the order as described above but also processing performed in parallel or separately even if not necessarily performed in the time-series manner.

Also, the present invention can be applied to a playback apparatus that includes a display that does not correspond to the 3D display to identify the display type and to convert the image into an output image signal suitable to the display type to output the image signal.

The present invention is not limited to the above-described embodiments, and diverse modifications can be made without departing from the scope of the invention.

It should be understood by those skilled in the art that various modifications, combinations, sub-combinations and alterations may occur depending on design requirements and other factors insofar as they are within the scope of the appended.

## Claims

1. A data structure comprising:
image data of menu buttons, which is used for two-dimensional (2D) display of the menu buttons;
offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and
a command for changing the 3D display mode of the menu buttons to the 2D display mode.

2. A recording medium recorded with data having the data structure as recited in claim 1.

3. A playback apparatus that plays data having a data structure comprising:
image data of menu buttons, which is used for two-dimensional (2D) display of the menu buttons;
offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and
a command for changing the 3D display mode of the menu buttons to the 2D display mode;
the playback apparatus performing:
reading of the image data included in the data;
generating of image data in the unit of the picture of the L image and the R image from the image data in the unit of the picture based on the offset information;
outputting of the image data in the unit of the picture of the L image and the R image; and
outputting of the image data included in the data in accordance with the command as image data of the L image and the R image.

4. A playback method performed by a playback apparatus that plays data having a data structure that includes
image data of menu buttons, which is used for two-dimensional (2D) display of the menu button;
offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and
a command for changing the 3D display mode of the menu buttons to the 2D display mode;
the playback method comprising the steps of:
reading the image data included in the data;
generating image data in the unit of the picture of the L image and the R image from the image data in the unit of the picture based on the offset information;
outputting the image data in the unit of the picture of the L image and the R image; and
outputting the image data included in the data in accordance with the command as image data of the L image and the R image.

5. A program in a computer that controls playback of data having a data structure that includes
image data of menu buttons, which is used for two-dimensional (2D) display of the image data;
offset information composed of an offset direction that indicates a disparity between the image for the left-eye and the image for the right-eye used for three-dimensional (3D) display of the menu buttons in the unit of a picture with respect to the menu buttons in the unit of a picture that corresponds to the image data, and an offset value that indicates the amount of the disparity; and
a command for changing the 3D display mode of the menu buttons to the 2D display mode;
the program executing a control process comprising the steps of:
reading the image data included in the data;
generating image data in the unit of the picture of the L image and the R image from the image data in the unit of the picture based on the offset information;
outputting the image data in the unit of the picture of the L image and the R image; and
outputting the image data included in the data in accordance with the command as image data of the L image and the R image.

6. A data structure comprising:
image data of the image for the left-eye and the image for the right-eye of menu buttons, which is used for three-dimensional (3D) display of the menu buttons; and
a command for changing the 3D display mode of the menu buttons to a 2D display mode.

7. A recording medium recorded with data having the data structure as recited in claim 6.

8. A playback apparatus that plays data having a data structure comprising:
image data of the image for the left-eye and the image for the right-eye of menu buttons, which is used for three-dimensional (3D) display of the menu buttons; and
a command for changing the 3D display mode of the menu buttons to a 2D display mode;
the playback apparatus performing:
reading and outputting of the image data of the L image and the R image included in the data; and
generating and outputting of the same image data of the L image and image data of the R image using at least either of the image data of the L image and the image data of the R image included in the data in accordance with the command.

9. The playback apparatus according to claim 8, wherein the playback apparatus generates either of the image data of the L image and the image data of the R image as the other image data in accordance with the command.

10. The playback apparatus according to claim 8, wherein the playback apparatus generates predetermined image data by using the image data of the L image and the image data of the R image in accordance with the command, and takes the image data as the image data of both the image data of the L image and the image data of the R image.

11. A playback method performed by a playback apparatus that plays data having a data structure that includes
image data of the image for the left-eye and the image for the right-eye of menu buttons, which is used for three-dimensional (3D) display of the menu buttons; and
a command for changing the 3D display mode of the menu buttons to a 2D display mode;
the playback method comprising the steps of:
reading and outputting the image data of the L image and the R image included in the data; and
generating and outputting the same image data of the L image and image data of the R image using at least either of the image data of the L image and the image data of the R image included in the data in accordance with the command.

12. A program in a computer that controls playback of data having a data structure that includes
image data of the image for the left-eye and the image for the right-eye of menu buttons, which is used for three-dimensional (3D) display of the menu buttons composed of caption or menu buttons; and
a command for changing the 3D display mode of the menu buttons to a 2D display mode;
the program executing a control process comprising the steps of:
reading and outputting the image data of the L image and the R image included in the data; and
generating and outputting the same image data of the L image and image data of the R image using at least either of the image data of the L image and the image data of the R image included in the data in accordance with the command.
